# EUROPÄISCHE PATENTSCHRIFT

(11) **EP 0 897 958 B1**
(45) Veröffentlichungstag und Bekanntmachung des Hinweises auf die Patenterteilung: **18.06.2003**
(21) Anmeldenummer: 98810767.8
(22) Anmeldetag: 11.08.1998
(51) Int. Cl.: C09D 5/03, C08K 5/134, C09D 7/12

(54) **Stabilisatoren für Pulverlacke**
Stabilisers for powder coatings
Stabilisateurs pour revêtements pulvérulents

(30) Priorität: 19.08.1997 CH 194497
(43) Veröffentlichungstag der Anmeldung: 24.02.1999
(73) Patentinhaber: Ciba Specialty Chemicals Holding Inc., 4057 Basel (CH)
(72) Erfinder: Laver, Hugh Stephen, 4153 Reinach (CH); Pitteloud, Rita, 1724 Praroman (CH)

(56) Entgegenhaltungen:
- EP-A- 0 440 580
- EP-A- 0 500 323
- EP-A- 0 727 410
- US-A- 4 562 281

## Beschreibung

Die vorliegende Erfindung betrifft Pulverlackzusammensetzungen enthaltend ein organisches filmbildendes Bindemittel und als Stabilisator mindestens ein Bisphenolderivat, sowie die Verwendung derselben zur Verminderung der Verfärbung von thermisch härtbaren Pulverlacken.

Die Pulverlackierung ist eine bekannte Technologie und beispielsweise in "Ullmann's Encyclopedia of Industrial Chemistry, Fifth, Completely Revised Edition, Volume A 18", Seiten 438 bis 444 (1991) beschrieben. In der Pulverlackierung wird generell ein Pulver unter Luftzufuhr fluidisiert, elektrostatisch aufgeladen und auf ein geerdetes, bevorzugt metallisches Substrat aufgebracht. Anschliessend wird das Substrat erhitzt, wobei das haftende Pulver schmilzt, zusammenfliesst und an der Metalloberfläche einen geschlossenen Film bildet. Weil bei der Pulverlackierung bevorzugt auf Lösungsmittel verzichtet wird, ist diese Technologie speziell umweltfreundlich.

Die Härtung der Pulverlackzusammensetzungen bei erhöhter Temperatur, insbesondere in einem Gasofen, verläuft nicht ohne Schwierigkeiten. Die im Gasofen enthaltenen Stickoxid-Gase verursachen oft eine unerwünschte Verfärbung des Lackes.

Im Stand der Technik werden Pulverlackzusammensetzungen mit einer Mischung von einem sterisch gehinderten Phenol, wie beispielsweise dem Octadecylester der 3-(3,5-Di-tert-butyl-4-hydroxyphenyl)propionsäure, und einem organischen Phosphit, wie beispielsweise Tris-(2,4-di-tert-butyl-phenyl)phosphit, stabilisiert. Mit dieser Stabilisierung wird jedoch bei der Härtung der Pulverlackzusammensetzung bei erhöhter Temperatur, insbesondere in einem Gasofen eine starke unerwünschte Verfärbung des Lackes beobachtet Diese Verfärbung kann etwas unterdrückt werden, wenn auf das sterisch gehinderte Phenol verzichtet wird und nur mit einem organischen Phosphit stabilisiert wird. Die Stabilisierung des Pulverlackes mit nur einem organischen Phosphit hat aber den Nachteil, dass die Stabilität des Lackes gegenüber oxidativen Angriffen stark vermindert wird.

Es ist auch wünschenswert, Pulverlacke gegen Ueberbrennung zu stabilisieren. Eine solche Ueberbrennung kann beispielsweise stattfinden, wenn das Förderband beim geheizten Ofen stehen bleibt, oder wenn Teile wegen Lackdefekten nochmals lackiert werden müssen.

Die bekannten Stabilisatoren genügen nicht in jeder Hinsicht den hohen Anforderungen, die ein Stabilisator oder ein Gemisch von Stabilisatoren erfüllen soll, insbesondere hinsichtlich der Verfärbung von thermisch härtbaren, insbesondere in Gasöfen härtbaren, Pulverlackzusammensetzungen.

Die Verwendung von Bisphenolesterderivaten als Stabilisatoren für organische Polymere ist beispielsweise aus U.S. 4,365,032; EP-A-0 079 806; U.S. 4,562,281; U.S. 4,774,274; EP-A-0 500 323; U.S. 5,602,196; EP-A-0 716 076; U.S. 5,616,780 oder EP-A-0 727 410 bekannt.

Die Verwendung von bestimmten Bisphenolesterderivaten als Stabilisatoren für lösungsmittelhaltige Lacke ist beispielsweise aus JP-A-07 118 568 (Derwent 95-204070/27) oder JP-A-07 258 462 (Derwent 95-380188/49) bekannt.

Es wurde nun gefunden, dass bestimmte Bisphenolderivate sich besonders gut als Stabilisatoren zur Verminderung der Verfärbung von thermisch, insbesondere in Gasöfen, härtbaren Pulverlackzusammensetzungen eignen.

Die vorliegende Erfindung betrifft daher Pulverlackzusammensetzungen enthaltend
a) ein organisches filmbildendes Bindemittel, und
b) als Stabilisator mindestens eine Verbindung der Formel I 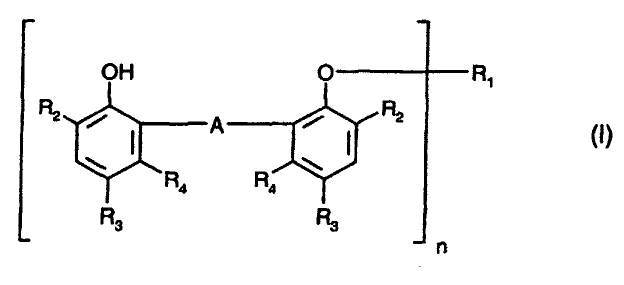
worin, wenn n 1 ist,
R₁ Wasserstoff, 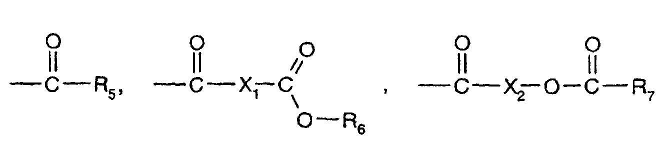 oder 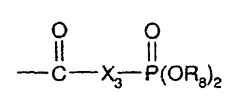 darstellt, und wenn n 2 ist, 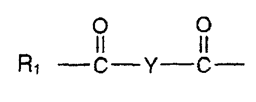 bedeutet,
A eine direkte Bindung, Schwefel, 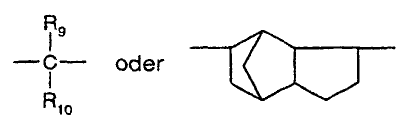 darstellt,
X₁ eine direkte Bindung, C₁-C₂₄-Alkylen, durch Sauerstoff, Schwefel oder 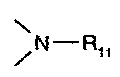 unterbrochenes C₂-C₂₄-Alkylen; C₂-C₂₄-Alkenylen, C₂-C₂₀-Alkyliden, C₇-C₂₀-Phenylalkyliden, C₅-C₁₂-Cycloalkylen, C₅-C₁₂-Cycloalkenylen, C₇-C₈-Bicycloalkylen, unsubstituiertes oder durch C₁-C₄-Alkyl substituiertes Phenylen, 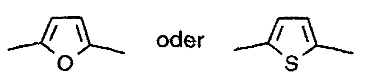 bedeutet,
X₂ C₁-C₂₄-Alkylen, durch Sauerstoff, Schwefel oder 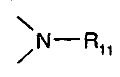 unterbrochenes C₂-C₂₄-Alkylen; C₂-C₂₄-Alkenylen, C₂-C₂₀-Alkyliden, C₇-C₂₀-Phenylalkyliden, C₅-C₁₂-Cycloalkylen, C₅-C₁₂-Cycloalkenylen, C₇-C₈-Bicycloalkylen, unsubstituiertes oder durch C₁-C₄-Alkyl substituiertes Phenylen, 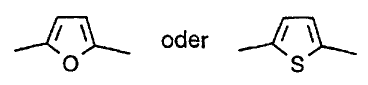 darstellt,
X₃ C₁-C₂₄-Alkylen, C₂-C₂₀-Alkyliden, C₇-C₂₀-Phenylalkyliden oder C₅-C₁₂-Cycloalkylen bedeutet,
Y eine direkte Bindung, C₁-C₂₄-Alkylen, durch Sauerstoff, Schwefel oder 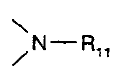 unterbrochenes C₂-C₂₄-Alkylen; C₂-C₂₄-Alkenylen, C₂-C₂₀-Alkyliden, C₇-C₂₀-Phenylalkyliden, C₅-C₁₂-Cycloalkylen, C₅-C₁₂-Cycloalkenylen, C₇-C₈-Bicycloalkylen, unsubstituiertes oder durch C₁-C₄-Alkyl substituiertes Phenylen, 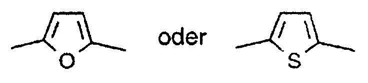 darstellt,
R₂ und R₃ unabhängig voneinander C₁-C₂₅-Alkyl, unsubstituiertes oder durch C₁-C₄-Alkyl substituiertes C₅-C₁₂-Cycloalkyl; C₇-C₉-Phenylalkyl, unsubstituiertes oder durch C₁-C₄-Alkyl substituiertes Phenyl darstellen;
R₄ Wasserstoff oder Methyl bedeutet,
R₅ C₁-C₂₅-Alkyl, durch Sauerstoff, Schwefel oder 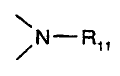 unterbrochenes C₂-C₂₅-Alkyl;
C₂-C₂₄-Alkenyl, unsubstituiertes oder am Phenylring mit Halogen, C₁-C₄-Alkyl, C₁-C₄-Alkoxy oder C₁-C₄-Alkylthio substituiertes C₈-C₃₀-Phenylalkenyl; unsubstituiertes oder durch C₁-C₄-Alkyl substituiertes C₅-C₁₂-Cycloalkyl; unsubstituiertes oder am Phenylring mit Halogen, C₁-C₄-Alkyl, C₁-C₄-Alkoxy oder C₁-C₄-Alkylthio substituiertes C₈-C₃₀-Phenylalkyl; unsubstituiertes oder durch Halogen, C₁-C₄-Alkyl, C₁-C₄-Alkoxy oder C₁-C₄-Alkylthio substituiertes Phenyl; 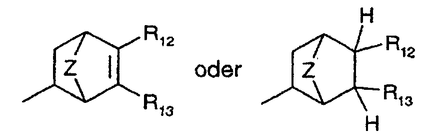 darstellt,
R₆ C₁-C₂₅-Alkyl, durch Sauerstoff, Schwefel oder 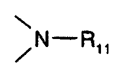 unterbrochenes C₂-C₂₅-Alkyl;
C₂-C₂₄-Alkenyl, unsubstituiertes oder durch C₁-C₄-Alkyl substituiertes C₅-C₁₂-Cycloalkyl; C₇-C₉-Phenylalkyl, unsubstituiertes oder durch C₁-C₄-Alkyl, C₁-C₄-Alkoxy oder C₁-C₄-Alkylthio substituiertes Phenyl bedeutet;
R₇ C₁-C₂₅-Alkyl, durch Sauerstoff, Schwefel oder 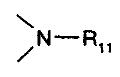 unterbrochenes C₂-C₂₅-Alkyl;
C₂-C₂₄-Alkenyl, unsubstituiertes oder am Phenylring mit Halogen, C₁-C₄-Alkyl, C₁-C₄-Alkoxy oder C₁-C₄-Alkylthio substituiertes C₈-C₃₀-Phenylalkenyl; unsubstituiertes oder durch C₁-C₄-Alkyl substituiertes C₅-C₁₂-Cycloalkyl; unsubstituiertes oder am Phenylring mit Halogen,
C₁-C₄-Alkyl, C₁-C₄-Alkoxy oder C₁-C₄-Alkylthio substituiertes C₉-C₃₀-Phenylalkyl; unsubstituiertes oder durch C₁-C₄-Alkyl, C₁-C₄-Alkoxy oder C₁-C₄-Alkylthio substituiertes Phenyl darstellt;
R₈ C₁-C₂₅-Alkyl bedeutet,
R₉ und R₁₀ unabhängig voneinander Wasserstoff, CF₃, C₁-C₂₅-Alkyl oder Phenyl darstellen, oder R₉ und R₁₀ zusammen mit dem Kohlenstoffatom, an das sie gebunden sind, einen unsubstituierten oder durch 1 bis 3 C₁-C₄-Alkyl substituierten C₅-C₁₂-Cycloalkylidenring bilden;
R₁₁ Wasserstoff oder C₁-C₁₈-Alkyl bedeutet,
R₁₂ Wasserstoff oder C₁-C₄-Alkyl darstellt,
R₁₃ Wasserstoff oder C₁-C₄-Alkyl bedeutet,
Z Sauerstoff, Methylen, Ethyliden oder 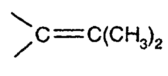 darstellt, und
n 1 oder 2 bedeutet.

C₁-C₁₄-Alkylen bedeutet einen verzweigten oder unverzweigten Rest wie beispielsweise Methylen, Ethylen, Propylen, Trimethylen, Tetramethylen, Pentamethylen, Hexamethylen, Heptamethylen, Octamethylen, Decamethylen, Dodecamethylen oder Octadecamethylen. Bevorzugt ist C₁-C₁₈-Alkylen, insbesondere C₁-C₁₂-Alkylen, z.B. C₁-C₈-Alkylen. Eine besonders bevorzugte Bedeutung von X₁, X₂ und X₃ ist beispielsweise C₁-C₆-Alkylen, insbesondere C₁-C₄-Alkylen, z.B. Ethylen oder Methylen. Eine besonders bevorzugte Bedeutung von Y ist beispielsweise C₁-C₁₈-Alkylen, insbesondere C₂-C₁₂-Alkylen.

Durch Sauerstoff, Schwefel oder 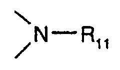 unterbrochenes C₂-C₂₄-Alkylen bedeutet beispielsweise -CH₂-O-CH₂-, -CH₂-S-CH₂-, -CH₂-NH-CH₂-, -CH₂-N(CH₃)-CH₂-, -CH₂-O-CH₂CH₂-O-CH₂-, -CH₂-(O-CH₂CH₂-)₂O-CH₂-, -CH₂-(O-CH₂CH₂-)₃O-CH₂-, -CH₂-(O-CH₂CH₂-)₄O-CH₂-, -CH₂CH₂-O-CH₂CH₂-O-CH₂CH₂- oder -CH₂CH₂-S-CH₂CH₂-.

C₂-C₂₄-Alkenylen bedeutet beispielsweise Vinylen, Methylvinylen, Octenylethylen oder Dodecenylethylen. Eine bevorzugte Bedeutung von X₁, X₂ und Y ist beispielsweise C₂-C₁₈-Alkenylen, insbesondere C₂-C₁₂-Alkenylen, z.B. C₂-C₈-Alkenylen. Eine besonders bevorzugte Bedeutung von X₁ und Y ist beispielsweise C₂-C₆-Alkenylen, insbesondere C₂-C₄-Alkenylen. Alkyliden mit 2 bis 20 Kohlenstoffatomen bedeutet beispielsweise Ethyliden, Propyliden, Butyliden, Pentyliden, 4-Methylpentyliden, Heptyliden, Nonyliden, Tridecyliden, Nonadecyliden, 1-Methylethyliden, 1-Ethylpropyliden oder 1-Ethylpentyliden. Eine bevorzugte Bedeutung von X₁, X₂, X₃ und Y ist beispielsweise C₂-C₁₂-Alkyliden, insbesondere C₂-C₁₀-Alkyliden, z.B. C₂-C₈-Alkyliden. Eine besonders bevorzugte Bedeutung von X₂ ist C₂-C₆-Alkyliden, insbesondere C₂-C₄-Alkyliden, z.B. Ethyliden.

Phenylalkyliden mit 7 bis 20 Kohlenstoffatomen bedeutet beispielsweise Benzyliden, 2-Phenylethyliden, 3-Phenylpropyliden, 4-Phenylbutyliden, 5-Phenylpentyliden oder 1-Phenyl-2-hexyliden. Eine bevorzugte Bedeutung von X₁, X₂, X₃ und Y ist beispielsweise C₇-C₁₈-Phenylalkyliden, insbesondere C₇-C₁₂-Phenylalkyliden, z.B. C₇-C₁₀-Phenylalkyliden.

C₅-C₁₂-Cycloalkylen bedeutet beispielsweise Cyclopentylen, Cyclohexylen, Cycloheptylen, Cyclooctylen, Cyclononylen, Cyclodecylen, Cycloundecylen oder Cyclododecylen. Bevorzugt ist Cyclohexylen.

C₅-C₁₂-Cycloalkenylen bedeutet beispielsweise Cyclopentenylen, Cyclohexenylen, Cycloheptenylen, Cyclooctenylen, Cyclononenylen, Cyclodecenylen, Cycloundecenylen oder Cyclododecenylen. Bevorzugt ist Cyclohexenylen.

C₇-C₈-Bicycloalkylen bedeutet beispielsweise Bicycloheptylen oder Bicyclooctylen.

Unsubstituiertes oder durch C₁-C₄-Alkyl substituiertes Phenylen bedeutet beispielsweise 1,2-, 1,3-, 1,4-Phenylen, 2-Methyl-1,4-phenylen, 2-Ethyl-1,4-phenylen, 2-Propyl-1,4-phenylen oder 2-Butyl-1,4-phenylen. 1,4-Phenylen ist bevorzugt.

Alkyl mit bis zu 25 Kohlenstoffatomen bedeutet einen verzweigten oder unverzweigten Rest wie beispielsweise Methyl, Ethyl, Propyl, Isopropyl, n-Butyl, sec-Butyl, Isobutyl, tert-Butyl, 1,1-Dimethyl-1-propyl, 2-Ethylbutyl, n-Pentyl, Isopentyl, 1-Methylpentyl, 1,3-Dimethylbutyl, n-Hexyl, 1-Methylhexyl, n-Heptyl, Isoheptyl, 1,1,3,3-Tetramethylbutyl, 1-Methylheptyl, 3-Methylheptyl, n-Octyl, 2-Ethylhexyl, 1,1,3-Trimethylhexyl, 1,1,3,3-Tetramethylpentyl, Nonyl, Decyl, Undecyl, 1-Methylundecyl, Dodecyl, 1,1,3,3,5,5-Hexamethylhexyl, Tridecyl, Tetradecyl, Pentadecyl, Hexadecyl, Heptadecyl, Octadecyl, Eicosyl oder Docosyl. Eine der bevorzugten Bedeutungen von R₂ und R₃ ist beispielsweise C₁-C₁₈-Alkyl, insbesondere C₁-C₁₂-Alkyl, z.B. C₁-C₈-Alkyl. Eine besonders bevorzugte Bedeutung von R₂ und R₃ ist beispielsweise C₁-C₆-Alkyl, insbesondere C₁-C₅-Alkyl, z.B. tert-Butyl oder 1,1-Dimethyl-1-propyl. Eine bevorzugte Bedeutung von R₅ ist beispielsweise C₁-C₁₈-Alkyl, insbesondere C₁-C₁₂-Alkyl. Eine bevorzugte Bedeutung von R₆ ist beispielsweise C₁-C₁₈-Alkyl, insbesondere C₁-C₁₂-Alkyl, z.B. C₁-C₈-Alkyl. Eine bevorzugte Bedeutung von R₇ R₈, R₉ und R₁₀ ist beispielsweise C₁-C₁₈-Alkyl, insbesondere C₁-C₁₂-Alkyl, z.B. C₁-C₈-Alkyl. Eine besonders bevorzugte Bedeutung von R₈, R₉ und R₁₀ ist beispielsweise C₁-C₆-Alkyl, insbesondere C₁-C₄-Alkyl, z.B. Methyl oder Ethyl. Eine bevorzugte Bedeutung von R₁₁ ist beispielsweise C₁-C₁₂-Alkyl, insbesondere C₁-C₈-Alkyl, z.B. C₁-C₄-Alkyl. Eine bevorzugte Bedeutung von R₁₂ und R₁₃ ist beispielsweise C₁-C₄-Alkyl, insbesondere Methyl oder Ethyl.

Durch Sauerstoff, Schwefel oder 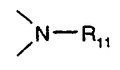 unterbrochenes C₂-C₂₅-Alkyl bedeutet beispielsweise CH₃-O-CH₂-, CH₃-O-CH₂CH₂-, CH₃-S-CH₂-, CH₃-NH-CH₂-, CH₃-N(CH₃)-CH₂-, CH₃-O-CH₂CH₂-O-CH₂-, CH₃CH₂-O-CH₂CH₂-O-CH₂CH₂-, CH₃-(O-CH₂CH₂-)₂O-CH₂CH₂-, CH₃-(O-CH₂CH₂-)₃O-CH₂CH₂- oder CH₃-(O-CH₂CH₂-)₄O-CH₂-.

Unsubstituiertes oder durch C₁-C₄-Alkyl substituiertes C₅-C₁₂-Cycloalkyl bedeutet beispielsweise Cyclopentyl, Methylcyclopentyl, Dimethylcyclopentyl, Cyclohexyl, Methylcyclohexyl, Dimethylcyclohexyl, Trimethylcyclohexyl, tert-Butylcyclohexyl, Cycloheptyl, Cyclooctyl, Cyclononyl, Cyclodecyl, Cycloundecyl oder Cyclododecyl. Eine bevorzugte Bedeutung von R₂ und R₃ ist beispielsweise unsubstituiertes oder durch Methyl substituiertes C₅-C₈-Cycloalkyl, insbesondere unsubstituiertes oder durch Methyl substituiertes Cyclohexyl, z.B. Cyclohexyl oder α-Methylcyclohexyl. Eine bevorzugte Bedeutung von R₅, R₆ und R₇ ist beispielsweise C₅-C₈-Cycloalkyl, insbesondere C₅-C₆-Cycloalkyl, z.B. Cyclohexyl.

C₇-C₉-Phenylalkyl bedeutet beispielsweise Benzyl, α-Methylbenzyl, α,α-Dimethylbenzyl oder 2-Phenylethyl. Benzyl oder α,α-Dimethylbenzyl sind bevorzugt.

Durch Halogen C₁-C₄-Alkyl, C₁-C₄-Alkoxy oder C₁-C₄-Alkylthio substituiertes Phenyl, das vorzugsweise 1 bis 3, insbesondere 1 oder 2 Alkylgruppen enthält, bedeutet beispielsweise o-, m- oder p-Methylphenyl, o-, m- oder p-Methoxyphenyl, o-, m- oder p-Chlorphenyl, o-, m-oder p-Methylthiophenyl, 2,3-Dimethylphenyl, 2,4-Dimethylphenyl, 2,5-Dimethylphenyl, 2,6-Dimethylphenyl, 3,4-Dimethylphenyl, 3,5-Dimethylphenyl, 2-Methyl-6-ethylphenyl, 4-tert-Butylphenyl, 2-Ethylphenyl oder 2,6-Diethylphenyl.

Alkenyl mit 2 bis 24 Kohlenstoffatomen bedeutet einen verzweigten oder unverzweigten Rest wie beispielsweise Vinyl, Propenyl, 2-Butenyl, 3-Butenyl, Isobutenyl, n-2,4-Pentadienyl, 3-Methyl-2-butenyl, n-2-Octenyl, n-2-Dodecenyl, iso-Dodecenyl, Oleyl, n-2-Octadecenyl oder n-4-Octadecenyl. Bevorzugt ist Alkenyl mit 2 bis 18, insbesondere 2 bis 10 Kohlenstoffatomen.

Unsubstituiertes oder am Phenylring mit Halogen, C₁-C₄-Alkyl, C₁-C₄-Alkoxy oder C₁-C₄-Alkylthio substituiertes C₈-C₃₀-Phenylalkenyl bedeutet einen verzweigten oder unverzweigten Rest wie beispielsweise Styryl, 2-(p-Methoxyphenyl)-1-ethenyl, 2-(p-Chlorphenyl)-1-ethenyl, 2-(p-Methylphenyl)-1-ethenyl, 2-(p-Methylthiophenyl)-1-ethenyl, 2-Phenyl-2-methyl-1-ethenyl, 3-Phenyl-1-propenyl, 4-Phenyl-1-butenyl, 5-Phenyl-1-pentenyl, 6-Phenyl-1-hexenyl, 7-Phenyl-1-heptenyl oder 8-Phenyl-1-octenyl.

Unsubstituiertes oder am Phenylring mit Halogen, C₁-C₄-Alkyl, C₁-C₄-Alkoxy oder C₁-C₄-Alkylthio substituiertes C₈-C₃₀-Phenylalkyl bedeutet einen verzweigten oder unverzweigten Rest wie beispielsweise Phenylethyl, 2-(p-Methoxyphenyl)-ethyl, 2-(p-Chlorphenyl)-ethyl, 2-(p-Methylphenyl)-ethyl, 2-(p-Methylthiophenyl)-ethyl, 2-Phenyl-2-methyl-ethyl, 3-Phenylpropyl, 4-Phenylbutyl, 5-Phenylpentyl, 6-Phenylhexyl, 7-Phenylheptyl oder 8-Phenyloctyl.

Durch C₁-C₄-Alkyl substituierter C₅-C₁₂-Cycloalkylidenring, der vorzugsweise 1 bis 3, insbesondere 1 oder 2 verzweigte oder unverzweigte Alkylgruppen-Reste enthält, bedeutet beispielsweise Cyclopentyliden, Methylcyclopentyliden, Dimethylcyclopentyliden, Cyclohexyliden, Methylcyclohexyliden, Dimethylcyclohexyliden, Trimethylcyclohexyliden, tert-Butylcyclohexyliden, Cycloheptyliden, Cyclooctyliden, Cyclononyliden, Cyclodecyliden, Cycloundecyliden oder Cyclododecyliden. Bevorzugt ist Cyclohexyliden und tert-Butylcyclohexyliden.

Halogen bedeutet beispielsweise Chlor, Brom oder lod. Bevorzugt ist Chlor.

Von Interesse sind Pulverlackzusammensetzungen enthaltend als Komponente (b) mindestens eine Verbindung der Formel I, worin, wenn n 1 ist, R₁ unsubstituiertes oder in paraStellung mit C₁-C₁₈-Alkylthio oder Di(C₁-C₄-alkyl)amino substituiertes Phenyl; mono- bis penta-substituiertes Alkylphenyl mit total zusammen maximal 18 Kohlenstoffatomen in den 1 bis 5 Alkylsubstituenten; unsubstituiertes oder mit C₁-C₄-Alkyl, C₁-C₄-Alkoxy, C₁-C₄-Alkylthio, Hydroxy oder Amino substituiertes Naphthyl, Biphenyl, Terphenyl, Phenanthryl, Anthryl, Fluorenyl, Carbazolyl, Thienyl, Pyrrolyl, Phenothiazinyl oder 5,6,7,8-Tetrahydronaphthyl darstellt.

Bevorzugt sind Pulverlackzusammensetzungen enthaltend als Komponente (b) mindestens eine Verbindung der Formel I, worin
X₁ eine direkte Bindung, C₁-C₁₈-Alkylen, durch Sauerstoff, Schwefel oder 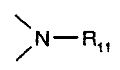 unterbrochenes C₂-C₁₈-Alkylen; C₂-C₁₈-Alkenylen, C₂-C₁₂-Alkyliden, C₇-C₁₂-Phenylalkyliden, C₅-C₈-Cycloalkylen, C₅-C₈-Cycloalkenylen, Phenylen, 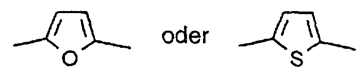 bedeutet,
X₂ C₁-C₁₈-Alkylen, durch Sauerstoff, Schwefel oder 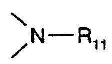 unterbrochenes C₂-C₁₈-Alkylen; C₂-C₁₈-Alkenylen, C₂-C₁₂-Alkyliden, C₇-C₁₂-Phenylalkyliden, C₅-C₈-Cycloalkylen, C₅-C₈-Cycloalkenylen, Phenylen, 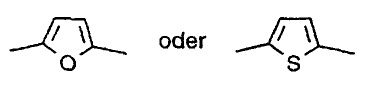 darstellt,
X₃ C₁-C₁₈-Alkylen, C₂-C₁₂-Alkyliden, C₇-C₁₂-Phenylalkyliden oder C₅-C₈-Cycloalkylen bedeutet,
Y eine direkte Bindung, C₁-C₁₈-Alkylen, durch Sauerstoff, Schwefel oder 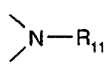 unterbrochenes C₂-C₁₈-Alkylen; C₂-C₁₈-Alkenylen, C₂-C₁₂-Alkyliden, C₇-C₁₂-Phenylalkyliden, C₅-C₈-Cycloalkylen, C₅-C₈-Cycloalkenylen, Phenylen, 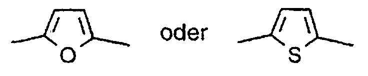 darstellt,
R₂ und R₃ unabhängig voneinander C₁-C₁₈-Alkyl, unsubstituiertes oder durch C₁-C₄-Alkyl substituiertes C₅-C₈-Cycloalkyl; C₇-C₉-Phenylalkyl oder Phenyl darstellen,
R₄ Wasserstoff oder Methyl bedeutet,
R₅ C₁-C₁₈-Alkyl, durch Sauerstoff, Schwefel oder 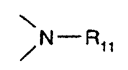 unterbrochenes C₂-C₁₈-Alkyl;
C₂-C₁₈-Alkenyl, unsubstituiertes oder am Phenylring mit Halogen, C₁-C₄-Alkyl, C₁-C₄-Alkoxy oder C₁-C₄-Alkylthio substituiertes C₈-C₁₈-Phenylalkenyl; C₅-C₈-Cycloalkyl, unsubstituiertes oder am Phenylring mit Halogen, C₁-C₄-Alkyl, C₁-C₄-Alkoxy oder C₁-C₄-Alkylthio substituiertes C₈-C₁₈-Phenylalkyl; unsubstituiertes oder durch Halogen, C₁-C₄-Alkyl, C₁-C₄-Alkoxy oder
C₁-C₄-Alkylthio substituiertes Phenyl; 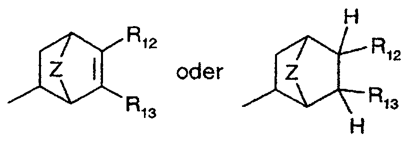 darstellt,
R₆ C₁-C₁₈-Alkyl, durch Sauerstoff, Schwefel oder 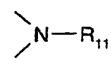 unterbrochenes C₂-C₁₈-Alkyl;
C₂-C₁₈-Alkenyl, C₅-C₈-Cycloalkyl, C₇-C₉-Phenylalkyl oder Phenyl bedeutet,
R₇ C₁-C₁₈-Alkyl, durch Sauerstoff, Schwefel oder 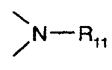 unterbrochenes C₂-C₁₈-Alkyl;
C₂-C₁₈-Alkenyl, C₈-C₁₈-Phenylalkenyl, C₅-C₈-Cycloalkyl, C₉-C₁₈-Phenylalkyl oder Phenyl darstellt,
R₈ C₁-C₁₈-Alkyl bedeutet,
R₉ und R₁₀ unabhängig voneinander Wasserstoff, C₁-C₁₈-Alkyl oder Phenyl darstellen, oder
R₉ und R₁₀ zusammen mit dem Kohlenstoffatom, an das sie gebunden sind, einen C₅-C₈-Cycloalkylidenring bilden;
R₁₁ Wasserstoff oder C₁-C₁₂-Alkyl bedeutet,
R₁₂ Wasserstoff oder C₁-C₄-Alkyl darstellt,
R₁₃ Wasserstoff oder C₁-C₄-Alkyl bedeutet,
Z Sauerstoff, Methylen oder Ethyliden darstellt, und
n 1 oder 2 bedeutet.

Bevorzugt sind auch Pulverlackzusammensetzungen enthaltend als Komponente (b) mindestens eine Verbindung der Formel I, worin
X₁ C₂-C₁₂-Alkylen, durch Sauerstoff unterbrochenes C₂-C₁₂-Alkylen; C₂-C₁₂-Alkenylen oder Phenylen bedeutet,
X₂ C₁-C₁₂-Alkylen, durch Sauerstoff unterbrochenes C₂-C₁₂-Alkylen; C₂-C₁₂-Alkenylen, C₂-C₈-Alkyliden oder Phenylen darstellt,
X₃ C₁-C₁₂-Alkylen bedeutet,
Y eine direkte Bindung, C₁-C₁₈-Alkylen, durch Sauerstoff unterbrochenes C₂-C₁₈-Alkylen; C₂-C₁₂-Alkenylen, Cyclohexylen oder Phenylen darstellt,
R₂ und R₃ unabhängig voneinander C₁-C₁₂-Alkyl, unsubstituiertes oder durch Methyl substituiertes Cyclohexyl; C₇-C₉-Phenylalkyl oder Phenyl darstellen,
R₄ Wasserstoff oder Methyl bedeutet,
R₅ C₁-C₁₈-Alkyl, durch Sauerstoff unterbrochenes C₂-C₁₂-Alkyl; C₂-C₁₄-Alkenyl, unsubstituiertes oder am Phenylring mit Chlor, Methyl oder Methoxy substituiertes C₈-C₁₄-Phenylalkenyl; Cyclohexyl, unsubstituiertes oder am Phenylring mit Chlor, Methyl oder Methoxy substituiertes C₈-C₁₄-Phenylalkyl; unsubstituiertes oder durch Chlor, Methyl oder Methoxy substituiertes Phenyl; 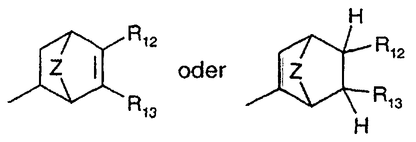 darstellt,
R₆ C₁-C₁₂-Alkyl, durch Sauerstoff unterbrochenes C₂-C₁₂-Alkyl; oder C₅-C₈-Cycloalkyl bedeutet,
R₇ C₁-C₁₂-Alkyl, durch Sauerstoff unterbrochenes C₂-C₁₂-Alkyl; oder Phenyl darstellt,
R₈ C₁-C₁₂-Alkyl bedeutet,
R₉ und R₁₀ unabhängig voneinander Wasserstoff, C₁-C₁₂-Alkyl oder Phenyl darstellen, oder
R₉ und R₁₀ zusammen mit dem Kohlenstoffatom, an das sie gebunden sind, einen Cyclohexylidenring bilden;
R₁₂ Wasserstoff oder Methyl darstellt,
R₁₃ Wasserstoff oder Methyl bedeutet,
Z Sauerstoff oder Methylen darstellt, und
n 1 oder 2 bedeutet.

Besonders bevorzugt sind Pulverlackzusammensetzungen enthaltend als Komponente (b) mindestens eine Verbindung der Formel I, worin
X₁ Ethylen oder C₂-C₃-Alkenylen bedeutet,
X₂ Methylen oder Ethyliden darstellt,
X₃ Ethylen bedeutet,
Y eine direkte Bindung, C₁-C₁₂-Alkylen, C₂-C₄-Alkenylen, Cyclohexylen oder Phenylen darstellt,
R₂ C₁-C₅-Alkyl bedeutet,
R₃ C₁-C₅-Alkyl darstellt,
R₄ Wasserstoff oder Methyl bedeutet,
R₅ C₁-C₁₂-Alkyl, durch Sauerstoff unterbrochenes C₄-C₈-Alkyl; C₂-C₁₀-Alkenyl, unsubstituiertes oder am Phenylring mit Methoxy substituiertes C₈-C₁₀-Phenylalkenyl; Cyclohexyl, unsubstituiertes oder durch Chlor oder Methoxy substituiertes Phenyl; 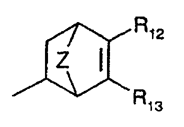 oder 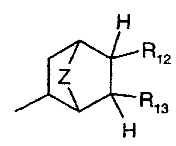 darstellt,
R₆ C₁-C₈-Alkyl oder Cyclohexyl bedeutet,
R₇ C₁-C₄-Alkyl darstellt,
R₈ C₁-C₄-Alkyl bedeutet,
R₉ Wasserstoff darstellt,
R₁₀ Wasserstoff oder Methyl bedeutet,
R₁₂ Wasserstoff oder Methyl darstellt,
R₁₃ Wasserstoff oder Methyl bedeutet,
Z Sauerstoff oder Methylen darstellt, und
n 1 oder 2 bedeutet.

Ganz besonders bevorzugt sind Pulverlackzusammensetzungen enthaltend als Komponente (b) mindestens eine der Verbindungen der Formeln la, Ib, Ic, Id, le, If, Ig, Ih, Ii, Ij, Ik, Im, In, lo, Ip, Iq oder Ir

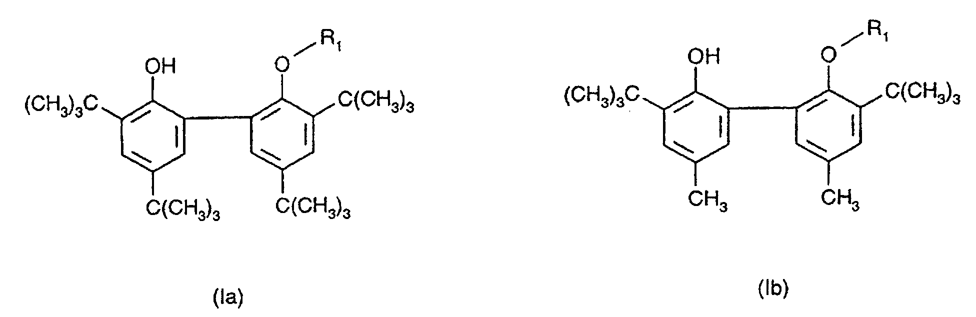

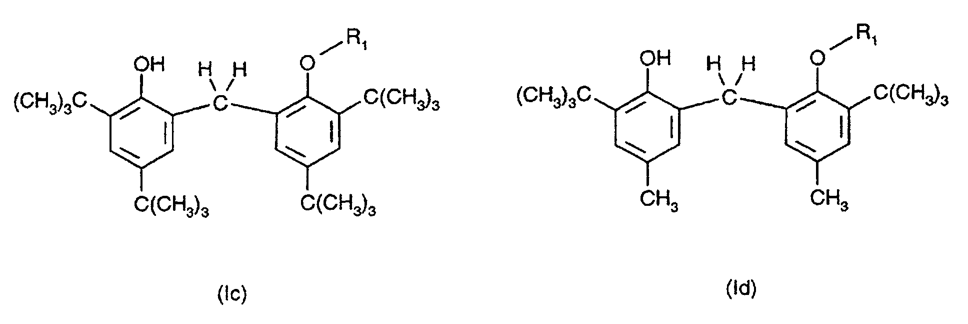

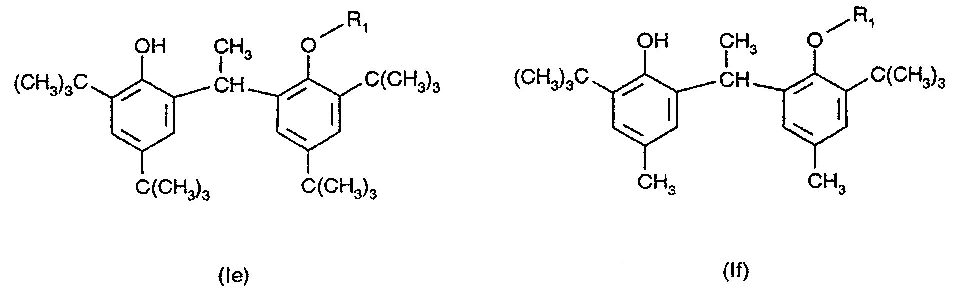

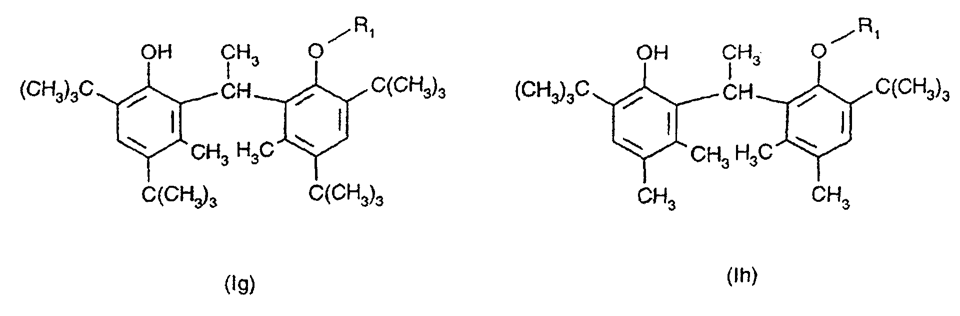

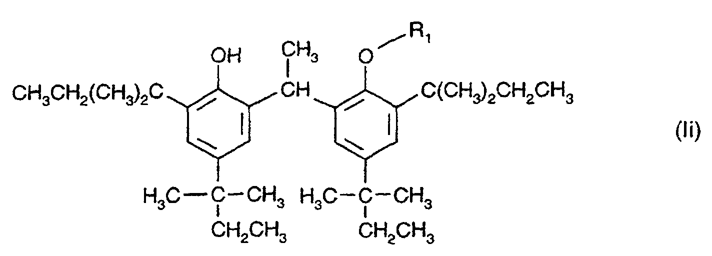

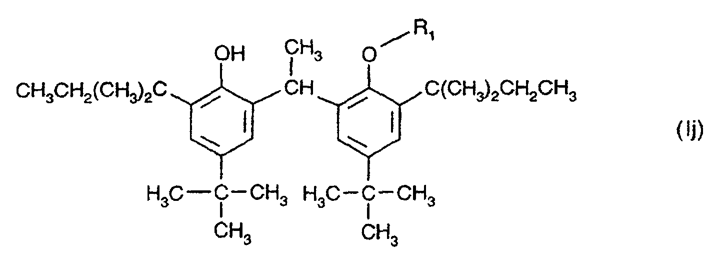

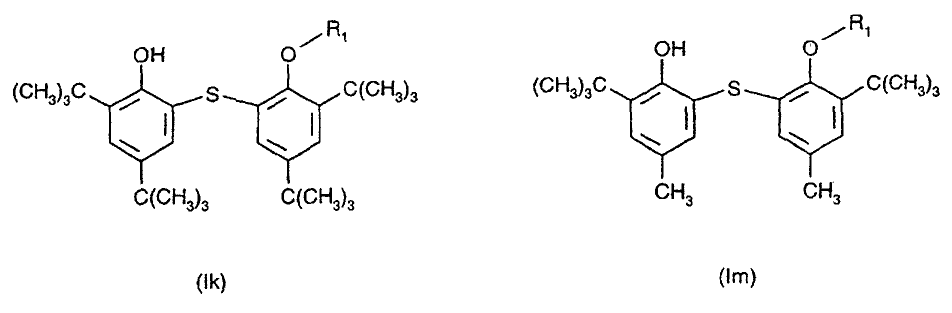

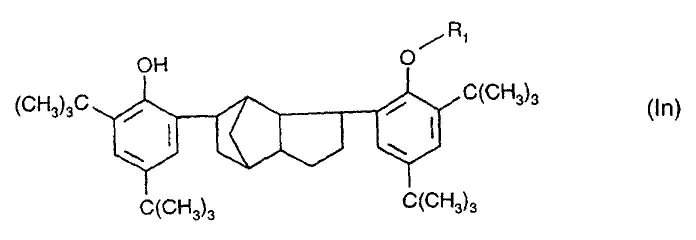

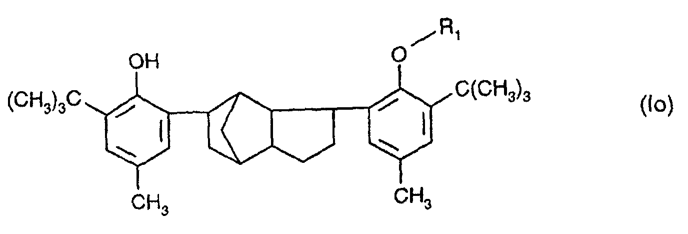

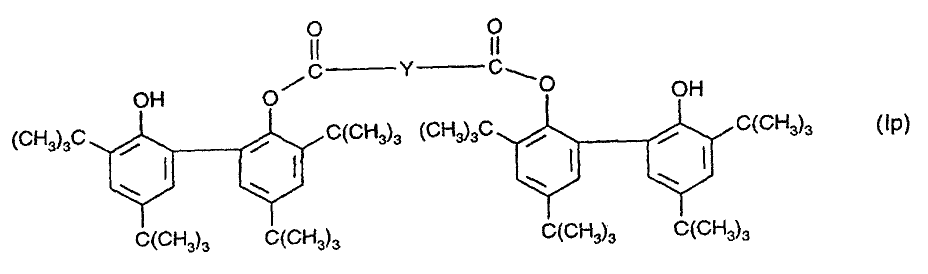

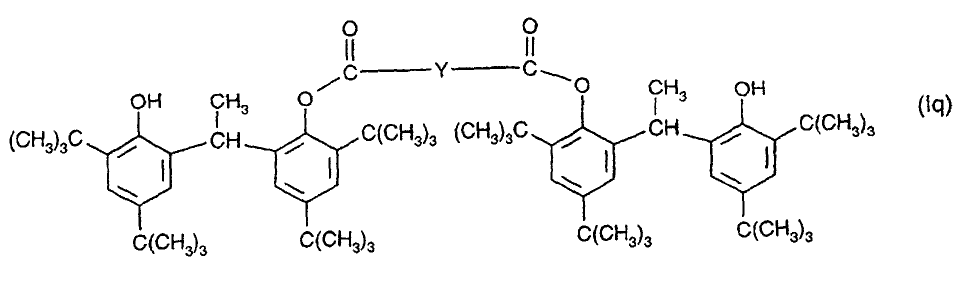

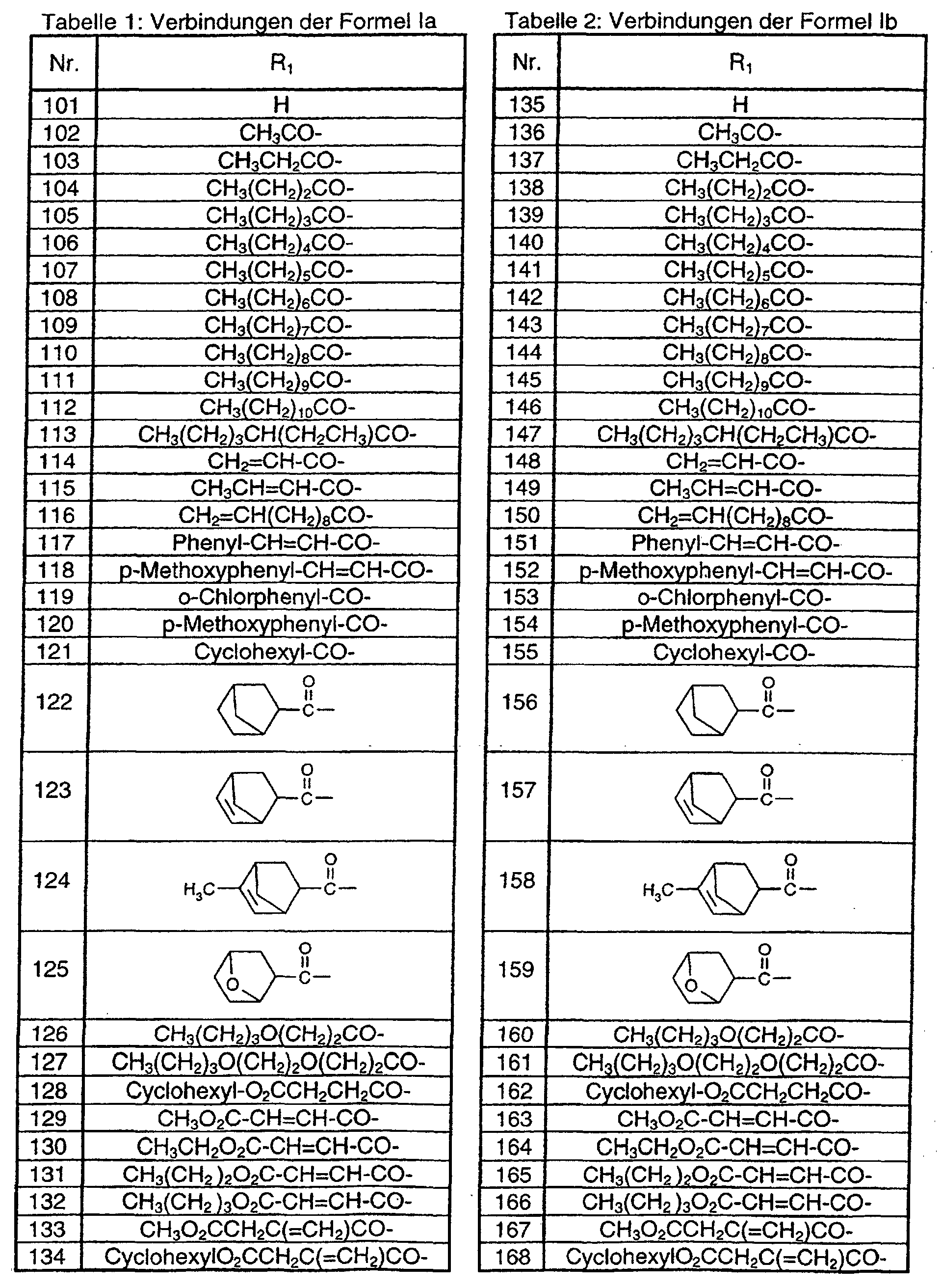

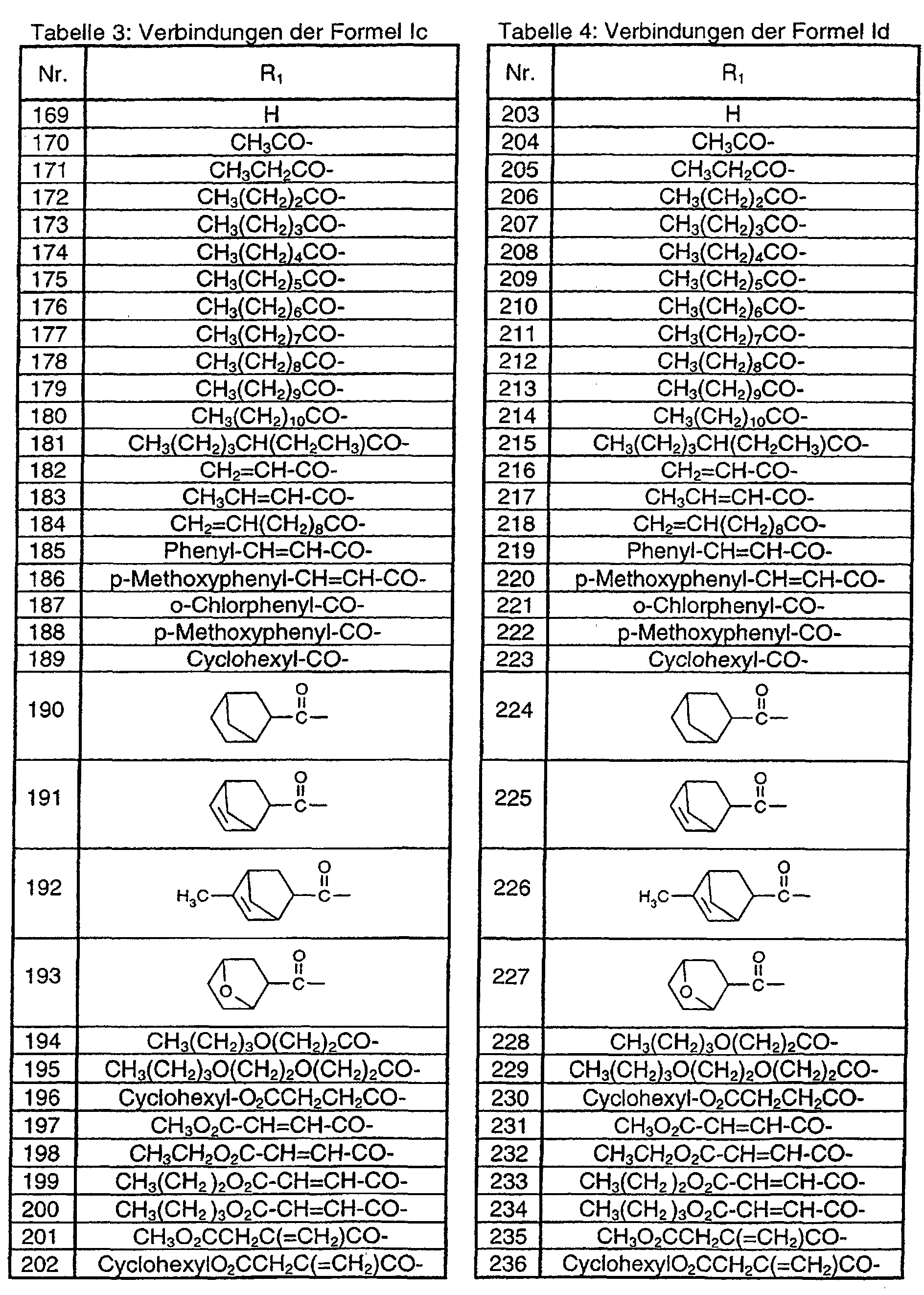

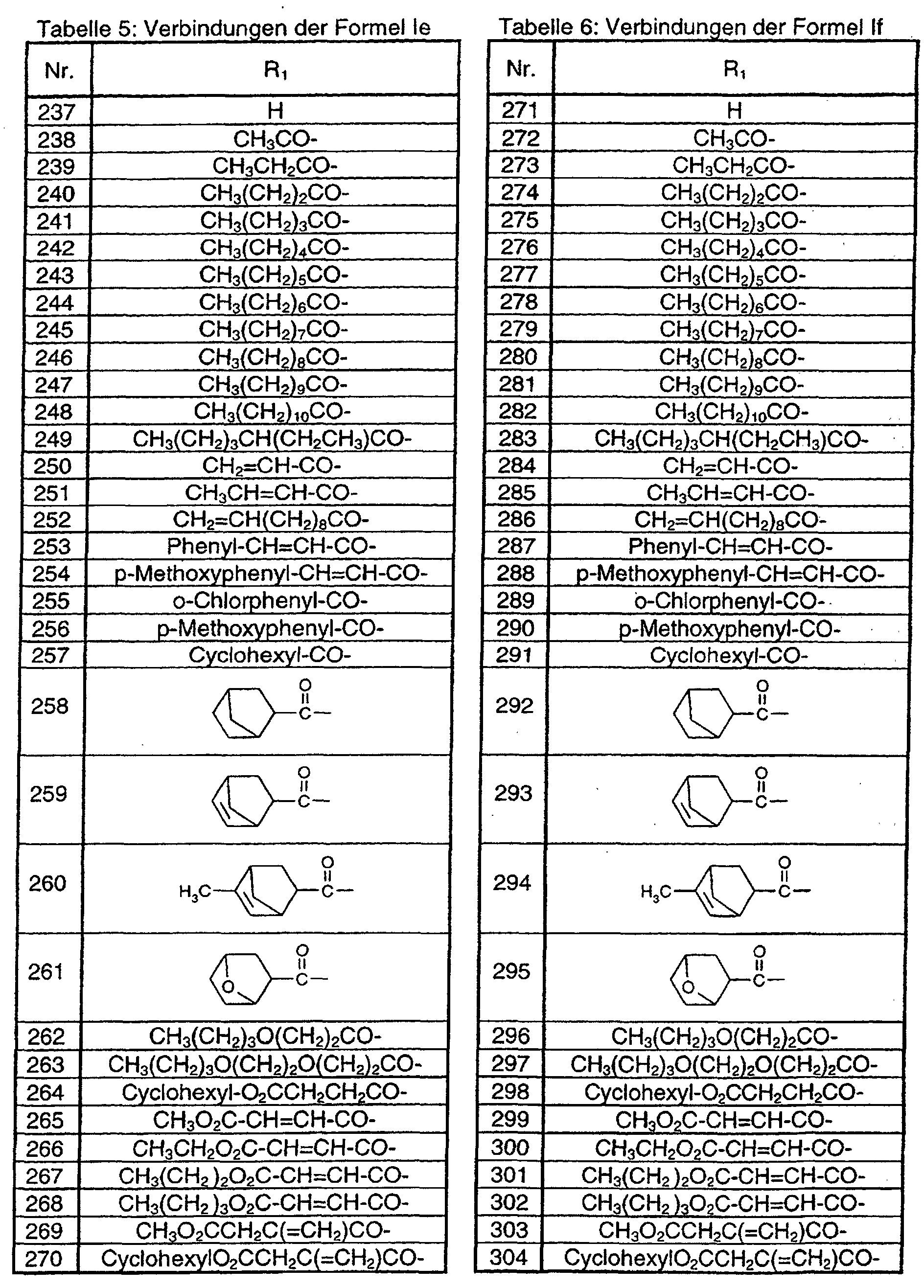

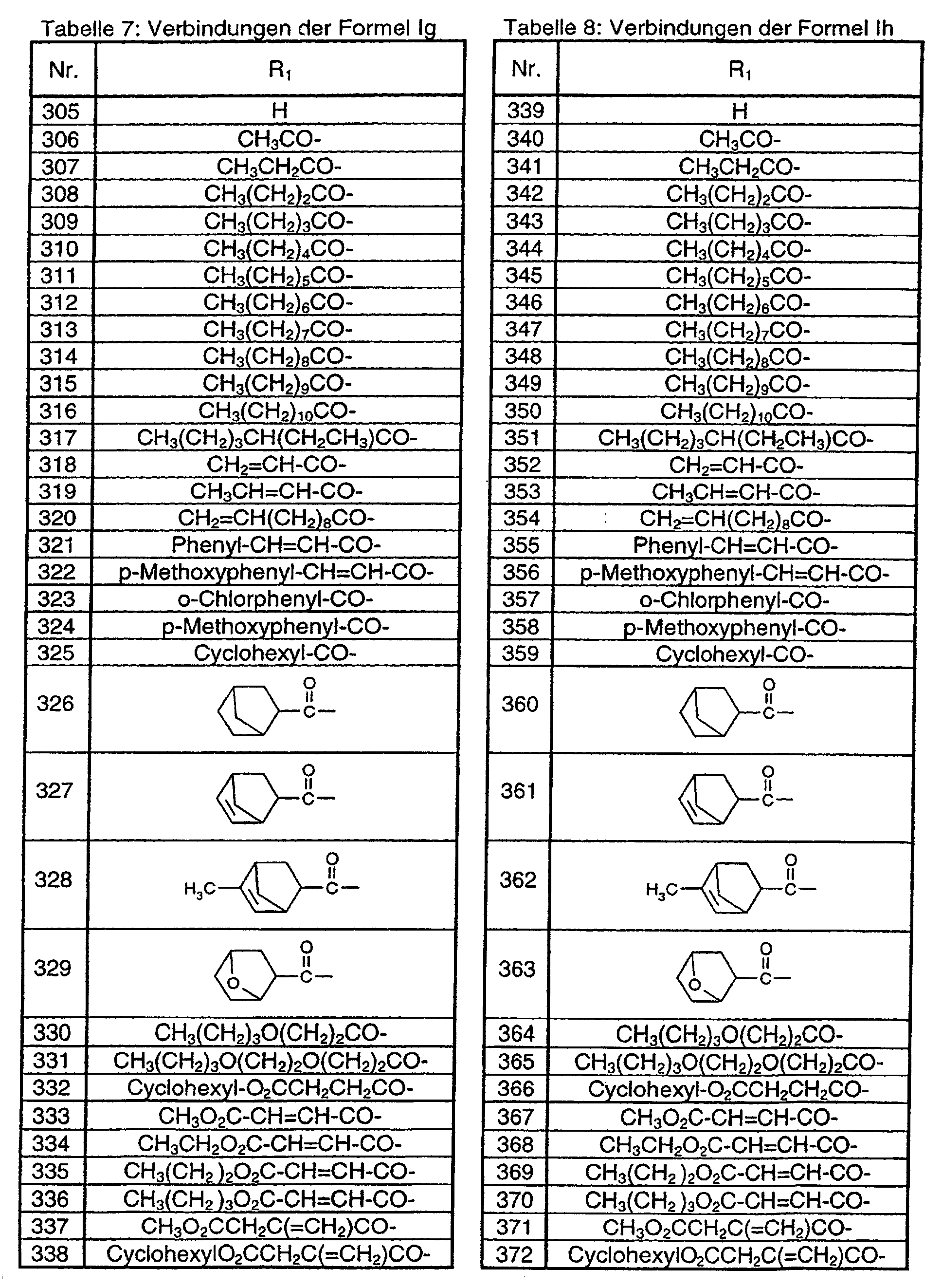

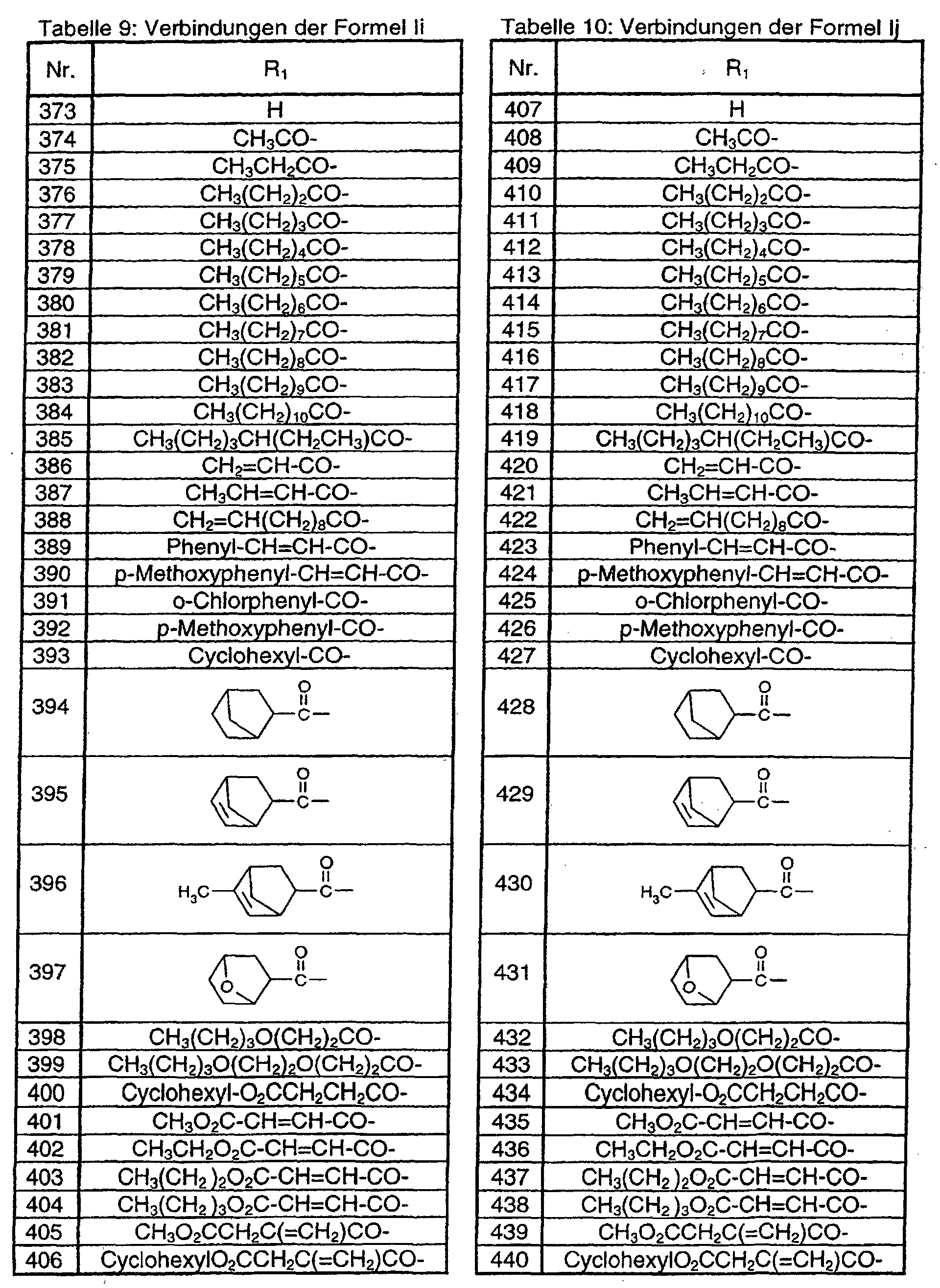

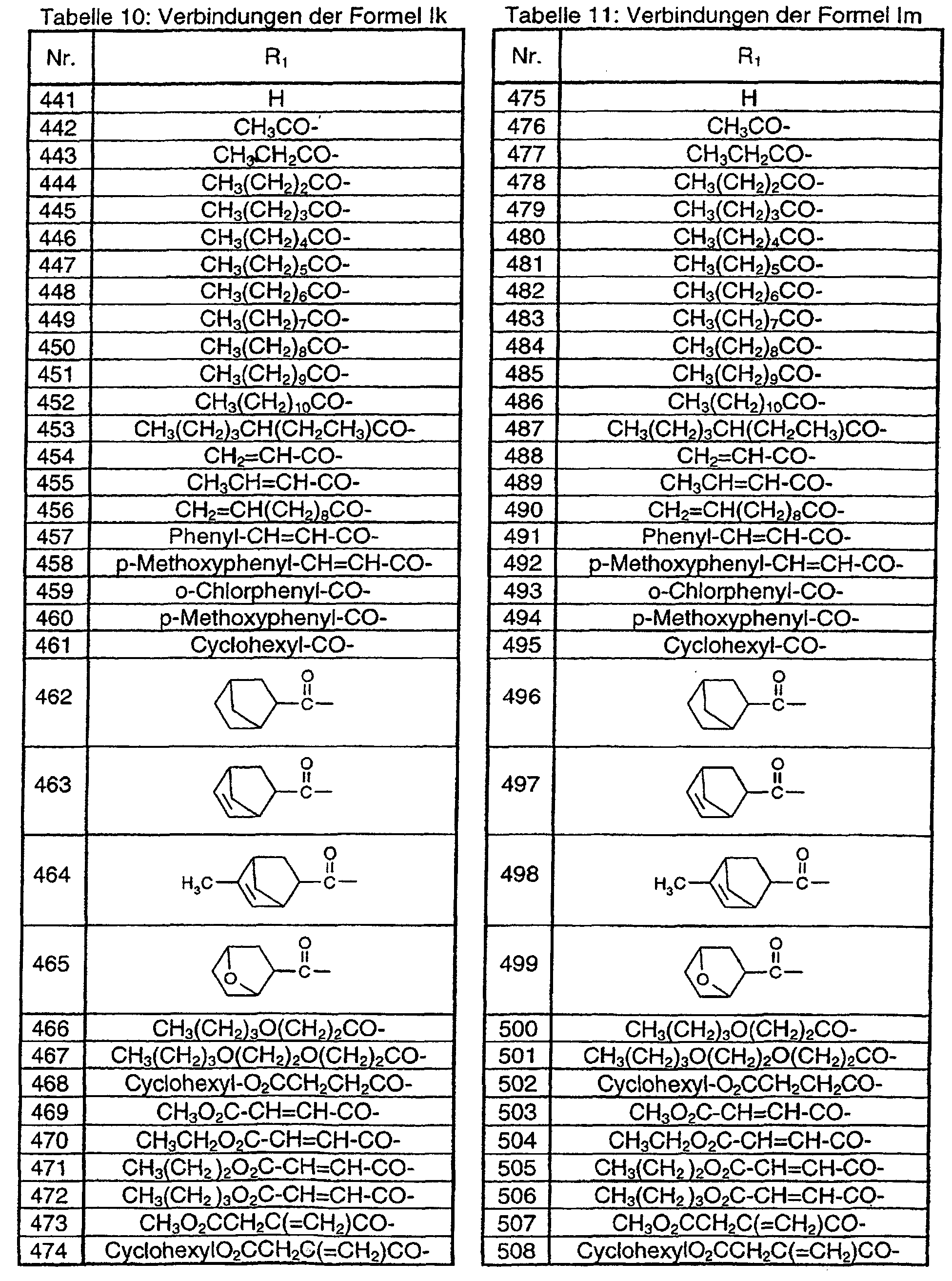

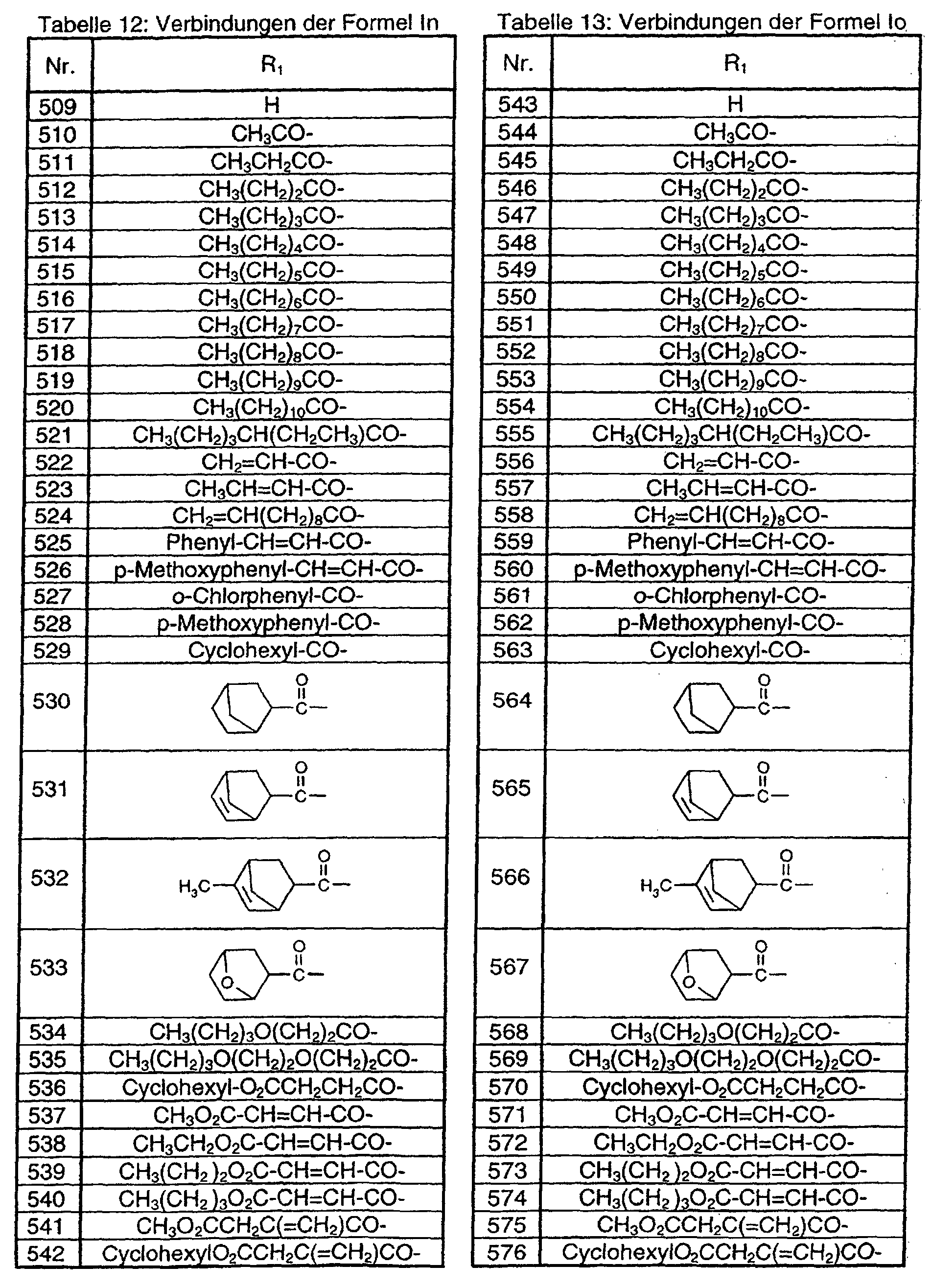

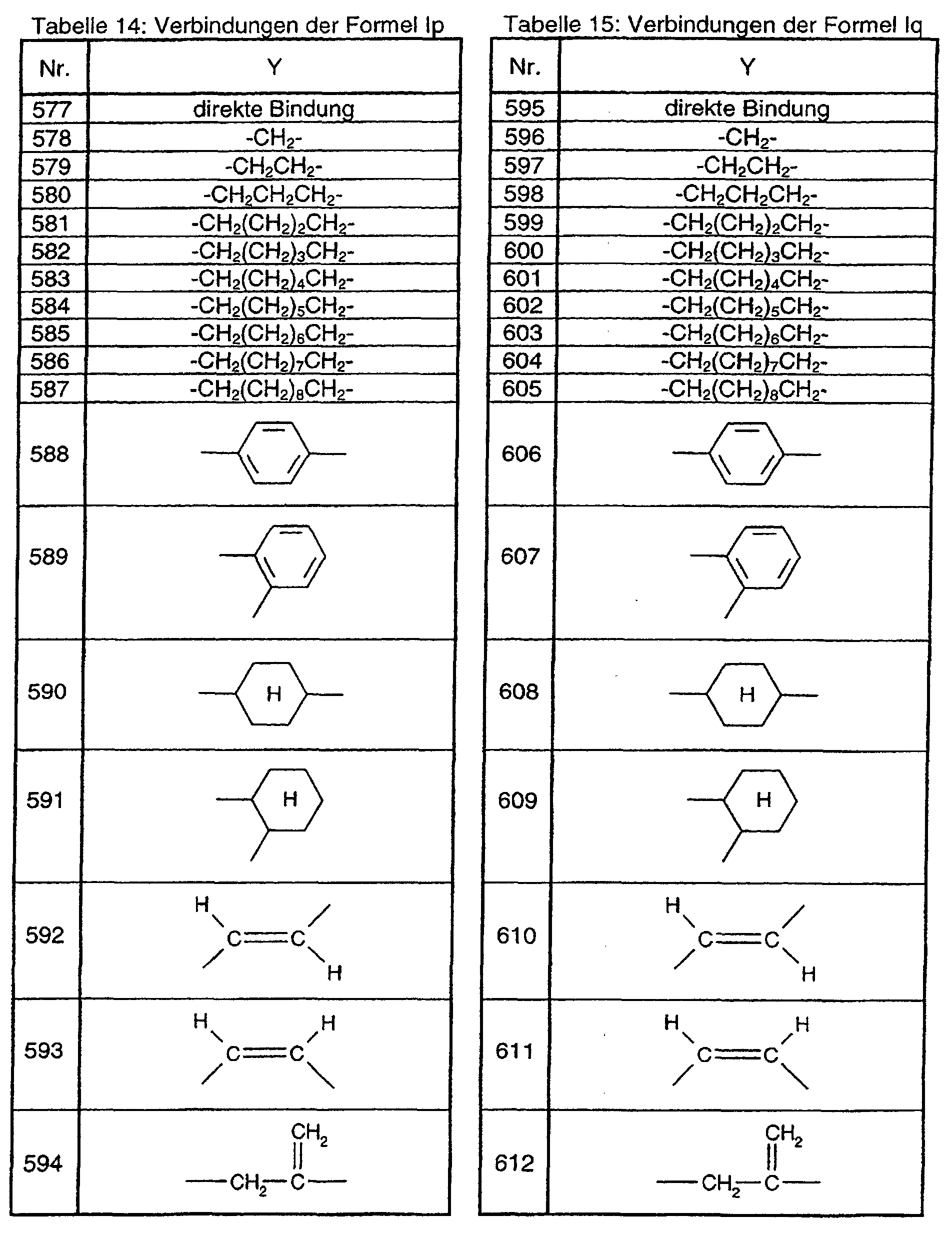

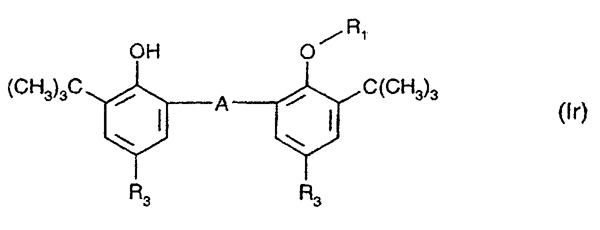

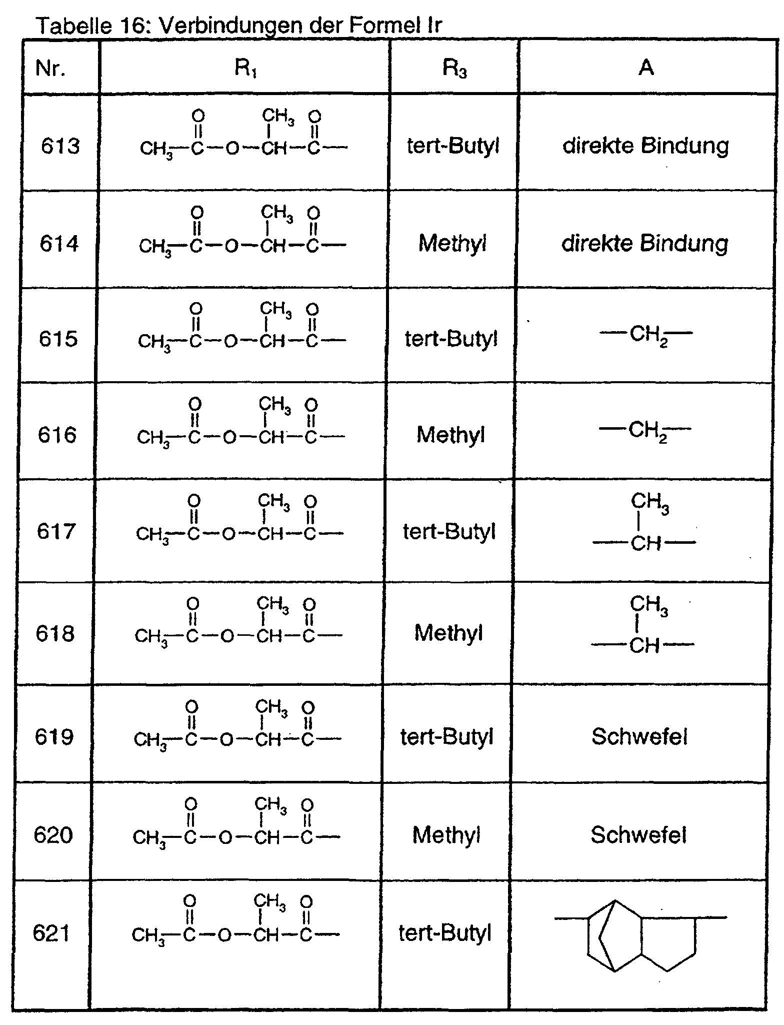

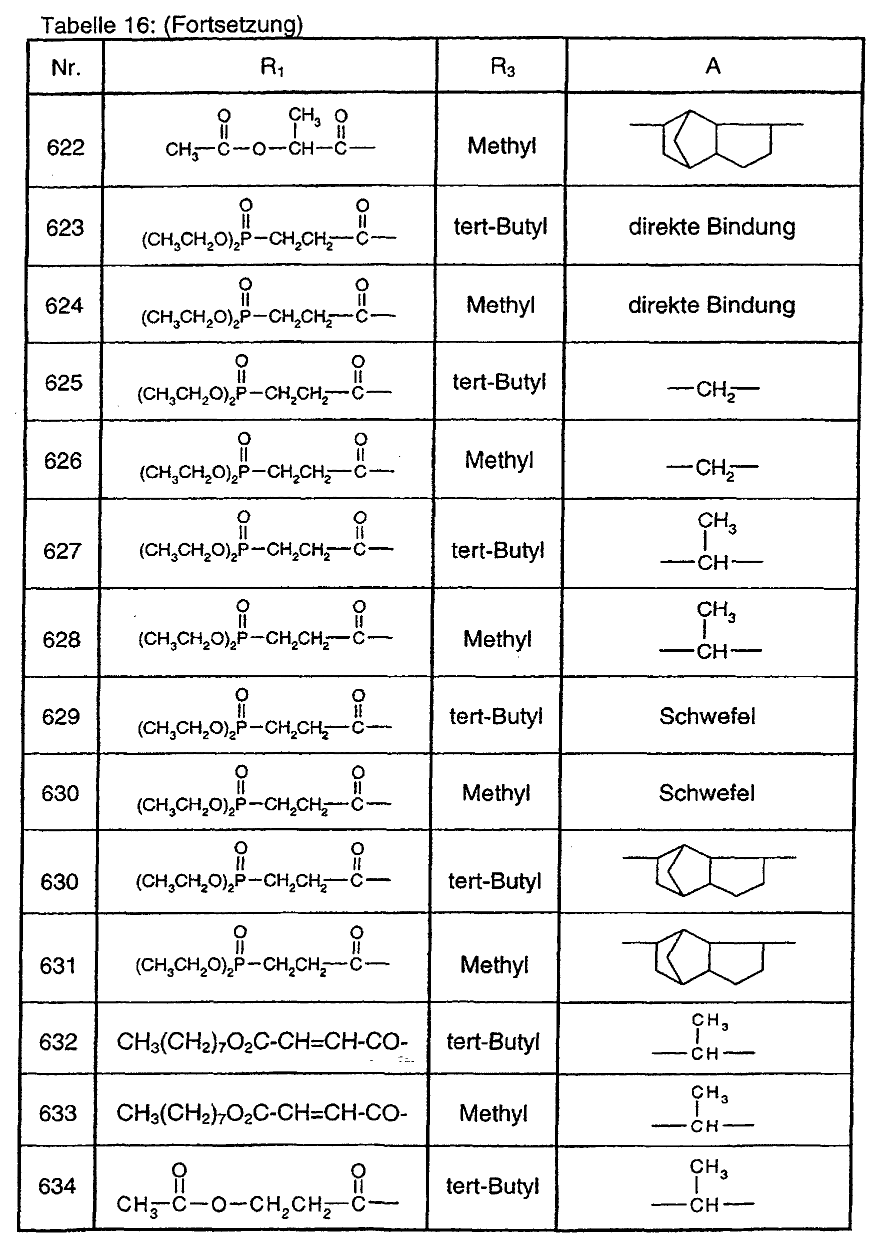

Von speziellem Interesse sind Pulverlackzusammensetzungen, worin die Komponente (b) eine Verbindung der Formel I darstellt, worin
wenn n 1 ist, 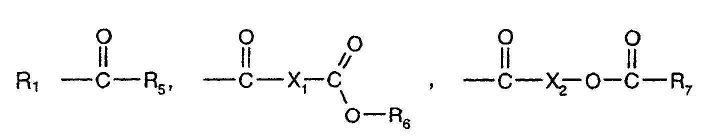 oder 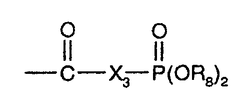 darstellt, und
wenn n 2 ist, 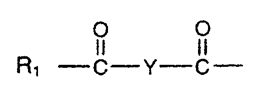 bedeutet,
A eine direkte Bindung oder 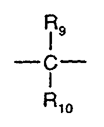 darstellt,
X₁ Ethylen oder C₂-C₃-Alkenylen bedeutet,
X₂ Methylen oder Ethyliden darstellt,
X₃ Ethylen bedeutet,
Y C₆-C₁₀-Alkylen oder Vinylen darstellt,
R₂ tert-Butyl bedeutet,
R₃ C₁-C₄-Alkyl darstellt,
R₄ Wasserstoff bedeutet,
R₅ C₁-C₁₂-Alkyl, durch Sauerstoff unterbrochenes C₄-C₈-Alkyl; C₂-C₄-Alkenyl, C₈-C₁₀-Phenylalkenyl oder 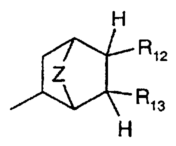 darstellt,
R₆ C₁-C₄-Alkyl bedeutet,
R₇ C₁-C₄-Alkyl darstellt,
R₈ C₁-C₄-Alkyl bedeutet,
R₉ Wasserstoff darstellt,
R₁₀ Wasserstoff oder Methyl bedeutet,
R₁₂ Wasserstoff darstellt,
R₁₃ Wasserstoff bedeutet,
Z Methylen darstellt, und
n 1 oder 2 bedeutet.

Die Verbindungen der Formel I sind teilweise in der Literatur bekannt oder können beispielsweise in Analogie zu den in den folgenden Literaturstellen offenbarten Verfahren hergestellt werden: U.S. 4,365,032; EP-A-0 079 806; U.S. 4,562,281; U.S. 4,774,274; EP-A-0 500 323; U.S. 5,602,196; EP-A-0 716 076; U.S. 5,616,780 oder EP-A-0 727 410.

Von Interesse sind Pulverlackzusammensetzungen, worin die Pulverlackzusammensetzung eine thermisch, inbesondere in Gasöfen, härtbare Pulverlackzusammensetzung darstellt.

Unter dem Begriff Gasöfen werden Öfen verstanden, die durch Verbrennung von Kohlenwasserstoffen wie beispielsweise Methan, Propan, Butan, Steinkohlengas, Kohlenmonoxid, Wasserstoff oder Ölen gespiesen werden. Bei der Verbrennung der Gase bzw. Oxidation der Gase mit Luft entstehen mit dem Stickstoff, der in der Luft vorhanden ist, die für die Härtung der Pulverlackzusammensetzung unerwünschten Stickoxide.

Die vorliegende Erfindung betrifft deshalb auch bei der Härtung mit aus Verbrennungsgasen stammenden Stickoxiden in Kontakt stehende Pulverlackzusammensetzungen enthaltend die Komponenten (a) und (b).

Unter dem Begriff "Pulverlackzusammensetzungen" bzw. "Pulverlacke" wird die Definition wie sie in "Ullmann's Encyclopedia of Industrial Chemistry, 5th, Completely Revised Edition, Vol. A 18", Seiten 438 bis 444 (1991) unter dem Kapitel 3.4 beschrieben ist, verstanden. Unter Pulverlacken werden thermoplastische oder einbrennbare, vernetzbare Polymere, die in Pulverform auf vorwiegend metallische Substrate aufgetragen werden, verstanden. Die Art und Weise, wie das Pulver mit dem zu beschichtenden Werkstück in Kontakt gebracht wird, kennzeichnet die verschiedenen Auftragsverfahren, wie beispielsweise elektrostatisches Pulverspritzen, elektrostatisches Wirbelsintern, Schüttsintern, Wirbelsintern, Rotationssintern oder Zentrifugalsintern.

Bevorzugte organische filmbildende Bindemittel für die erfindungsgemässen Pulverlackzusammensetzungen sind Einbrennsysteme auf Basis von beispielsweise Epoxidharzen, Polyester-Hydroxyalkylamiden, Polyester-Glykolurilen, Epoxid-Polyesterharzen, Polyester-Triglycidylisocyanuraten, hydroxyfuntionellen Polyester-blockierten Polyisocyanaten, hydroxyfunktionellen Polyester-Uretdionen, Acrylatharzen mit Härter oder Mischungen solcher Harze.

Von Interesse sind auch filmbildende Bindemittel mit thermoplastischen Eigenschaften wie beispielsweise Polyethylen, Polypropylen, Polyamide, Polyvinylchlorid, Polyvinylidendichlorid oder Polyvinylidendifluorid.

Polyester sind in der Regel hydroxy- oder carboxyfunktionell und werden üblicherweise durch Kondensation von Diolen und Dicarbonsäuren hergestellt. Durch Zugabe von Polyolen und/oder Polysäuren werden verzweigte Polyester erhalten, welche beim Einbrennen in Gegenwart von Vemetzern dann Netzwerkstrukturen ergeben, die der Beschichtung die erwünschten physikalischen Eigenschaften wie Kratzfestigkeit, Schlag- und Biegefestigkeit verleihen. Anstelle von multifunktionellen Säuren können auch Anhydride oder Säurechloride wie z.B. Maleinsäureanhydrid, Itakonsäureanhydrid, Phthalsäureanhydrid, Terephthalsäureanhydrid, Hexahydroterephthalsäureanhydrid, Trimellithsäureanhydrid, Pyromellithsäuredianhydrid, Bernsteinsäureanhydrid usw. verwendet werden. Es können auch einfache Ester wie z.B. Dimethylterephthalat verwendet werden, wobei die Polymerisation durch Transesterifizierung unter Abspaltung des flüchtigen Alkohols abläuft. Praktikabel ist ebenfalls eine Herstellung durch eine Kombination von Transesterifizierung und Kondensation. Weiter können Polyester durch Polykondensation von Hydroxycarbonsäuren wie z.B. 12-Hydroxystearinsäure und Hydroxypivalinsäure oder den entsprechenden Lactonen wie z.B. ε-Caprolacton hergestellt werden. Beispiele für Dicarbonsäuren und Polysäuren sind u.a. Terephthalsäure, Isophthalsäure, Adipinsäure, Azelainsäure, Sebazinsäure, 1,12-Dodecandisäure, Pyromellithsäure, 3,6-Dichlorophthalsäure, Bernsteinsäure, 1,3-Cyclohexandicarbonsäure und 1,4-Cyclohexandicarbonsäure. Beispiele für Diole und Polyole sind u.a. Ethylenglykol, Propylenglykol, Glycerin, Hexantriol, Hexan-2,5-diol, Hexan-1,6-diol, Pentaerythritol, Sorbitol, Neopentylglykol, Trimethylolethan, Trimethyolpropan, Tris-1,4-Cyclohexandimethanol, Trimethylpentandiol, 2,2-Diethyl-1,3-propandiol, 2-Methyl-2-butyl-1,3-propandiol, Esterdiol 204 (Ester der Hydroxypivalinsäure und Neopentylglykol), hydriertes Bisphenol A, Bisphenol A, Hydroxypivalinsäure, Hydroxypivalatester, 2-Butyl-2-ethyl-1,3-propandiol, 1,4-Butandiol, 2-Buten-1,4-diol, 2-Butyn-1,4-diol oder 2-Methyl-1,3-propandiol.

Als Vernetzungsmittel für carboxyfunktionelle Polyester sind Epoxyverbindungen wie z.B Novolac-Epoxyharze, Diglycidyläther von Bisphenol A, hydriertes Bisphenol A und Bisphenol A modifiziert durch Reaktion mit z.B. aliphatischen Dicarbonsäuren geeignet. Ebenso geeignet sind reaktive Epoxyverbindungen wie Triglycidyltriazolidin-3,5-dion, die Glycidylester von Polysäuren wie z.B. Diglycidylterephthalat und Diglycidylhexahydroterephthalat, Hydantoinepoxide (US-A-4 402 983) und ganz besonderes Triglycidylisocyanurat und aliphatische Polyepoxy-Verbindungen wie beispielsweise Araldit® PT910 (Ciba Spezialitätenchemie AG) und epoxidierte mehrfach ungesättigte Fettsäureester mit Alkoholen, wie beispielsweise die Uranox®-Produkte von der Firma DSM. Weitere Vernetzungsmittel für carboxyfunktionelle Polyester sind β-Hydroxyalkylamide (US-A-4,076,917), wie z.B. das mehrheitlich tetrafunktionelle β-Hydroxyalkylamid-Derivat der Adipinsäure (Primid® XL552 umd Primid®QM1260 von Ems Chemie). Auch haben sich Derivate von Melamin, Benzoguanimin und Glykoluril, welche mit niedrigmolekularen Alkoholen alkyliert sind, bewährt. Beispiele sind Tetramethylmethoxyglykoluril (Powderlink® 1174 von American Cyanamid). Ferner sind auch Bis- und Trisoxazolidine wie z.B. 1,4-Bisoxazolidinobenzol als Vernetzungsmittel bekannt.

Jüngeren Datums sind carboxyfunktionelle Polyester, welche chemisch gebundene Epoxygruppen enthalten und demzufolge mit sich selbst vernetzen können (Molhoek et al., 22er Fatipec Congress, 15.-19.5.95, Budapest, Vol.1, 119-132).

In allen Systemen, in denen eine Epoxygruppe oder ein Glycidylrest mit einer Carboxylgruppe oder einem Anhydrid in einer Vernetzungsreaktion reagiert, können Katalysatoren eingesetzt werden. Beispiele sind Amine oder Metallverbindungen wie z.B. Aluminiumacetylacetonat oder Zinnoctoat.

Als Vernetzungsmittel für hydroxyfunktionelle Polyester sind die Polyisocyanatvernetzer von besonderer Bedeutung. Um aufgrund der hohen Reaktivität von Isocyanaten eine vorzeitige Vernetzung zu verhindern und um einen guten Verlauf des aufgeschmolzenen Pulvers zu erhalten, werden die Polyisocyanate blockiert (intern als ein Uretdion oder als ein Addukt mit einem Blockierungsmittel). Als Blockierungsmittel werden am häufigsten ε-Caprolactam, Methylethylketoxim oder Butanonoxim eingesetzt. Weitere geeignete Blockierungsmittel für Isocyanate sind in den Veröffentlichungen von G.B. Guise, G.N. Freeland und G.C. Smith, J. Applied Polymer Science, 23, 353 (1979) und von M.Bock und H.-U. Maier-Westhues in "Progress in Product Development for Powder Coating Technology, XIX th Int. Conf. on Organic Coatings, Science and Technol., Athens, 12-16 July",1993 beschrieben. Beispiele für gegebenenfalls blockierte Polyisocyanate sind u.a. 2-Methylpentan-1,5-diisocyanat, 2-Ethylbutan-1,4-diisocyanat, 3(4)-Isocyanatomethyl-1-methylcyclohexylisocyanat, 3-Isocyanatomethyl-3,5,5-trimethylcyclohexandiisocyanat, Tris(isocyanatomethyl)benzol, 4,4'-Diisocyanatodicyclohexylmethan, 1,4-Bis(isocyanatomethyl)cyclohexan, m-Tetramethylxyloldiisocyanat, p-Tetramethylxyloldiisocyanat und besonders Isophorondiisocyanat. Zur Deblockierung wird meistens ein metallischer Katalysator, wie z.B. Zinnoctoat, Dibutylzinnoxyd oder Dibutylzinndilaurat zu der Polyisocyanat-Formulierung gegeben.

Als weitere Vernetzungsmittel für hydroxyfunktionelle Polyester sind Anhydride wie z.B. Trimellithsäureanhydrid und seine Reaktionsprodukte mit Diolen und Diaminen geeignet. Weitere Beispiele solcher Vernetzungsmittel sind von T.A. Misev in "Powder Coatings: Chemistry and Technology", Verlag J.Wiley & Sons, Chichester auf Seiten 123 u. 124 beschrieben.

Polyacrylate, die gewöhnlich Hydroxy-,Carboxy- oder Glycidylfunktionalität aufweisen, werden auch als Bindemittel für Pulverlacke eingesetzt. Diese werden nach den üblichen Methoden hauptsächlich aus Monomeren wie z.B. Styrol und linearen oder verzweigten C₁-C₈-Alkylestern von Acrylsäure oder Methacrylsäure hergestellt. Auch andere ethylenisch ungesättigte Verbindungen wie z.B. Divinylbenzol., Acrylamid, Methacrylamid, Butoxymethylacrylamid, Acrylonitril, Butadien usw. können zugegeben und copolymerisiert werden. Hydroxyfunktionalität wird durch die Copolymerisation von hydroxyfunktionellen Monomeren wie z.B. Hydroxyethylacrylat, Hydroxyethylmethacrylat, Hydroxypropylacrylat, Hydroxypropylmethacrylat gewährleistet. Für Carboxyfunktionalität werden ethylenisch ungesättigte Säuren und Anhydride wie z.B. Acrylsäure, Methacrylsäure, Itakonsäure, Crotonsäure, Maleinsäureanhydrid, Itakonsäureanhydrid, Acrylsäureanhydrid oder Methacrylsäureanhydrid verwendet (US-A-3 836 604). Glycidylfunktionalität wird wie in EP-A-0 256 369 und US-A-3 876 578 gelehrt, durch die Copolymerisation von Monomeren wie Glycidylacrylat und Glycidylmethacrylat gegeben. Als Vernetzungsmittel für Polyacrylate mit Hydroxy- oder Carboxyfunktionalität können im Prinzip die gleichen Verbindungen, wie bereits für die Po-Iyester mit Hydroxy- oder Carboxyfunktionalität beschrieben, verwendet werden. Weitere geeignete Vernetzungsmittel sind die Epoxyverbindungen des US-A-0 045 040. Geignete Vernetzungsmittel für Polyacrylate mit Glycidylfunktionalität sind Dicarbonsäuren wie z.B. Sebazinsäure, 1,12-Dodecandicarbonsäure und Anhydride wie beispielsweise Bis-trimellithsäureanhydrid und die in US-A-3 880 946 beschriebenen Verbindungen. Ferner sind auch selbstvernetzende Polyacrylate aus DE-A-3 310 545 bekannt.

Epoxidharze für Pulverlacke sind meistens entweder Novolac®-Epoxidharze oder besonders solche auf Basis aromatische Polyole, insbesondere auf Basis von Bisphenolen wie Bisphenol A. Ferner sind modifizierte Bisphenolepoxidharze aus JP-A-58 187 464 (1982) bekannt. Die Epoxidharze werden in Kombination mit Vernetzern aus den Klassen der festen aliphatischen Amine, festen aromatischen Amine, Aminaddukte, Phenolharze, Polysäuren und den bereits beschriebenen carboxyfuntionellen Polyestern angewandt. Ganz besonders als Härter zu erwähnen sind die Dicyandiamide, die häufig mit einem Katalysator wie beispielsweise Lewissäuren, Borontrifluorid-Amin-Komplexen, Metallkomplexen, tertiären oder quaternären Aminen und Imidazolin Derivaten wie 2-Methylimidazolin eingesetzt werden.

Die Komponente (b) wird zweckmässig in einer Menge von 0,001 bis 10 Gew.-%, beispielsweise 0,01 bis 5 Gew.-%, vorzugsweise 0,025 bis 3 Gew.-%, insbesondere 0,05 bis 3 Gew.-%, bezogen auf das Gewicht der Komponente (a) verwendet.

Zusätzlich zu den Komponente (a) und (b) können die erfindungsgemässen Pulverlackzusammensetzungen noch weitere Additive enthalten.

Bevorzugte erfindungsgemässe Pulverlackzusammensetzungen enthalten als weitere Additive eine oder mehrere Komponenten aus der Gruppe der Pigmente, Farbstoffe, Füllstoffe, Verlaufshilfsmittel, Entgasungsmittel, Ladungssteuermittel, optische Aufheller, Haftungsverbesserer, Antioxidantien, Lichtstabilisatoren, Härtungskatalysatoren, Korrosionsschutzmittel oder Photoinitiatoren.

Korrosionsschutzmittel sind beispielsweise Korrosionsschutz-Pigmente, wie phosphat- oder borathaltige Pigmente oder Metalloxid-Pigmente, oder andere organische oder anorganische Korrosionsinhibitoren, z.B. Salze der Nitroisophthalsäure, Phosphorester, technische Amine oder substituierte Benztriazole.

Beispiele für Entgasungsmittel sind Fettsäureamide wie in EP-A-0 471 409 beschrieben, ε-Caprolactam, Methyl- und Dimethylisophthalat (EP-A-284 996) und ganz besonders Benzoin.

Beispiele für Verlaufshilfsmittel sind epoxidierte Fettsäuren, Abietylalkohol, Polylaurylmethacrylat, Polylaurylacrylat, Polydimethylsiloxan-polyalkylenoxid Blockcopolymere oder insbesondere Polymere und Copolymere mit niedrigem Molekulargewicht von C₁-C₈-Alkylacrylatestern oder Alkylmethacrylatestem.

Haftungsverbesserer basieren z.B. auf modifizierten Silanen, Titanaten oder Zirkonaten.

Die Pigmente sind beispielsweise Titandioxid, Bariumsulfat, Lithopone, Eisenoxid, Russ, Aluminiumbronze, Phthalocyaninblau oder Aminoanthrachinon.

Beispiele für Füllstoffe sind Talk, Aluminiumoxid, Aluminiumsilikat, Aluminiumphosphat, Baryt, Glimmer, Siliciumdioxid, Calcium- oder Magnesiumcarbonat, Magnesiumoxid, Zinkoxid, Zinkcarbonat, Zinkphosphat oder Gemische davon.

Zusätzlich zu der Komponente (b) können die erfindungsgemässen Pulverlackzusammensetzungen weitere Costabilisatoren (Additive) enthalten, wie beispielsweise die folgenden:

### 1. Antioxidantien

1.1. Alkylierte Monophenole, z.B. 2,6-Di-tert-butyl-4-methylphenol, 2-Butyl-4,6-dimethylphenol, 2,6-Di-tert-butyl-4-ethylphenol, 2,6-Di-tert-butyl-4-n-butylphenol, 2,6-Di-tert-butyl-4-isobutylphenol, 2,6-Di-cyclopentyl-4-methylphenol, 2-(α-Methylcyclohexyl)-4,6-dimethylphenol, 2,6-Di-octadecyl-4-methylphenol, 2,4,6-Tri-cyclohexylphenol, 2,6-Di-tert-butyl-4-methoxymethylphenol, lineare oder in der Seitenkette verzweigte Nonylphenole wie z.B. 2,6-Di-nonyl-4-methylphenol, 2,4-Dimethyl-6-(1'-methyl-undec-1'-yl)-phenol, 2,4-Dimethyl-6-(1'-methylheptadec-1'-yl)-phenol, 2,4-Dimethyl-6-(1'-methyl-tridec-1'-yl)-phenol und Mischungen davon.
1.2. Alkylthiomethylphenole, z.B. 2,4-Di-octylthiomethyl-6-tert-butylphenol, 2,4-Di-octylthiomethyl-6-methylphenol, 2,4-Di-octylthiomethyl-6-ethylphenol, 2,6-Di-dodecylthiomethyl-4-nonylphenol. 1.3. Hydrochinone und alkylierte Hydrochinone, z.B. 2,6-Di-tert-butyl-4-methoxyphenol, 2,5-Di-tert-butyl-hydrochinon, 2,5-Di-tert-amyl-hydrochinon, 2,6-Diphenyl-4-octadecyloxyphenol, 2,6-Di-tert-butyl-hydrochinon, 2,5-Di-tert-butyl-4-hydroxyanisol, 3,5-Di-tert-butyl-4-hydroxyanisol, 3,5-Di-tert-butyl-4-hydroxyphenyl-stearat, Bis(3,5-di-tert-butyl-4-hydroxyphenyl)adipat.
1.4. Tocopherole, z.B. α-Tocopherol, β-Tocopherol, γ-Tocopherol, δ-Tocopherol und Mischungen davon (Vitamin E).
1.5. Hydroxylierte Thiodiphenylether, z.B. 2,2'-Thio-bis(6-tert-butyl-4-methylphenol), 2,2'-Thio-bis(4-octylphenol), 4,4'-Thio-bis(6-tert-butyl-3-methylphenol), 4,4'-Thio-bis-(6-tert-butyl-2-methylphenol), 4,4'-Thio-bis(3,6-di-sec.-amylphenol), 4,4'-Bis(2,6-dimethyl-4-hydroxyphenyl)-disulfid.
1.6. Alkyliden-Bisphenole, z.B. 2,2'-Methylen-bis(6-tert-butyl-4-methylphenol), 2,2'-Methylenbis(6-tert-butyl-4-ethylphenol), 2,2'-Methylen-bis[4-methyl-6-(a-methylcyclohexyl)-phenol], 2,2'-Methylen-bis(4-methyl-6-cyclohexylphenol), 2,2'-Methylen-bis(6-nonyl-4-methylphenol), 2,2'-Methylen-bis(4,6-di-tert-butylphenol), 2,2'-Ethyliden-bis(4,6-di-tert-butylphenol), 2,2'-Ethyliden-bis(6-tert-butyl-4-isobutylphenol), 2,2'-Methylen-bis[6-(α-methylbenzyl)-4-nonylphenol], 2,2'-Methylen-bis[6-(α,α-dimethylbenzyl)-4-nonylphenol], 4,4'-Methylen-bis(2,6-ditert-butylphenol), 4,4'-Methylen-bis(6-tert-butyl-2-methylphenol), 1,1-Bis(5-tert-butyl-4-hydroxy-2-methylphenyl)-butan, 2,6-Bis(3-tert-butyl-5-methyl-2-hydroxybenzyl)-4-methylphenol, 1,1,3-Tris(5-tert-butyl-4-hydroxy-2-methylphenyl)-butan, 1,1-Bis(5-tert-butyl-4-hydroxy-2-methyl-phenyl)-3-n-dodecylmercaptobutan, Ethylenglycol-bis[3,3-bis(31-tert-butyl-4'-hydroxyphenyl)-butyrat], Bis(3-tert-butyl-4-hydroxy-5-methyl-phenyl)-dicyclopentadien, Bis[2-(3'-tert-butyl-2'-hydroxy-5'-methyl-benzyl)-6-tert-butyl-4-methyl-phenyl]-terephthalat, 1,1-Bis-(3,5-dimethyl-2-hydroxyphenyl)-butan, 2,2-Bis(3,5-di-tert-butyl-4-hydroxyphenyl)-propan, 2,2-Bis(5-tert-butyl-4-hydroxy-2-methylphenyl)-4-n-dodecylmercapto-butan, 1,1,5,5-Tetra-(5-tertbutyl-4-hydroxy-2-methylphenyl)-pentan.
1.7. O-, N- und S-Benzylverbindungen, z.B. 3,5,3',5'-Tetra-tert-butyl-4,4'-dihydroxydibenzylether, Octadecyl-4-hydroxy-3,5-dimethylbenzyl-mercaptoacetat, Tridecyl-4-hydroxy-3,5-ditert-butylbenzyl-mercaptoacetat, Tris(3,5-di-tert-butyl-4-hydroxybenzyl)-amin, Bis(4-tert-butyl-3-hydroxy-2,6-dimethylbenzyl)-dithioterephthalat, Bis(3,5-di-tert-butyl-4-hydroxybenzyl)-sulfid, Isooctyl-3,5-di-tert-butyl-4-hydroxybenzyl-mercaptoacetat.
1.8. Hydroxybenzylierte Malonate, z.B. Dioctadecyl-2,2-bis(3,5-di-tert-butyl-2-hydroxybenzyl)-malonat, Di-octadecyl-2-(3-tert-butyl-4-hydroxy-5-methylbenzyl)-malonat, Di-dodecylmercaptoethyl-2,2-bis(3,5-di-tert-butyl-4-hydroxybenzyl)-malonat, Di-[4-(1,1,3,3-tetramethylbutyl)-phenyl]-2,2-bis(3,5-di-tert-butyl-4-hydroxybenzyl)-malonat.
1.9. Hydroxybenzyl-Aromaten, z.B. 1,3,5-Tris(3,5-di-tert-butyl-4-hydroxybenzyl)-2,4,6-trimethylbenzol, 1,4-Bis(3,5-di-tert-butyl-4-hydroxybenzyl)-2,3,5,6-tetramethylbenzol, 2,4,6-Tris-(3,5-di-tert-butyl-4-hydroxybenzyl)-phenol.
1.10. Triazinverbindungen, z.B. 2,4-Bis-octylmercapto-6-(3,5-di-tert-butyl-4-hydroxyanilino)-1,3,5-triazin, 2-Octylmercapto-4,6-bis(3,5-di-tert-butyl-4-hydroxyanilino)-1,3,5-triazin, 2-Octylmercapto-4,6-bis(3,5-di-tert-butyl-4-hydroxyphenoxy)-1,3,5-triazin, 2,4,6-Tris(3,5-di-tertbutyl-4-hydroxyphenoxy)-1,2,3-triazin, 1,3,5-Tris(3,5-di-tert-butyl-4-hydroxybenzyl)-isocyanurat, 1,3,5-Tris(4-tert-butyl-3-hydroxy-2,6-dimethylbenzyl)-isocyanurat, 2,4,6-Tris(3,5-di-tertbutyl-4-hydroxyphenylethyl)-1,3,5-triazin, 1,3,5-Tris(3,5-di-tert-butyl-4-hydroxyphenylpropionyl)-hexahydro-1,3,5-triazin, 1,3,5-Tris(3,5-dicyclohexyl-4-hydroxybenzyl)-isocyanurat.
1.11. Benzylphosphonate, z.B. Dimethyl-2,5-di-tert-butyl-4-hydroxybenzylphosphonat, Diethyl-3,5-di-tert-butyl-4-hydroxybenzylphosphonat, Dioctadecyl-3,5-di-tert-butyl-4-hydroxybenzylphosphonat, Dioctadecyl-5-tert-butyl-4-hydroxy-3-methylbenzylphosphonat, Ca-Salz des 3,5-Di-tert-butyl-4-hydroxybenzyl-phosphonsäure-monoethylesters.
1.12. Acylaminophenole, z.B. 4-Hydroxy-laurinsäureanilid, 4-Hydroxystearinsäureanilid, N-(3,5-di-tert-butyl-4-hydroxyphenyl)-carbaminsäureoctylester.
1.13. Ester der β-(3,5-Di-tert-butyl-4-hydroxyphenyl)-propionsäure mit ein- oder mehrwertigen Alkoholen, wie z.B. mit Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
1.14. Ester der β-(5-tert-Butyl-4-hydroxy-3-methylphenyl)-propionsäure mit ein- oder mehrwertigen Alkoholen, wie z.B. mit Methanol, Ethanol, n-Octanol, i-Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis-(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
1.15. Ester der β-(3,5-Dicyclohexyl-4-hydroxyphenyl)-propionsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
1.16. Ester der 3,5-Di-tert-butyl-4-hydroxyphenylessigsäure mit ein- oder mehrwertigen Alkoholen, wie z.B. mit Methanol, Ethanol, Octanol, Octadecanol, 1,6-Hexandiol, 1,9-Nonandiol, Ethylenglycol, 1,2-Propandiol, Neopentylglycol, Thiodiethylenglycol, Diethylenglycol, Triethylenglycol, Pentaerythrit, Tris(hydroxyethyl)-isocyanurat, N,N'-Bis(hydroxyethyl)-oxalsäurediamid, 3-Thiaundecanol, 3-Thiapentadecanol, Trimethylhexandiol, Trimethylolpropan, 4-Hydroxymethyl-1-phospha-2,6,7-trioxabicyclo-[2.2.2]-octan.
1.17. Amide der β-(3,5-Di-tert-butyl-4-hydroxyphenyl)-propionsäure, wie z.B. N,N'-Bis(3,5-ditert-butyl-4-hydroxyphenylpropionyl)-hexamethylendiamid, N,N'-Bis(3,5-di-tert-butyl-4-hydroxyphenylpropionyl)-trimethylendiamid, N,N'-Bis(3,5-di-tert-butyl-4-hydroxyphenylpropionyl)-hydrazid, N,N'-Bis[2-(3-[3,5-di-tert-butyl-4-hydroxyphenyl]-propionyloxy)ethyl]oxamid (Naugard®XL-1 der Firma Uniroyal).
1.18. Ascorbinsäure (Vitamin C).
1.19. Aminische Antioxidantien, wie z.B. N,N'-Di-isopropyl-p-phenylendiamin, N,N'-Di-secbutyl-p-phenylendiamin, N,N'-Bis(1,4-dimethyl-pentyl)-p-phenylendiamin, N,N'-Bis(1-ethyl-3-methyl-pentyl)-p-phenylendiamin, N,N'-Bis(1-methyl-heptyl)-p-phenylendiamin, N,N'-Dicyclohexyl-p-phenylendiamin, N,N'-Diphenyl-p-phenylendiamin, N,N'-Di-(2-naphthyl)-p-phenylendiamin, N-lsopropyl-N'-phenyl-p-phenylendiamin, N-(1,3-Dimethyl-butyl)-N'-phenyl-p-phenylendiamin, N-(1-Methyl-heptyl)-N'-phenyl-p-phenylendiamin, N-Cyclohexyl-N'-phenyl-pphenylendiamin, 4-(p-Toluol-sulfonamido)-diphenylamin, N,N'-Dimethyl-N,N'-di-sec-butyl-pphenylendiamin, Diphenylamin, N-Allyldiphenylamin, 4-Isopropoxy-diphenylamin, N-Phenyl-1-naphthylamin, N-(4-tert-Octylphenyl)-1-naphthylamin, N-Phenyl-2-naphthylamin, octyliertes Diphenylamin, z.B. p,p'-Di-tert-octyldiphenylamin, 4-n-Butylaminophenol, 4-Butyrylaminophenol, 4-Nonanoylamino-phenol, 4-Dodecanoylamino-phenol, 4-Octadecanoylaminophenol, Di-(4-methoxyphenyl)-amin, 2,6-Di-tert-butyl-4-dimethylamino-methyl-phenol, 2,4'-Diamino-diphenylmethan, 4,4'-Diamino-diphenylmethan, N,N,N',N'-Tetramethyl-4,4'-diaminodiphenylmethan, 1,2-Di-[(2-methyl-phenyl)-amino]-ethan, 1,2-Di-(phenylamino)-propan, (o-Tolyl)-biguanid, Di-[4-(1',3'-dimethyl-butyl)-phenyl]amin, tert-octyliertes N-Phenyl-1-naphthylamin, Gemisch aus mono- und dialkylierten tert-Butyl/tert-Octyldiphenylaminen, Gemisch aus mono- und dialkylierten Nonyldiphenylaminen, Gemisch aus mono- und dialkylierten Dodecyldiphenylaminen, Gemisch aus mono- und dialkylierten Isopropyl/Isohexyl-diphenylaminen, Gemische aus mono- und dialkylierten tert-Butyldiphenylaminen, 2,3-Dihydro-3,3-dimethyl-4H-1,4-benzothiazin, Phenothiazin, Gemisch aus mono- und dialkylierten tert-Butyl/tert-Octyl-phenothiazinen, Gemisch aus mono- und dialkylierten tert-Octyl-phenothiazinen, N-Allylphenothiazin, N,N,N',N'-Tetraphenyl-1,4-diaminobut-2-en, N,N-Bis-(2,2,6,6-tetramethyl-piperidin-4-yl-hexamethylendiamin, Bis-(2,2,6,6-tetramethylpiperidin-4-yl)-sebacat, 2,2,6,6-Tetramethypiperidin-4-on, 2,2,6,6-Tetramethylpiperidin-4-ol.

### 2. UV-Absorber und Lichtschutzmittel

2.1. 2-(2'-Hydroxyphenyl)-benzotriazole, wie z.B. 2-(2'-Hydroxy-5'-methylphenyl)-benzotriazol, 2-(3',5'-Di-tert-butyl-2'-hydroxyphenyl)-benzotriazol, 2-(5'-tert-Butyl-2'-hydroxyphenyl)-benzotriazol, 2-(2'-Hydroxy-5'-(1,1,3,3-tetramethylbutyl)phenyl)-benzotriazol, 2-(3',5'-Di-tertbutyl-2'-hydroxyphenyl)-5-chlor-benzotriazol, 2-(3'-tert-Butyl-2'-hydroxy-5'-methylphenyl)-5-chlor-benzotriazol, 2-(3'-sec-Butyl-5'-tert-butyl-2'-hydroxyphenyl)-benzotriazol, 2-(2'-Hydroxy-4'-octoxyphenyl)-benzotriazol, 2-(3',5'-Di-tert-amyl-2'-hydroxyphenyl)-benzotriazol, 2-(3',5'-Bis(α,α-dimethylbenzyl)-2'-hydroxyphenyl)-benzotriazol, 2-(3'-tert-Butyl-2'-hydroxy-5'-(2-octyloxycarbonylethyl)phenyl)-5-chlor-benzotriazol, 2-(3'-tert-Butyl-5'-[2-(2-ethylhexyloxy)-carbonylethyl]-2'-hydroxyphenyl)-5-chlor-benzotriazol, 2-(3'-tert-Butyl-2'-hydroxy-5'-(2-methoxycarbonylethyl)phenyl)-5-chlor-benzotriazol, 2-(3'-tert-Butyl-2'-hydroxy-5'-(2-methoxycarbonylethyl)phenyl)-benzotriazol, 2-(3'-tert-Butyl-2'-hydroxy-5'-(2-octyloxycarbonylethyl)-phenyl)-benzotriazol, 2-(3'-tert-Butyl-5'-(2-(2-ethylhexyloxy)carbonylethyl]-2'-hydroxyphenyl)-benzotriazol, 2-(3'-Dodecyl-2'-hydroxy-5'-methylphenyl)-benzotriazol, 2-(3'-tert-Butyl-2'-hydroxy-5'-(2-isooctyloxycarbonylethyl)phenyl-benzotriazol, 2,2'-Methylen-bis[4-(1,1,3,3-tetramethylbutyl)-6-benzotriazol-2-yl-phenol]; Umesterungsprodukt von 2-[3'-tert-Butyl-5'-(2-methoxycarbonylethyl)-2'-hydroxy-phenyl]-benzotriazol mit Polyethylenglycol 300; 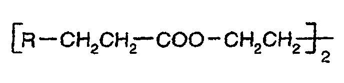 mit R = 3'-tert-Butyl-4'-hydroxy-5'-2H-benzotriazol-2-ylphenyl; 2-[2'-Hydroxy-3'-(α,α-dimethylbenzyl)-5'-(1,1,3,3-tetramethylbutyl)-phenyl]-benzotriazol; 2-[2'-Hydroxy-3'-(1,1,3,3-tetramethylbutyl)-5'-(α,α-dimethylbenzyl)-phenyl]-benzotriazol.
2.2. 2-Hydroxybenzophenone, wie z.B. das 4-Hydroxy-, 4-Methoxy-, 4-Octoxy-, 4-Decyloxy-, 4-Dodecyloxy-, 4-Benzyloxy-, 4,2',4'-Trihydroxy-, 2'-Hydroxy-4,4'-dimethoxy-Derivat.
2.3. Ester von gegebenenfalls substituierten Benzoesäuren, wie z.B. 4-tert-Butyl-phenylsalicylat, Phenylsalicylat, Octylphenyl-salicylat, Dibenzoylresorcin, Bis(4-tert-butylbenzoyl)-resorcin, Benzoylresorcin, 3,5-Di-tert-butyl-4-hydroxybenzoesäure-2,4-di-tert-butylphenylester, 3,5-Di-tert-butyl-4-hydroxybenzoesäurehexadecylester, 3,5-Di-tert-butyl-4-hydroxybenzoesäure-octadecylester, 3,5-Di-tert-butyl-4-hydroxybenzoesäure-2-methyl-4,6-di-tert-butylphenylester.
2.4. Acrylate, wie z.B. α-Cyan-β,β-diphenylacrylsäure-ethylester bzw. -isooctylester, α-Carbomethoxy-zimtsäuremethylester, α-Cyano-β-methyl-p-methoxy-zimtsäuremethylester bzw.-butylester, α-Carbomethoxy-p-methoxy-zimtsäure-methylester, N-(β-Carbomethoxy-β-cyanovinyl)-2-methyl-indolin.
2.5. Nickelverbindungen, wie z.B. Nickelkomplexe des 2,2'-Thio-bis[4-(1,1,3,3-tetramethylbutyl)-phenols], wie der 1:1- oder der 1:2-Komplex, gegebenenfalls mit zusätzlichen Liganden, wie n-Butylamin, Triethanolamin oder N-Cyclohexyl-diethanolamin, Nickeldibutyldithiocarbamat, Nickelsalze von 4-Hydroxy-3,5-di-tert-butylbenzylphosphonsäure-monoalkylestern, wie vom Methyl- oder Ethylester, Nickelkomplexe von Ketoximen, wie von 2-Hydroxy-4-methyl-phenyl-undecylketoxim, Nickelkomplexe des 1-Phenyl-4-lauroyl-5-hydroxy-pyrazols, gegebenenfalls mit zusätzlichen Liganden.
2.6. Sterisch gehinderte Amine, wie z.B. Bis(2,2,6,6-tetramethyl-piperidin-4-yl)-sebacat, Bis-(2,2,6,6-tetramethyl-piperidin-4-yl)-succinat, Bis(1,2,2,6,6-pentamethylpiperidin-4-yl)-sebacat, Bis(1-octyloxy-2,2,6,6-tetramethylpiperidin-4-yl)-sebacat, n-Butyl-3,5-di-tert-buty(-4-hydroxybenzyl-malonsäure-bis(1,2,2,6,6-pentamethylpiperidyl)-ester, Kondensationsprodukt aus 1-Hydroxyethyl-2,2,6,6-tetramethyl-4-hydroxypiperidin und Bernsteinsäure, lineare oder cyclische Kondensationsprodukte aus N,N'-Bis(2,2,6,6-Tetramethyl-4-piperidyl)-hexamethylendiamin und 4-tert-Octylamino-2,6-dichlor-1,3,5-s-triazin, Tris(2,2,6,6-tetramethyl-4-piperidyl)-nitrilotriacetat, Tetrakis(2,2,6,6-tetramethyl-4-piperidyl)-1,2,3,4-butantetraoat, 1,1'-(1,2-Ethandiyl)-bis(3,3,5,5-tetramethyl-piperazinon), 4-Benzoyl-2,2,6,6-tetramethylpiperidin, 4-Stearyloxy-2,2,6,6-tetramethylpiperidin, Bis(1,2,2,6,6-pentamethylpiperidyl)-2-n-butyl-2-(2-hydroxy-3,5-di-tert-butylbenzyl)-malonat, 3-n-Octyl-7,7,9,9-tetramethyl-1,3,8-triazaspiro[4.5]-decan-2,4-dion, Bis(1-octyloxy-2,2,6,6-tetramethylpiperidyl)-sebacat, Bis(1-octyloxy-2,2,6,6-tetramethylpiperidyl)-succinat, lineare oder cyclische Kondensationsprodukte aus N,N'-Bis-(2,2,6,6-tetramethyl-4-piperidyl)-hexamethylendiamin und 4-Morpholino-2,6-dichlor-1,3,5-triazin, Kondensationsprodukt aus 2-Chlor-4,6-di-(4-n-butylamino-2,2,6,6-tetramethylpiperidyl)-1,3,5-triazin und 1,2-Bis(3-aminopropylamino)ethan, Kondensationsprodukt aus 2-Chlor-4,6-di-(4-n-butylamino-1,2,2,6,6-pentamethylpiperidyl)-1,3,5-triazin und 1,2-Bis(3-aminopropylamino)-ethan, 8-Acetyl-3-dodecyl-7,7,9,9-tetramethyl-1,3,8-triazaspiro[4.5]decan-2,4-dion, 3-Dodecyl-1-(2,2,6,6-tetramethyl-4-piperidyl)pyrrolidin-2,5-dion, 3-Dodecyl-1-(1,2,2,6,6-pentamethyl-4-piperidyl)-pyrrolidin-2,5-dion, Gemisch von 4-Hexadecyloxy- und 4-Stearyloxy-2,2,6,6-tetramethylpiperidin, Kondensationsprodukt aus N,N'-Bis(2,2,6,6-tetramethyl-4-piperidyl)-hexamethylendiamin und 4-Cyclohexylamino-2,6-dichlor-1,3,5-triazin, Kondensationsprodukt aus 1,2-Bis(3-aminopropylamino)-ethan und 2,4,6-trichlor-1,3,5-triazin sowie 4-Butylamino-2,2,6,6-tetramethyl-piperidin (CAS Reg. No. [136504-96-6]); N-(2,2,6,6-tetramethyl-4-piperidyl)-n-dodecylsuccinimid, N-(1,2,2,6,6-pentamethyl-4-piperidyl)-n-dodecylsuccinimid, 2-Undecyl-7,7,9,9-tetramethyl-1-oxa-3,8-diaza-4-oxo-spiro[4,5]decan, Umsetzungsprodukt von 7,7,9,9-Tetramethyl-2-cycloundecyl-1-oxa-3,8-diaza-4-oxospiro-[4,5]decan und Epichlorhydrin, 1,1-Bis(1,2,2,6,6-pentamethyl-4-piperidyloxycarbonyl)-2-(4-methoxyphenyl)-ethen, N,N'-Bis-formyl-N,N'-bis(2,2,6,6-tetramethyl-4-piperidyl)-hexamethylendiamin, Diester der 4-Methoxy-methylen-malonsäure mit 1,2,2,6,6-Pentamethyl-4-hydroxy-piperidin, Poly[methylpropyl-3-oxy-4-(2,2,6,6-tetramethyl-4-piperidyl)]-siloxan, Reaktionsprodukt aus Maleinsäureanhydrid-α-olefin-copolymer und 2,2,6,6-Tetramethyl-4-aminopiperidin oder 1,2,2,6,6-Pentamethyl-4-aminopiperidin.
2.7. Oxalsäurediamide, wie z.B. 4,4'-Di-octyloxy-oxanilid, 2,2'-Diethoxy-oxanilid, 2,2'-Di-octyloxy-5,5'-di-tert-butyl-oxanilid, 2,2'-Di-dodecyloxy-5,5'-di-tert-butyl-oxanilid, 2-Ethoxy-2'-ethyl-oxanilid, N,N'-Bis(3-dimethylaminopropyl)-oxalamid, 2-Ethoxy-5-tert-butyl-2'-ethyloxanilid und dessen Gemisch mit 2-Ethoxy-2'-ethyl-5,4'-di-tert-butyl-oxanilid, Gemische von o-und p-Methoxy- sowie von o- und p-Ethoxy-di-substituierten Oxaniliden.
2.8. 2-(2-Hydroxyphenyl)-1,3,5-triazine, wie z.B. 2,4,6-Tris(2-hydroxy-4-octyloxyphenyl)-1,3,5-triazin, 2-(2-Hydroxy-4-octyloxyphenyl)-4,6-bis(2,4-dimethylphenyl)-1,3,5-triazin, 2-(2,4-Dihydroxyphenyl)-4,6-bis(2,4-dimethylphenyl)-1,3,5-triazin, 2,4-Bis(2-hydroxy-4-propyloxyphenyl)-6-(2,4-dimethylphenyl)-1,3,5-triazin, 2-(2-Hydroxy-4-octyloxyphenyl)-4,6-bis(4-methylphenyl)-1,3,5-triazin, 2-(2-Hydroxy-4-dodecyloxyphenyl)-4,6-bis(2,4-dimethylphenyl)-1,3,5-triazin, 2-(2-Hydroxy-4-tridecyloxyphenyl)-4,6-bis(2,4-dimethylphenyl)-1,3,5-triazin, 2-[2-Hydroxy-4-(2-hydroxy-3-butyloxy-propyloxy)phenyl]-4,6-bis(2,4-dimethylphenyl)-1,3,5-triazin, 2-[2-Hydroxy-4-(2-hydroxy-3-octyloxy-propyloxy)phenyl]-4,6-bis(2,4-dimethylphenyl)-1,3,5-triazin,2-[4-(dodecyloxy/tridecyloxy-2-hydroxypropoxy)-2-hydroxy-phenyl]-4,6-bis(2,4-dimethylphenyl)-1,3,5-triazin,2-[2-Hydroxy-4-(2-hydroxy-3-dodecyloxy-propoxy)phenyl]-4,6-bis(2,4-dimethylphenyl)-1,3,5-triazin, 2-(2-Hydroxy-4-hexyloxy)phenyl-4,6-diphenyl-1,3,5-triazin, 2-(2-Hydroxy-4-methoxyphenyl)-4,6-diphenyl-1,3,5-triazin, 2,4,6-Tris[2-hydroxy-4-(3-butoxy-2-hydroxy-propoxy)phenyl]-1,3,5-triazin, 2-(2-Hydroxyphenyl)-4-(4-methoxyphenyl)-6-phenyl-1,3,5-triazin, 2-{2-Hydroxy-4-[3-(2-ethylhexyl-1-oxy)-2-hydroxypropyloxy]phenyl}-4,6-bis(2,4-dimethylphenyl)-1,3,5-triazin.
3. Metalldesaktivatoren, wie z.B. N,N'-Diphenyloxalsäurediamid, N-Salicylal-N'-salicyloylhydrazin, N,N'-Bis(salicyloyl)-hydrazin, N,N'-Bis(3,5-di-tert-butyl-4-hydroxyphenylpropionyl)-hydrazin, 3-Salicyloylamino-1,2,4-triazol, Bis(benzyliden)-oxalsäuredihydrazid, Oxanilid, Isophthalsäure-dihydrazid, Sebacinsäure-bis-phenylhydrazid, N,N'-Diacetyl-adipinsäure-dihydrazid, N,N'-Bis-salicyloyl-oxalsäure-dihydrazid, N,N'-Bis-salicyloyl-thiopropionsäure-dihydrazid.
4. Phosphite und Phosphonite, wie z.B. Triphenylphosphit, Diphenylalkylphosphite, Phenyldialkylphosphite, Tris(nonylphenyl)-phosphit, Trilaurylphosphit, Trioctadecylphosphit, Distearyl-pentaerythritdiphosphit, Tris(2,4-di-tert-butylphenyl)-phosphit, Diisodecylpentaerythrit-diphosphit, Bis(2,4-di-tert-butylphenyl)-pentaerythritdiphosphit, Bis-(2,6-di-tert-butyl-4-methylphenyl)-pentaerythritdiphosphit, Bis-isodecyloxy-pentaerythritdiphosphit, Bis(2,4-di-tert-butyl-6-methylphenyl)-pentaerythritdiphosphit, Bis-(2,4,6-tri-tert-butylphenyl)-pentaerythritdiphosphit, Tristearyl-sorbit-triphosphit, Tetrakis(2,4-di-tert-butylphenyl)-4,4'-biphenylen-diphosphonit, 6-lsooctyloxy-2,4,8,10-tetra-tert-butyl-12H-dibenz[d,g]-1,3,2-dioxaphosphocin, 6-Fluor-2,4,8,10-tetra-tert-butyl-12-methyl-dibenz[d,g]-1,3,2-dioxaphosphocin, Bis(2,4-di-tertbutyl-6-methylphenyl)-methylphosphit, Bis(2,4-di-tert-butyl-6-methylphenyl)-ethylphosphit, 2,2',2"-Nitrilo[triethyl-tris(3,3',5,5'-tetra-tert-butyl-1,1'-biphenyl-2,2'-diyl)-phosphit], 2-Ethylhexyl-(3,3',5,5'-tetra-tert-butyl-1,1'-biphenyl-2,2'-diyl)-phosphit.
   Besonders bevorzugt werden die folgenden Phosphite verwendet:
   Tris(2,4-di-tert-butylphenyl)-phosphit (Irgafos®168, Ciba Spezialitätenchemie AG), Tris(nonylphenyl)-phosphit, 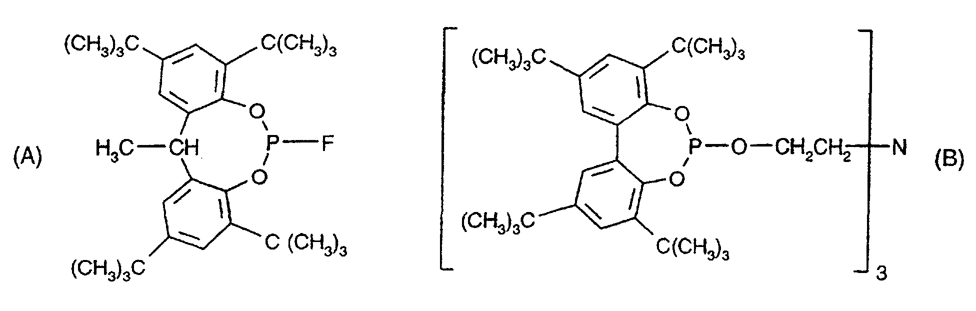 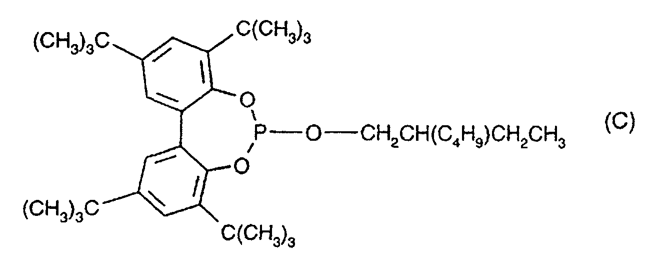 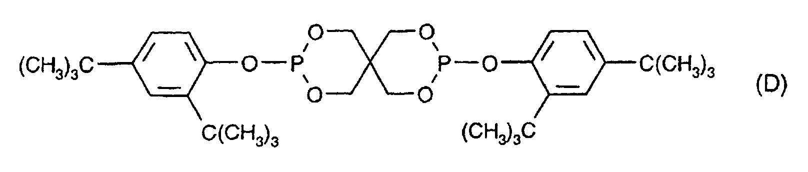 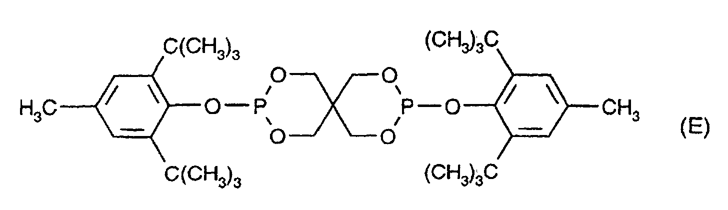 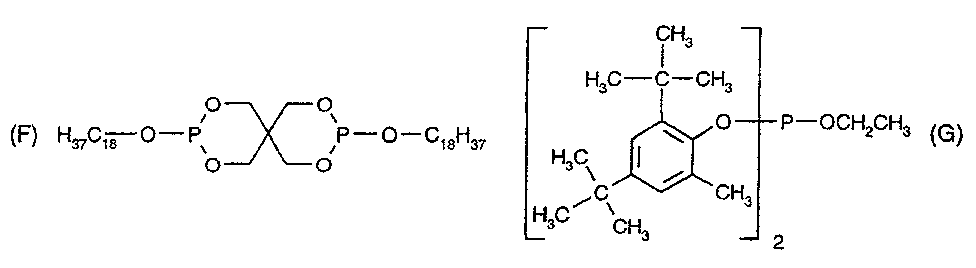
   Ganz besonders bevorzugt wird Tris(2,4-di-tert-butylphenyl)-phosphit [Irgafos®168, Ciba Spezialitätenchemie AG], Bis(2,4-di-tert-butyl-6-methylphenyl)-ethyl-phosphit [Irgafos®38, Ciba Spezialitätenchemie AG, Formel (G)] und 2,2',2"-Nitrilo-[triethyl-tris-(3,3',5,5'-tetra-tertbutyl-1,1'-biphenyl-2,2'-diyl)-phosphit [Irgafos®12, Ciba Spezialitätenchemie AG, Formel (B)].
5. Hydroxylamine wie z.B. N,N-Dibenzylhydroxylamin, N,N-diethylhydroxylamin, N,N-Dioctylhydroxylamin, N,N-Dilaurylhydroxylamin, N,N-Ditetradecylhydroxylamin, N,N-Dihexadecylhydroxylamin, N,N-Dioctadecylhydroxylamin, N-Hexadecyl-N-octadecylhydroxylamin, N-Heptadecyl-N-octadecylhydroxylamin, N,N-Dialkylhydroxylamin aus hydrierten Talgfettaminen.
6. Nitrone wie z.B. N-Benzyl-alpha-phenyl-nitron, N-Ethyl-alpha-methyl-nitron, N-Octyl-alphaheptyl-nitron, N-Lauryl-alpha-undecyl-nitron, N-Tetradecyl-alpha-tridecyl-nitron, N-Hexadecyl-alpha-pentadecyl-nitron, N-Octadecyl-alpha-heptadecyl-nitron, N-Hexadecyl-alphaheptadecyl-nitron, N-Octadecyl-alpha-pentadecyl-nitron, N-Heptadecyl-alpha-heptadecyl-nitron, N-Octadecyl-alpha-hexadecyl-nitron, Nitrone abgeleitet von N,N-Dialkylhydroxylaminen hergestellt aus hydrierten Talgfettaminen.
7. Thiosynergisten wie z.B. Thiodipropionsäure-di-laurylester oder Thiodipropionsäure-distearylester.
8. Peroxidzerstörende Verbindungen, wie z.B. Ester der β-Thio-dipropionsäure, beispielsweise der Lauryl-, Stearyl-, Myristyl- oder Tridecylester, Mercaptobenzimidazol, das Zinksalz des 2-Mercaptobenzimidazols, Zink-dibutyl-dithiocarbamat, Dioctadecyldisulfid, Pentaerythrit-tetrakis(β-dodecylmercapto)-propionat.
9. Benzofuranone bzw. Indolinone, wie z.B. in U.S. 4,325,863; U.S. 4,338,244; U.S.5,175,312, U.S. 5,216,052; U.S. 5,252,643; DE-A-4316611; DE-A-4316622; DE-A-4316876; EP-A-0589839 oder EP-A-0591102 beschrieben, oder 3-[4-(2-Acetoxyethoxy)phenyl]-5,7-di-tert-butyl-benzofuran-2-on, 5,7-Di-tert-butyl-3-[4-(2-stearoyloxyethoxy)-phenyl]-benzofuran-2-on, 3,3'-Bis[5,7-di-tert-butyl-3-(4-[2-hydroxyethoxy]phenyl)-benzofuran-2-on], 5,7-Di-tert-butyl-3-(4-ethoxyphenyl)benzofuran-2-on, 3-(4-Acetoxy-3,5-dimethylphenyl)-5,7-di-tert-butyl-benzofuran-2-on, 3-(3,5-Dimethyl-4-pivaloyloxy-phenyl)-5,7-di-tertbutyl-benzofuran-2-on, 3-(3,4-Dimethylphenyl)-5,7-di-tert-butyl-benzofuran-2-on, 3-(2,3-Dimethylphenyl)-5,7-di-tert-butyl-benzofuran-2-on.

Die Costabilisatoren werden beispielsweise in Konzentrationen von 0,01 bis 10 %, vorzugsweise 0,025 bis 3 Gew.-%, insbesondere 0,05 bis 3 Gew.-%, bezogen auf das Gewicht der Komponente (a) verwendet.

Besonders bevorzugte zusätzliche Additive sind phenolische Antioxidantien (Punkt 1 der Liste), sterisch gehinderte Amine (Punkt 2.6 der Liste), Phosphite und Phosphonite (Punkt 4 der Liste), Thiosynergisten (Punkt 7 der Liste) und/oder Benzofuran-2-one (Punkt 9 der Liste).

Die zusätzlichen Additive aus der Gruppe der Phosphite und Phosphonite haben bevorzugt einen Schmelzpunkt von 40-150°C, insbesondere 60-120°C, z.B. 70-110°C. Diese bevorzugten Schmelzbereiche erleichtern die Mischung mit den Komponenten (a) und (b).

Die genannten zusätzlichen Additive sind bekannte Verbindungen; viele davon sind kommerziell erhältlich.

Bei der Herstellung des organischen filmbildenden Bindemittels [Komponente (a)] durch Polymerisation oder Polykondensation von Monomeren kann die Komponente (b) und die oben aufgeführten zusätzlich weiteren Additive, den Monomeren vor der Polymerisation bereits zugemischt werden.

Die Pulverlackzusammensetzungen werden nach den üblichen Verfahren, insbesondere elektrostatisches Pulverspritzen, auf das Substrat aufgebracht. Das von der Spritzpistole abgesprühte Pulver wird an einer Hochspannungselektrode elektrostatisch aufgeladen und unter Wirkung der Luftströmung sowie der elektrostatischen Anziehungskraft an das Werkstück gezogen. Der Umgriff der Feldlinien sorgt dafür, dass auch Kanten und Rückseiten beschichtet werden. Ferner können die Pulverlackzusammensetzungen auch triboelektrisch auf die Substrate appliziert werden. Die aufgebrachten Partikel, die durch Coulombsche Kräfte haften, werden im Ofen zusammengeschmolzen und ausgehärtet. Die bevorzugten Einbrenntemperaturen liegen zwischen 130 und 230° C je nach der Reaktivität des filmbildenden Bindemittels (Harz/Härter-System).

Bevorzugte Substrate sind metallische Substrate, wie beispielsweise Eisen, Stahl, Kupfer, Zink, Zinn, Magnesium, Silicium, Titan oder Aluminium, sowie deren Legierungen.

Eine bevorzugte Ausführungsform der vorliegenden Erfindung ist die Verwendung der Komponente (b) als Stabilisator zur Verminderung der Verfärbung von thermisch, insbesondere in Gasöfen, härtbaren Pulverlackzusammensetzungen (Einbrennlacken).

Die vorliegende Erfindung betrifft auch ein Verfahren zur Verminderung der Verfärbung von thermisch härtbaren Pulverlackzusammensetzungen, das dadurch gekennzeichnet ist, dass man diesen mindestens eine Komponente (b) einverleibt oder auf diese aufbringt.

Ebenso betrifft die vorliegende Erfindung ein Verfahren zum Härten von Pulverlackzusammensetzungen enthaltend die Komponenten (a) und (b), dadurch gekennzeichnet, dass die Härtung in einem Gasofen durchgeführt wird.

Die nach den obigen Verfahren aufgebrachten und gehärteten Lackfilme werden in den Beispielen näher erläntert.

Die Herstellung einer Pulverlackzusammensetzung mit den erfindungsgemässen Komponenten (a) und (b) kann nach den üblichen Methoden erfolgen. Eine gute Beschreibung der Vorgänge und Maschinen ist in T.A. Misev's Buch: "Powder Coatings: Chemistry and Technology", Verlag J.Wiley & Sons, Chichester im Kapitel 5 zu finden.

In der Regel werden alle Komponenten der Pulverlackzusammensetzung ausgewogen und in einem geeigneten Mischer zusammengemischt. Hierfür werden Taumelmischer, Kegelmischer, Doppelkegelmischer, Horizontalmischer, Blenders sowie Rührwerke wie Planetenmischer verwendet.

Die Formulierung wird zunächst in einem geheizten Extruder verarbeitet damit eine möglichst homogene, geschmolzene Masse erhalten wird. Geignete Geräte hierfür sind Einzelwellen-Kokneter, Doppelschneckenextruder und Planetenextruder. Die Dosierung erfolgt meistens über einen Schneckenförderer, ein Förderband oder eine Schüttelrinne. Nach dem Extrudieren wird die heisse Masse ausgewalzt und gekühlt, z.B. auf einem Kühlband. Wenn die Masse erstarrt ist, wird sie zerbrochen und anschliessend gemahlen. Geeignete Mahlwerke sind Stiftmühlen, Ultrazentrifugalmühlen, Jetmühlen und ganz besonders Klassifiziermühlen. Im Anschluss wird das Pulver klassifiziert und bevorzugt gesiebt, wobei Hilfsmittel wie z.B. Kieselgel oder Aluminiumoxide in kleinen Mengen zugegeben werden können.

Kürzlich sind auch andere Pulverlackherstellungsverfahren (EP-B-368 851 oder WO-A-92/00342) bekannt geworden, welche sich auch für diese Erfindung anwenden lassen. Dabei wird die bereits vorgemischte Formulierung oder das Extrudat einem geheizten Drehrohr zugegeben und auf einem Drehteller herausgeschleudert. Am Rand des Tellers werden kleine, runde nahezu monodisperse Tropfen gebildet, die an gekühlter Luft erstarren bevor sie zu Boden fallen.

Ein neues Verfahren zur Herstellung von Pulverlackzusammensetzungen besteht darin, dass die Komponenten (a) und (b) mit superkritischem Kohlendioxid gemischt werden und anschliessend das Kohlendioxid durch Verdampfung entfernt wird (siehe auch U.S. Patente 4,414,370 oder 4,529,787). Auch für solche Herstellungsverfahren für Pulverlackzusammen-Setzungen sind die Stabilisatoren [Komponente (b)] der vorliegenden Erfindung bestens geeignet.

Die Applikation der Pulverlacke erfolgt nach den praxisüblichen Methoden. Es können z.B. Koronapistolen, sowie triboelektrische Spritzpistolen verwendet werden. Ferner sind alle Varianten des Wirbelsinterverfahrens mit und ohne elektrostatische Aufladung anwendbar. Für thermoplastische Pulverlacke sind auch Flammspritzverfahren anwendbar.

Das Einbrennen der Pulverlackzusammensetzung kann neben den in der vorliegenden Anmeldung im Vordergrund stehenden Gasöfen auch zusätzlich mittels Infrarotheizung oder durch elektrische Heizkörper erfolgen.

Die folgenden Beispiele erläutern die Erfindung weiter. Angaben in Teilen oder Prozenten beziehen sich auf das Gewicht.

### Beispiel 1: Herstellung der Verbindung (238) (Tabelle 5).

Zu einer Lösung von 4,39g (10,0 mMol) 2,2'-Ethyliden-bis(4,6-di-tert-butylphenol) [hergestellt beispielsweise gemäss EP-A-0 500 323, Beispiel 1] und 1,32g (13,0 mMol) Triethylamin in 50 ml Toluol wird unter Stickstoffatmosphäre bei 10°C innerhalb von 10 Minuten 0,80 ml (10,5 mMol) Acetylchlorid getropft. Nach Ende der Zugabe wird das Reaktionsgemisch während 2 Stunden bei Raumtemperatur gerührt. Das ausgefallene Triethylaminhydrochlorid wird abfiltriert und das Filtrat am Vakuumrotationsverdampfer eingeengt. Kristallisation des Rückstandes aus Ethanol liefert 3.3 g (69%) eines weissen Pulvers, Smp. 210-212°C (Verbindung (238), Tabelle 5). Analyse berechnet: C 79,95; H 10,06 %. Analyse gefunden: C 79,88; H 10,18 %.

In Analogie zu Beispiel 1 werden anstelle von Acetylchlorid mit Buttersäurechlorid, Decansäurechlorid und Laurinsäurechlorid die Verbindungen (240), (246) und (248) (Tabelle 5) erhalten. Die Verbindung (240) besitzt einen Smp. von 102-104°C. Analyse berechnet: C 80,26; H 10,30 %. Analyse gefunden: C 80,05; H 10,42 %. Die Verbindung (246) besitzt einen Smp. von 85-86°C. Analyse berechnet: C 81,03; H 10,88 %. Analyse gefunden: C 81,04; H 10,96 %. Die Verbindung (248) besitzt einen Smp. von 85-87°C. Analyse berechnet: C 81,23; H 11,04 %. Analyse gefunden: C 80,98; H 11,24 %.

### Beispiel 2: Herstellung der Verbindung (253) (Tabelle 5).

Zu einer Lösung von 15,42g (35.2 mMol) 2,2'-Ethyliden-bis(4,6-di-tert-butylphenol) [hergestellt beispielsweise gemäss EP-A-0 500 323, Beispiel 1] und 6,37ml (45,7 mMol) Triethylamin in 100ml Toluol wird bei Raumtemperatur eine Lösung von 5,86g (35,2mMol) trans-Zimtsäurechlorid in 30ml Toluol getropft. Nach Ende der Zugabe wird die erhaltene hellgelbe Suspension während 3 Stunden bei Raumtemperatur gerührt. Das ausgefallene Triethylaminhydrochlorid wird abfiltriert und das Filtrat am Vakuumrotationsverdampfer eingeengt. Kristallisation des Rückstandes aus Isopropanol liefert 18g (90%) eines weissen Pulvers, Smp. 195-198°C (Verbindung (253), Tabelle 5). Analyse berechnet: C 82,35; H 9,21 %. Analyse gefunden: C 82,38; H 9,29 %.

In Analogie zu Beispiel 2 wird anstelle von trans-Zimtsäurechlorid mit Crotonsäurechlorid die Verbindung (251) (Tabelle 5) erhalten. Die Verbindung (251) besitzt einen Smp. von 116-121°C. Analyse berechnet: C 80,58; H 9,95 %. Analyse gefunden: C 80,49; H 10,04 %.

### Beispiel 3: Herstellung der Verbindung (258) (Tabelle 5).

Eine Lösung von 8,94 g (16,0 mMol) Verbindung (259) (Tabelle 5) [hergestellt beispielsweise gemäss U.S. 5,616,780 Beispiele 1 bis 3) in 90 ml Essigester wird mit 0,9 g 5% Pd/C-Katalysator während einer Stunde bei 20°C hydriert. Anschliessend wird der Katalysator über Celite filtriert und das Filtrat am Vakuumrotationsverdampfer eingeengt. Kristallisation des Rückstandes aus 20 ml Essigester liefert 4,5 g (50%) eines weissen Pulvers, Smp. 169-174°C (Verbindung (258), Tabelle 5). Analyse berechnet: C 81,38; H 10,06 %. Analyse gefunden: C 80,76; H 9,49 %.

### Beispiel 4: Herstellung der Verbindung (265) (Tabelle 5).

a) Eine Lösung von 9.1 g (92,0 mMol) Maleinsäureanhydrid in 200ml Methanol wird während einer Stunde unter Rückfluss gerührt. Nach Abkühlen auf Raumtemperatur wird das Reaktionsgemisch am Vakuumrotationsverdampfer eingeengt. Der rohe Maleinsäuremono-methylester (farblose Flüssigkeit) wird in 200ml Toluol gelöst. Zu dieser Lösung wird 10 ml (136 mMol) Thionylchlorid gegeben, das Reaktionsgemisch langsam innerhalb von 40 Minuten auf 90°C erwärmt (HCI + SO₂ Entwicklung) und während 2 Stunden bei dieser Temperatur gerührt. Destillation des Ueberschusses an Thionylchlorid sowie des Toluols liefert 14 g (100%) des rohen Fumarsäurechlorid-mono-methylesters, welcher direkt weiter eingesetzt wird.
b) In einem 500 ml Sulfierkolben wird unter Stickstoffatmosphäre das in Beispiel (4a) beschriebene Säurechlorid (92,0 mMol) und 36 g (82,0 mMol) 2,2'-Ethyliden-bis(4,6-di-tertbutylphenol) [hergestellt beispielsweise gemäss EP-A-0 500 323, Beispiel 1] in 280 ml Toluol vorgelegt und auf 5°C abgekühlt. Zu dieser Lösung wird langsam 16,7 ml (120 mMol) Triethylamin getropft. Nach Ende der Zugabe wird das Reaktionsgemisch auf Raumtemperatur erwärmt und während 2 Stunden weitergerührt. Das ausgefallene Triethylaminhydrochlorid wird abfiltriert und das Filtrat am Vakuumrotationsverdampfer eingeengt. Chromatographie des Rückstandes an Kieselgel (Hexan/Toluol 19:1 bis 3:1) und Kristallisation der reinen Fraktionen aus Methanol liefert 24 g (48%) eines weissen Pulvers, Smp. 138-140°C, (Verbindung (265), Tabelle 5). Analyse berechnet: C 76,33; H 9,15 %. Analyse gefunden: C 76,22; H 9,39 %.

In Analogie zu Beispiel 4a/4b werden anstelle von Methanol mit Ethanol und 1-Octanol die Verbindungen (266) (Tabelle 5) und 632 (Tabelle 16) erhalten. Die Verbindung (266) besitzt einen Smp. von 132-134°C. Analyse berechnet: C 76,56; H 9,28 %. Analyse gefunden: C 76,44; H 9,26 %. Die Verbindung (632) besitzt einen Smp. von 70-73°C. Analyse berechnet: C 77,73; H 9,94 %. Analyse gefunden: C 78,02; H 10,10 %.

### Beispiel 5: Herstellung der Verbindung (269) (Tabelle 5).

In einem 250 ml Rundkolben werden 16,6g (38,0 mMol) 2,2'-Ethyliden-bis(4,6-di-tert-butylphenol) [hergestellt beispielsweise gemäss EP-A-0 500 323, Beispiel 1], 5,38 g (50,0 mMol) Triethylamin und 150 ml Toluol vorgelegt. Zu dieser Lösung wird bei 10°C 7,56 g (45,5 mMol) 3-(Chlorocarbonyl)-3-butensäuremethylester [Herstellung siehe beispielsweise B. R. Baker et al. J.Org.Chem. 17, 116-131 (1952)] getropft. Das Reaktionsgemisch wird auf Raumtemperatur erwärmt und während einer Stunde weitergerührt. Anschliessend wird das Reaktionsgemisch über Celite filtriert und das Filtrat am Vakuumrotationsverdampfer eingeengt. Kristallisation des Rückstandes aus Isopropanol liefert 15 g (72%) eines weiss-beigen Pulvers, Smp. 154-158°C (Verbindung (269), Tabelle 5). Analyse berechnet: C 76,05; H 9,48 %. Analyse gefunden: C 76,21; H 9,49 %.

### Beispiel 6: Herstellung der Verbindung (605) (Tabelle 15).

In einen 100 ml Rundkolben mit Thermometer, Magnetrührer und Kühler werden 37,2 g (85,0 mMol) 2,2'-Ethyliden-bis(4,6-di-tert-butylphenol) [hergestellt beispielsweise gemäss EP-A-0 500 323, Beispiel 1] und 12.47 g (46,0 mMol) Dodecandisäuredichlorid vorgelegt. Das Reaktionsgemisch wird auf 140°C erwärmt (HCI Entwicklung) und während 15 Stunden bei dieser Temperatur gerührt. Das Reaktionsgemisch wird abgekühlt und an Kieselgel mit dem Laufmittelsystem Hexan/Toluol chromatographiert. Die reinen Fraktionen werden vereinigt und am Vakuumrotationsverdampfer eingeengt. Es resultiert 23,6 g (48%) eines hellgelben amorphen Pulves. Der Schmelzbereich beträgt 74-79°C (Verbindung (605), Tabelle 15).

### Beispiel 7: Herstellung der Verbindung (610) (Tabelle 15).

In einem 100ml Rundkolben wurden unter Stickstoffatmosphäre 13,2 g (30,0 mMol) 2,2'-Ethyliden-bis(4,6-di-tert-butylphenol) [hergestellt beispielsweise gemäss EP-A-0 500 323, Beispiel 1], 7,6 g (75,0 mMol) Triethylamin und 80 ml Dichlorethan vorgelegt und auf 10°C abgekühlt. Zu dieser Lösung wird 2,1 ml (16,4 mMol) Fumarsäuredichlorid langsam zugetropft. Nach Ende der Zugabe wird die erhaltene dunkle Suspension auf 60°C erwärmt und während 7 Stunden bei dieser Temperatur weitergerührt. Anschliessend wird das Reaktionsgemisch über Celite filtriert und das Filtrat am Vakuumrotationsverdampfer eingeengt. Kristallisation des Rückstandes aus Hexan lieferte 4,4 g (31%) eines beigen Pulvers, Smp. 258-262°C, (Verbindung (610), Tabelle 15). Analyse berechnet: C 80,29; H 9,69 %. Analyse gefunden: C 80,55; H 9,78 %.

### Beispiel 8: Herstellung der Verbindung (617) (Tabelle 16).

In einem 200ml Rundkolben werden 6,58 g (15,0 mMol) 2,2'-Ethyliden-bis(4,6-di-tert-butylphenol) [hergestellt beispielsweise gemäss EP-A-0 500 323, Beispiel 1], 2,4 g (16,5 mMol) Acetylmilchsäurechlorid [Herstellung siehe beispielsweise P. Babin et al., Bull. Soc. Chim. Fr. 1982, II, 125-128] und 50 ml Dichlorethan vorgelegt. Zu dieser Lösung wird bei Raumtemperatur 2,7 ml (20,0 mMol) Triethylamin getropft. Die erhaltene Suspension wird während 15 Stunden bei Raumtemperatur nachgerührt. Anschliessend wird das Reaktionsgemisch über Celite filtriert und das Filtrat am Vakuumrotationsverdampfer eingeengt. Kristallisation des Rückstandes aus Methanol liefert 4,8 g (58%) eines weissen Pulvers, Smp. 106-114°C, (Verbindung (617), Tabelle 16). Analyse berechnet: C 76,05; H 9,40 %. Analyse gefunden: C 75,59; H 9,44 %.

### Beispiel 9: Herstellung der Verbindung (626) (Tabelle 16).

Zu einer unter Stickstoffatmosphäre gerührten Lösung von 1,38 g (10,0 mMol) Diethylphosphit in 20 ml Tetrahydrofuran wird bei 5°C 2 ml einer 1,6 molaren Butyllithium Lösung in Hexan getropft. Die Lösung wird während einer Stunde bei Raumtemperatur gerührt und anschliessend eine Lösung von 3,95 g (10,0 mMol) 2,2'-Methylen-bis(4-tert-butyl-6-methylphenol]-monoacrylat [Herstellung siehe beispielsweise U.S. 5,616,780, Beispiel 1] in 30 ml Tetrahydrofuran langsam zugetropft. Die erhaltene farblose Lösung wird während 4 Stunden bei Raumtemperatur gerührt. Anschliessend wird das Reaktionsgemisch auf wässrige, gesättigte Ammoniumchlorid-Lösung gegossen und mit Essigester mehrmals extrahiert. Die organischen Phasen werden vereinigt, über Natriumsulfat getrocknet und am Vakuumrotationsverdampfer eingeengt. Chromatographie des Rückstandes an Kieselgel mit dem Laufmittelsystem Hexan/Essigester 19:1 bis 9:1 liefert 3,3 g (48%) eines weissen Pulvers, Smp. 138-142°C, (Verbindung (626), Tabelle 16). Analyse berechnet: C 67,65; H 8,51 %. Analyse gefunden: C 67,93; H 8,49 %.

### Beispiel 10: Herstellung der Verbindung (627) (Tabelle 16).

In einem 50ml Rundkolben mit Magnetrührer, Kühler und Gasblasenzähler werden 2,35 g (4,0 mMol) 3-Chlorproplonsäure-2,4-di-tert-butyl-6-[1-(3,5-di-tert-butyl-2-hydroxyphenyl)-ethyl]-phenylester [Herstellung siehe beispielsweise EP-A-0 716 076, Beispiel 4a], 0,80 g (4,4 mMol) Triethylphosphit und 50 mg Natriumjodid vorgelegt und auf 125°C erwärmt. Das Reaktionsgemisch wird während einer Stunde bei dieser Temperatur weitergerührt (Ethylchorid Gasentwicklung). Das Reaktionsgemisch wird auf ca 60°C abgekühlt, mit 10 ml Hexan verdünnt und über Celite filtriert. Das Lösungsmittel wird zur Hälfte abdestilliert wobei das Produkt auskristallisiert. Filtration und Trocknung des Rückstandes am Hochvakuum liefert 1,6 g (64%) eines weissen Pulvers, Smp. 146-147°C, (Verbindung (627), Tabelle 16). Analyse berechnet: C 70,45; H 9,43 %. Analyse gefunden: C 70,19; H 9,55 %.

### Beispiel 11: Messung der Verfärbung von in Gasöfen gehärteten Pulverlacken auf Basis eines carboxyfunktionellen Polyesters.

Zur Herstellung der Pulverlackzusammensetzung auf Basis eines carboxyfunktionellen Polyesters werden die Komponenten 1 bis 5 (Formulierung ohne Additive) bzw. die Komponenten 1 bis 6 (Formulierung enthaltend die Stabilisatoren) in der angegebenen Reihenfolge eingesetzt (vgl. Tabelle 17).

**Tabelle 17:**

| | Beispiele (Mengenangabe in Gramm) | |
|---|---|---|
| Komponenten | 11a | 11b bis 11d |
| 1. Crylcoat® 360^{a)} | 472,8 | 472,8 |
| 2. Araldit® GT 7004^{b)} | 315,2 | 315,2 |
| 3. Resiflow® PV 88^{c)} | 9,6 | 9,6 |
| 4. Benzoin^{d)} | 2,4 | 2,4 |
| 5. Titandioxid Typ R-KB-5^{e)} | 400,0 | 400,0 |
| 6. Stabilisatoren (siehe Tabellen 1-16) | ― | 8,0 |
| Total: | 1200,0 | 1208,0 |

| | | |
|---|---|---|
| a) Crylcoat® 360 von der Firma UCB S.A., Drogenbos, Belgien (Polyester). | | |
| b) Araldit® GT 7004 von der Firma Ciba Spezialitätenchemie AG bedeutet ein Bisphenol-A-diglycidylether (Epoxy Harz). | | |
| c) Resiflow® PV 88 von der Firma Worlée Chemie GmbH, Lauenburg, Deutschland (Fliessmittel). | | |
| d) Benzoin von der Firma Fluka AG (Entgasungsmittel). | | |
| e) Titandioxid Typ R-KB-5 von der Firma Bayer AG, Leverkusen, Deutschland. | | |

Die so eingewogenen Komponenten werden unter Verwendung eines Planetenrührers gemischt. Anschliessend wird das Gemisch auf einem Buss PLK 46L Kokneter bei 125 Umdrehungen/Minute und 40°C (Welle und Einzugszone) und 80°C (Knetzone) extrudiert und ausgewalzt. Während des Extrudierens beträgt die Schmelztemperatur ca. 91°C. Die Pulverlackmasse wird mit einem "Tischcutter" grobzerkleinert und in einer Retsch ZM-1 Ultrazentrifugalmühle mit einem 0,75 mm Ringlochsieb und 15000 Umdrehungen/Minute gemahlen. Schliesslich wird das Pulver durch ein 125 µm Sieb auf einer Kreiselsiebmaschine gesiebt. Die durchschnittliche Teilchengrösse des spritzfertigen Pulvers beträgt ca. 30 µm.

Die fertige Pulverlackzusammensetzung wird mit einer ESB-Wagner triboelektrischen Becherpistole auf weisse "coil-coat" Aluminiumbleche in einer Schichtdicke von 120 µm gespritzt. Die beschichteten Bleche werden während einer Minute erhitzt damit die Pulverschicht schmilzt aber nicht härtet. Die beschichteten Bleche werden in einem Gasofen mit einem NO₂-Anteil von 80 ppm und einer Temperatur von 180°C während 15 Minuten eingebrannt und weitere 45 Minuten bei der gleichen Temperatur übergebrannt. Von den Proben wird der Yellowness Index (Yl) nach ASTM D 1925-70 bestimmt. Niedrige Yl-Werte bedeuten wenig Verfärbung, hohe Yl-Werte starke Verfärbung der Proben. Je geringer die Verfärbung, desto wirksamer ist der Stabilisator. Die Resultate sind in der Tabelle 18 zusammengefasst.

**Tabelle 18:**

| Härtung während 45 Minuten im Gasofen bei 180°C | | | |
|---|---|---|---|
| Beispiele | Stabilisator | Yellowness Index nach | |
| | | 15 Minuten | 60 Minuten |
| Beispiel 11a^{f)} | ― | 4,5 | 5,0 |
| Beispiel 11b^{f)} | Irganox® 1076^{h)} | 6,0 | 7,1 |
| Beispiel 11c^{g)} | Verbindung (246) | 4,0 | 4,6 |
| Beispiel 11d^{g)} | Verbindung (263) | 4,2 | 4,6 |

| | | | |
|---|---|---|---|
| f) Vergleichsbeispiele. | | | |
| g) erfindungsgemässe Beispiele. | | | |
| h) Irganox® 1076 (Ciba Spezialitätenchemie AG) bedeutet eine Verbindung der Formel A | | | |

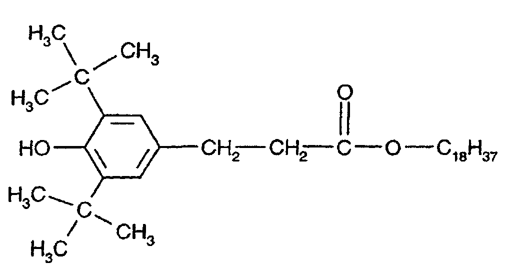

(A), Irganox® 1076

### Beispiel 12: Messung der Verfärbung von gehärteten Pulverlacken auf Basis eines carboxyfunktionellen Polyesters mit Araldit® PT910.

Zur Herstellung der Pulverlackzusammensetzung auf Basis eines carboxyfunktionellen Polyesters mit Araldit® PT910 werden die Komponenten 1 bis 5 (Formulierung ohne Additive) bzw. die Komponenten 1 bis 6 (Formulierung enthaltend die Stabilisatoren) in der angegebenen Reihenfolge eingesetzt (vgl. Tabelle 19).

**Tabelle 19:**

| Komponenten | Beispiele (Mengenangabe in Gramm) | |
|---|---|---|
| | 12a | 12b bis 12f |
| 1. Alftalat® 9936/A^{a)} | 893 | 893 |
| 2. Araldit® PT910^{b)} | 83 | 83 |
| 3. Resiflow® PV 88^{c)} | 20 | 20 |
| 4. Benzoin^{d)} | 4 | 4 |
| 5. Titandioxid Typ 2160^{e)} | 500 | 500 |
| 6. Stabilisatoren (siehe Tabellen 1-16) | ― | 8,93 |
| Total: | 1500 | 1508,9 |

| | | |
|---|---|---|
| a) Alftalat® 9936/A ist ein carboxyfunktioneller Polyester von der Firma Vianova Resins. | | |
| b) Araldit® PT910 von der Firma Ciba Spezialitätenchemie AG bedeutet einen polyfunktionellen Epoxidhärter bestehend aus einem Gemisch der Glycidylether von Terephthalsäure und Trimellithsäure. | | |
| c) Resiflow® PV 88 von der Firma Worlée Chemie GmbH, Lauenburg, Deutschland (Fliessmittel). | | |
| d) Benzoin von der Firma Fluka AG (Entgasungsmittel). | | |
| e) Titandioxid Typ 2160 von der Firma Kronos Titan International, Leverkusen, Deutschland. | | |

Die so eingewogenen Komponenten werden unter Verwendung eines Planetenrührers gemischt. Anschliessend wird das Gemisch auf einem Buss PLK 46L Kokneter bei 125 Umdrehungen/Minute und 40°C (Welle und Einzugszone) und 80°C (Knetzone) extrudiert und ausgewalzt. Während des Extrudierens beträgt die Schmelztemperatur ca. 91°C. Die Pulverlackmasse wird mit einem "Tischcutter" grobzerkleinert und in einer Retsch ZM-1 Ultrazentrifugalmühle mit einem 0,75 mm Ringlochsieb und 15000 Umdrehungen/Minute gemahlen. Schliesslich wird das Pulver durch ein 125 um Sieb auf einer Kreiselsiebmaschine gesiebt. Die durchschnittliche Teilchengrösse des spritzfertigen Pulvers beträgt ca. 30 µm.

Die fertige Pulverlackzusammensetzung wird mit einer ESB-Wagner triboelektrischen Becherpistole auf weisse "coil-coat" Aluminiumbleche in einer Schichtdicke von 150 µm gespritzt. Die beschichteten Bleche werden während einer Minute erhitzt damit die Pulverschicht schmilzt aber nicht härtet. Die eine Hälfte der beschichteten Bleche wird in einem Gasofen mit einem NO₂-Anteil von 80 ppm und einer Temperatur von 180°C während 15 Minuten eingebrannt und weitere 30 Minuten bei der gleichen Temperatur übergebrannt.Die andere Hälfte der beschichteten Bleche wird in einem Elektroofen bei bei einer Temperatur von 180°C während 15 Minuten eingebrannt und weitere 30 Minuten bei der gleichen Temperatur übergebrannt. Die Farbe der Proben nach dem Einbrennen wird mit einem Spektrophotometer gemessen und b* als Mass der Vergilbung genommen. Hohe b* Werte bedeuten eine hohe Vergilbung. Je geringer die Verfärbung, desto wirksamer ist der Stabilisator. Die Resultate sind in der Tabelle 20 zusammengefasst.

**Tabelle 20:**

| Härtung während 45 Minuten bei 180°C | | | |
|---|---|---|---|
| | | b* nach 45 Min./180°C | |
| Beispiele | Stabilisator | Elektroofen | Gasofen |
| Beispiel 12a^{f)} | ― | 1,17 | 1,50 |
| Beispiel 12b^{g)} | Verbindung (246) | 1,07 | 1,30 |
| Beispiel 12c^{g)} | Verbindung (240) | 1,06 | 1,40 |
| Beispiel 12d^{g)} | Verbindung (634) | 1,01 | 1,36 |
| Beispiel 12e^{g)} | Verbindung (238) | 1,09 | 1,40 |
| Beispiel 12f^{g)} | Verbindung (110) | 0,97 | 1,33 |

| | | | |
|---|---|---|---|
| f) Vergleichsbeispiel. | | | |
| g) erfindungsgemässe Beispiele. | | | |

### Beispiel 13: Messung der Verfärbung von gehärteten Pulverlacken auf Basis eines carboxyfunktionellen Polyesters mit Araldit® PT910.

In Analogie zu Beispiel 12 werden die folgenden Pulverlackzusammensetzungen gemäss Tabelle 21 hergestellt.

**Tabelle 21:**

| | Beispiele (Mengenangabe in Gramm) | |
|---|---|---|
| Komponenten | 13a | 13b und 13c |
| 1. Alftalat® 9936/A^{a)} | 904 | 895 |
| 2. Araldit® PT910^{b)} | 84 | 83 |
| 3. Resiflow® PV 88^{c)} | 10 | 10 |
| 4. Benzoin^{d)} | 2 | 2 |
| 5. Titandioxid Typ 2160^{e)} | 500 | 500 |
| 6. Stabilisatoren (siehe Tabellen 1-16) | ― | 10 |
| Total: | 1500 | 1500 |
| Fussnoten a) bis e) siehe Ende von Tabelle 19. | | |

Analog Beispiel 12 wird die fertige Pulverlackzusammensetzung triboelektrisch auf weisse "coil-coat" Aluminiumbleche in einer Schichtdicke von 90 um gespritzt. Die eine Hälfte der beschichteten Bleche wird in einem Gasofen mit einem NO₂-Anteil von 80 ppm und einer Temperatur von 180°C während 15 Minuten eingebrannt und weitere 20 Minuten bei einer Temperatur von 215°C übergebrannt.Die andere Hälfte der beschichteten Bleche wird in einem Elektroofen bei bei einer Temperatur von 180°C während 15 Minuten eingebrannt und weitere 20 Minuten bei einer Temperatur von 215°C übergebrannt. Die Farbe der Proben nach dem Einbrennen wird mit einem Spektrophotometer gemessen und b* als Mass der Vergilbung genommen. Hohe b* Werte bedeuten eine hohe Vergilbung. Je geringer die Verfärbung, desto wirksamer ist der Stabilisator. Die Resultate sind in der Tabelle 22 zusammengefasst.

**Tabelle 22:**

| Härtung während 20 Minuten bei 215°C | | | |
|---|---|---|---|
| | | b* nach 20 Min./215°C | |
| Beispiele | Stabilisator | Elektroofen | Gasofen |
| Beispiel 13a^{f)} | ― | 1,48 | 2,92 |
| Beispiel 12b^{g)} | Verbindung (246) | 1,20 | 1,64 |
| Beispiel 12c^{g)} | Verbindung (240) | 1,20 | 1,66 |

| | | | |
|---|---|---|---|
| f) Vergleichsbeispiel. | | | |
| g) erfindungsgemässe Beispiele. | | | |

## Patentansprüche

1. Pulverlackzusammensetzung enthaltend
a) ein organisches filmbildendes Bindemittel, und
b) als Stabilisator mindestens eine Verbindung der Formel I 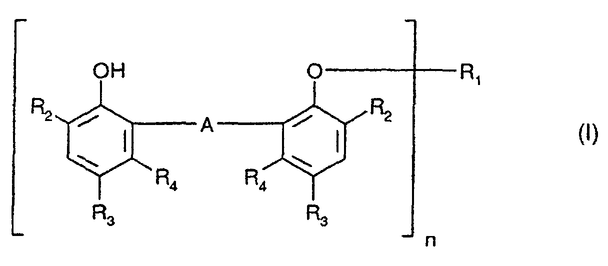 worin, wenn n 1 ist,
R₁ Wasserstoff, 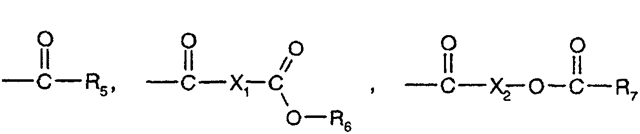 oder 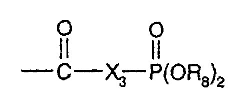 darstellt, und
wenn n 2 ist, 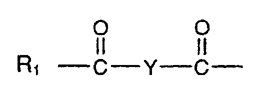 bedeutet,
A eine direkte Bindung, Schwefel, 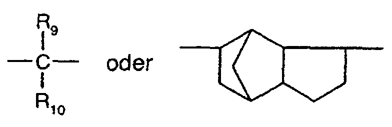 darstellt,
X₁ eine direkte Bindung, C₁-C₂₄-Alkylen, durch Sauerstoff, Schwefel oder 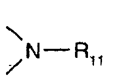 unterbrochenes C₂-C₂₄-Alkylen; C₂-C₂₄-Alkenylen, C₂-C₂₀-Alkyliden, C₇-C₂₀-Phenylalkyliden,
C₅-C₁₂-Cycloalkylen, C₅-C₁₂-Cycloalkenylen, C₇-C₈-Bicycloalkylen, unsubstituiertes oder durch C₁-C₄-Alkyl substituiertes Phenylen, 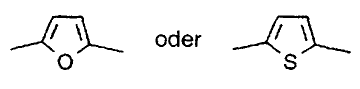 bedeutet,
X₂ C₁-C₂₄-Alkylen, durch Sauerstoff, Schwefel oder 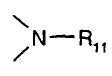 unterbrochenes C₂-C₂₄-Alkylen; C₂-C₂₄-Alkenylen, C₂-C₂₀-Alkyliden, C₇-C₂₀-Phenylalkyliden, C₅-C₁₂-Cycloalkylen,
C₅-C₁₂-Cycloalkenylen, C₇-C₈-Bicycloalkylen, unsubstituiertes oder durch C₁-C₄-Alkyl substituiertes Phenylen, 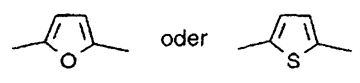 darstellt,
X₃ C₁-C₂₄-Alkylen, C₂-C₂₀-Alkyliden, C₇-C₂₀-Phenylalkyliden oder C₅-C₁₂-Cycloalkylen bedeutet,
Y eine direkte Bindung, C₁-C₂₄-Alkylen, durch Sauerstoff, Schwefel oder 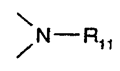 unterbrochenes C₂-C₂₄-Alkylen; C₂-C₂₄-Alkenylen, C₂-C₂₀-Alkyliden, C₇-C₂₀-Phenylalkyliden,
C₅-C₁₂-Cycloalkylen, C₅-C₁₂-Cycloalkenylen, C₇-C₈-Bicycloalkylen, unsubstituiertes oder durch C₁-C₄-Alkyl substituiertes Phenylen, 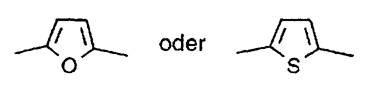 darstellt,
R₂ und R₃ unabhängig voneinander C₁-C₂₅-Alkyl, unsubstituiertes oder durch C₁-C₄-Alkyl substituiertes C₅-C₁₂-Cycloalkyl; C₇-C₉-Phenylalkyl, unsubstituiertes oder durch C₁-C₄-Alkyl substituiertes Phenyl darstellen;
R₄ Wasserstoff oder Methyl bedeutet,
R₅ C₁-C₂₅-Alkyl, durch Sauerstoff, Schwefel oder 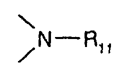 unterbrochenes C₂-C₂₅-Alkyl;
C₂-C₂₄-Alkenyl, unsubstituiertes oder am Phenylring mit Halogen, C₁-C₄-Alkyl, C₁-C₄-Alkoxy oder C₁-C₄-Alkylthio substituiertes C₈-C₃₀-Phenylalkenyl; unsubstituiertes oder durch C₁-C₄-Alkyl substituiertes C₅-C₁₂-Cycloalkyl; unsubstituiertes oder am Phenylring mit Halogen, C₁-C₄-Alkyl, C₁-C₄-Alkoxy oder C₁-C₄-Alkylthio substituiertes C₈-C₃₀-Phenylalkyl; unsubstituiertes oder durch Halogen, C₁-C₄-Alkyl, C₁-C₄-Alkoxy oder C₁-C₄-Alkylthio substituiertes Phenyl; 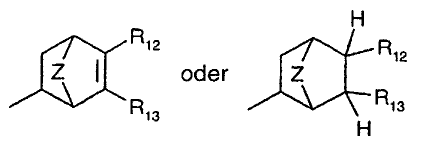 darstellt,
R₆ C₁-C₂₅-Alkyl, durch Sauerstoff, Schwefel oder 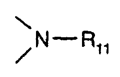 unterbrochenes C₂-C₂₅-Alkyl;
C₂-C₂₄-Alkenyl, unsubstituiertes oder durch C₁-C₄-Alkyl substituiertes C₅-C₁₂-Cycloalkyl; C₇-C₈-Phenylalkyl, unsubstituiertes oder durch C₁-C₄-Alkyl, C₁-C₄-Alkoxy oder C₁-C₄-Alkylthio substituiertes Phenyl bedeutet;
R₇ C₁-C₂₅-Alkyl, durch Sauerstoff, Schwefel oder 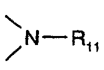 unterbrochenes C₂-C₂₅-Alkyl;
C₂-C₂₄-Alkenyl, unsubstituiertes oder am Phenylring mit Halogen, C₁-C₄-Alkyl, C₁-C₄-Alkoxy oder C₁-C₄-Alkylthio substituiertes C₈-C₃₀-Phenylalkenyl; unsubstituiertes oder durch C₁-C₄-Alkyl substituiertes C₅-C₁₂-Cycloalkyl; unsubstituiertes oder am Phenylring mit Halogen, C₁-C₄-Alkyl, C₁-C₄-Alkoxy oder C₁-C₄-Alkylthio substituiertes C₉-C₃₀-Phenylalkyl; unsubstituiertes oder durch C₁-C₄-Alkyl, C₁-C₄-Alkoxy oder C₁-C₄-Alkylthio substituiertes Phenyl darstellt;
R₈ C₁-C₂₅-Alkyl bedeutet,
R₉ und R₁₀ unabhängig voneinander Wasserstoff, CF₃, C₁-C₂₅-Alkyl oder Phenyl darstellen, oder R₉ und R₁₀ zusammen mit dem Kohlenstoffatom, an das sie gebunden sind, einen unsubstituierten oder durch 1 bis 3 C₁-C₄-Alkyl substituierten C₅-C₁₂-Cycloalkylidenring bilden;
R₁₁ Wasserstoff oder C₁-C₁₈-Alkyl bedeutet,
R₁₂ Wasserstoff oder C₁-C₄-Alkyl darstellt,
R₁₃ Wasserstoff oder C₁-C₄-Alkyl bedeutet,
Z Sauerstoff, Methylen, Ethyliden oder 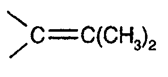 darstellt, und
n 1 oder 2 bedeutet.

2. Pulverlackzusammensetzung gemäss Anspruch 1, worin die Komponente (b) eine Verbindung der Formel I darstellt, worin
X₁ eine direkte Bindung, C₁-C₁₈-Alkylen, durch Sauerstoff, Schwefel oder 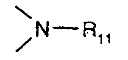 unterbrochenes C₂-C₁₈-Alkylen; C₂-C₁₈-Alkenylen, C₂-C₁₂-Alkyliden, C₇-C₁₂-Phenylalkyliden, C₅-C₈-Cycloalkylen, C₅-C₈-Cycloalkenylen, Phenylen, 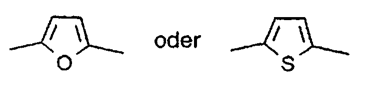 bedeutet,
X₂ C₁-C₁₈-Alkylen, durch Sauerstoff, Schwefel oder 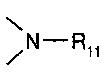 unterbrochenes C₂-C₁₈-Alkylen; C₂-C₁₈-Alkenylen, C₂-C₁₂-Alkyliden, C₇-C₁₂-Phenylalkyliden, C₅-C₈-Cycloalkylen, C₅-C₈-Cycloalkenylen, Phenylen, 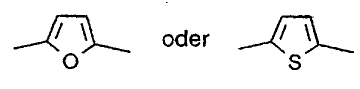 darstellt,
X₃ C₁-C₁₈-Alkylen, C₂-C₁₂-Alkyliden, C₇-C₁₂-Phenylalkyliden oder C₅-C₈-Cycloalkylen bedeutet,
Y eine direkte Bindung, C₁-C₁₈-Alkylen, durch Sauerstoff, Schwefel oder 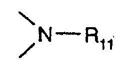 unterbrochenes C₂-C₁₈-Alkylen; C₂-C₁₈-Alkenylen, C₂-C₁₂-Alkyliden, C₇-C₁₂-Phenylalkyliden, C₅-C₈-Cycloalkylen, C₅-C₈-Cycloalkenylen, Phenylen, 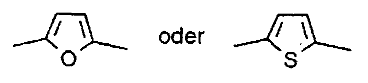 darstellt,
R₂ und R₃ unabhängig voneinander C₁-C₁₈-Alkyl, unsubstituiertes oder durch C₁-C₄-Alkyl substituiertes C₅-C₈-Cycloalkyl; C₇-C₉-Phenylalkyl oder Phenyl darstellen,
R₄ Wasserstoff oder Methyl bedeutet,
R₅ C₁-C₁₈-Alkyl, durch Sauerstoff, Schwefel oder 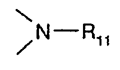 unterbrochenes C₂-C₁₈-Alkyl;
C₂-C₁₈-Alkenyl, unsubstituiertes oder am Phenylring mit Halogen, C₁-C₄-Alkyl, C₁-C₄-Alkoxy oder C₁-C₄-Alkylthio substituiertes C₈-C₁₈-Phenylalkenyl; C₅-C₈-Cycloalkyl, unsubstituiertes oder am Phenylring mit Halogen, C₁-C₄-Alkyl, C₁-C₄-Alkoxy oder C₁-C₄-Alkylthio substituiertes C₈-C₁₈-Phenylalkyl; unsubstituiertes oder durch Halogen, C₁-C₄-Alkyl, C₁-C₄-Alkoxy oder C₁-C₄-Alkylthio substituiertes Phenyl; 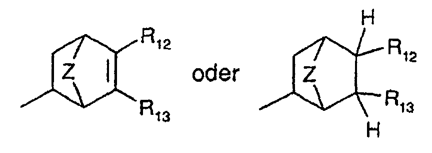 darstellt,
R₆ C₁-C₁₈-Alkyl, durch Sauerstoff, Schwefel oder 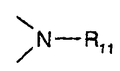 unterbrochenes C₂-C₁₈-Alkyl;
C₂-C₁₈-Alkenyl, C₅-C₈-Cycloalkyl, C₇-C₉-Phenylalkyl oder Phenyl bedeutet,
R₇ C₁-C₁₈-Alkyl, durch Sauerstoff, Schwefel oder 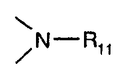 unterbrochenes C₂-C₁₈-Alkyl;
C₂-C₁₈-Alkenyl, C₈-C₁₈-Phenylalkenyl, C₅-C₈-Cycloalkyl, C₉-C₁₈-Phenylalkyl oder Phenyl darstellt,
R₈ C₁-C₁₈-Alkyl bedeutet,
R₉ und R₁₀ unabhängig voneinander Wasserstoff, C₁-C₁₈-Alkyl oder Phenyl darstellen, oder
R₉ und R₁₀ zusammen mit dem Kohlenstoffatom, an das sie gebunden sind, einen C₅-C₈-Cycloalkylidenring bilden;
R₁₁ Wasserstoff oder C₁-C₁₂-Alkyl bedeutet,
R₁₂ Wasserstoff oder C₁-C₄-Alkyl darstellt,
R₁₃ Wasserstoff oder C₁-C₄-Alkyl bedeutet,
Z Sauerstoff, Methylen oder Ethyliden darstellt, und
n 1 oder 2 bedeutet.

3. Pulverlackzusammensetzung gemäss Anspruch 1, worin die Komponente (b) eine Verbindung der Formel I darstellt, worin
X₁ C₂-C₁₂-Alkylen, durch Sauerstoff unterbrochenes C₂-C₁₂-Alkylen; C₂-C₁₂-Alkenylen oder Phenylen bedeutet,
X₂ C₁-C₁₂-Alkylen, durch Sauerstoff unterbrochenes C₂-C₁₂-Alkylen; C₂-C₁₂-Alkenylen, C₂-C₈-Alkyliden oder Phenylen darstellt,
X₃ C₁-C₁₂-Alkylen bedeutet,
Y eine direkte Bindung, C₁-C₁₈-Alkylen, durch Sauerstoff unterbrochenes C₂-C₁₈-Alkylen; C₂-C₁₂-Alkenylen, Cyclohexylen oder Phenylen darstellt,
R₂ und R₃ unabhängig voneinander C₁-C₁₂-Alkyl, unsubstituiertes oder durch Methyl substituiertes Cyclohexyl; C₇-C₉-Phenylalkyl oder Phenyl darstellen,
R₄ Wasserstoff oder Methyl bedeutet,
R₅ C₁-C₁₈-Alkyl, durch Sauerstoff unterbrochenes C₂-C₁₂-Alkyl; C₂-C₁₄-Alkenyl, unsubstituiertes oder am Phenylring mit Chlor, Methyl oder Methoxy substituiertes C₈-C₁₄-Phenylalkenyl; Cyclohexyl, unsubstituiertes oder am Phenylring mit Chlor, Methyl oder Methoxy substituiertes C₈-C₁₄-Phenylalkyl; unsubstituiertes oder durch Chlor, Methyl oder Methoxy substituiertes Phenyl; 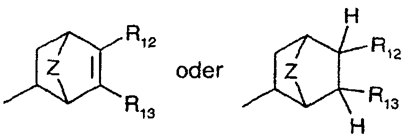 darstellt,
R₆ C₁-C₁₂-Alkyl, durch Sauerstoff unterbrochenes C₂-C₁₂-Alkyl; oder C₅-C₈-Cycloalkyl bedeutet,
R₇ C₁-C₁₂-Alkyl, durch Sauerstoff unterbrochenes C₂-C₁₂-Alkyl; oder Phenyl darstellt,
R₈ C₁-C₁₂-Alkyl bedeutet,
R₉ und R₁₀ unabhängig voneinander Wasserstoff, C₁-C₁₂-Alkyl oder Phenyl darstellen, oder
R₉ und R₁₀ zusammen mit dem Kohlenstoffatom, an das sie gebunden sind, einen Cyclohexylidenring bilden;
R₁₂ Wasserstoff oder Methyl darstellt,
R₁₃ Wasserstoff oder Methyl bedeutet,
Z Sauerstoff oder Methylen darstellt, und
n 1 oder 2 bedeutet.

4. Pulverlackzusammensetzung gemäss Anspruch 1, worin die Komponente (b) eine Verbindung der Formel I darstellt, worin
X₁ Ethylen oder C₂-C₃-Alkenylen bedeutet,
X₂ Methylen oder Ethyliden darstellt,
X₃ Ethylen bedeutet,
Y eine direkte Bindung, C₁-C₁₂-Alkylen, C₂-C₄-Alkenylen, Cyclohexylen oder Phenylen darstellt,
R₂ C₁-C₅-Alkyl bedeutet,
R₃ C₁-C₅-Alkyl darstellt,
R₄ Wasserstoff oder Methyl bedeutet,
R₅ C₁-C₁₂-Alkyl, durch Sauerstoff unterbrochenes C₄-C₈-Alkyl; C₂-C₁₀-Alkenyl, unsubstituiertes oder am Phenylring mit Methoxy substituiertes C₈-C₁₀-Phenylalkenyl; Cyclohexyl, unsubstituiertes oder durch Chlor oder Methoxy substituiertes Phenyl; 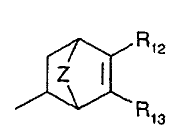 oder 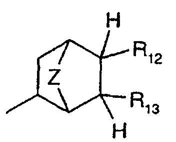 darstelft,
R₆ C₁-C₈-Alkyl oder Cyclohexyl bedeutet,
R₇ C₁-C₄-Alkyl darstellt,
R₈ C₁-C₄-Alkyl bedeutet,
R₉ Wasserstoff darstellt,
R₁₀ Wasserstoff oder Methyl bedeutet,
R₁₂ Wasserstoff oder Methyl darstellt,
R₁₃ Wasserstoff oder Methyl bedeutet,
Z Sauerstoff oder Methylen darstellt, und
n 1 oder 2 bedeutet.

5. Pulverlackzusammensetzung gemäss Anspruch 1, worin die Komponente (b) eine Verbindung der Formel I darstellt, worin
wenn n 1 ist, 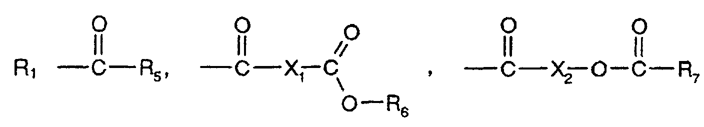 oder 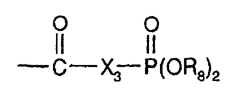 darstellt, und
wenn n 2 ist, 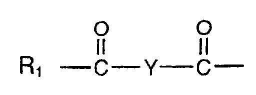 bedeutet,
A eine direkte Bindung oder 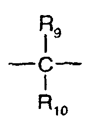 darstellt,
X₁ Ethylen oder C₂-C₃-Alkenylen bedeutet,
X₂ Methylen oder Ethyliden darstellt,
X₃ Ethylen bedeutet,
Y C₆-C₁₀-Alkylen oder Vinylen darstellt,
R₂ tert-Butyl bedeutet,
R₃ C₁-C₄-Alkyl darstellt,
R₄ Wasserstoff bedeutet,
R₅ C₁-C₁₂-Alkyl, durch Sauerstoff unterbrochenes C₄-C₈-Alkyl; C₂-C₄-Alkenyl, C₈-C₁₀-Phenylalkenyl oder 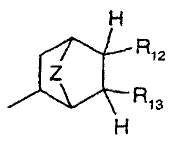 darstellt,
R₆ C₁-C₄-Alkyl bedeutet,
R₇ C₁-C₄-Alkyl darstellt,
R₈ C₁-C₄-Alkyl bedeutet,
R₉ Wasserstoff darstellt,
R₁₀ Wasserstoff oder Methyl bedeutet,
R₁₂ Wasserstoff darstellt,
R₁₃ Wasserstoff bedeutet,
Z Methylen darstellt, und
n 1 oder 2 bedeutet.

6. Pulverlackzusammensetzung gemäss Anspruch 1, worin die Komponente (a) ein Epoxidharz, ein Polyester-Hydroxyalkylamid, ein Polyester-Glykoluril, ein Epoxid-Polyesterharz, ein Polyester-Triglycidylisocyanurat, ein hydroxyfuntionelles Polyester-blockiertes Polyisocyanat, ein hydroxyfunktionelles Polyester-Uretdion, ein Acrylatharz mit Härter oder eine Mischung solcher Harze ist.

7. Pulverlackzusammensetzung gemäss Anspruch 1, enthaltend neben den Komponenten (a) und (b) zusätzlich weitere Additive.

8. Pulverlackzusammensetzung gemäss Anspruch 7, enthaltend als weitere Additive zusätzlich eine oder mehrere Komponenten aus der Gruppe der Pigmente, Farbstoffe, Füllstoffe, Verlaufshilfsmittel, Entgasungsmittel, Ladungssteuermittel, optische Aufheller, Haftungsverbesserer, Antioxidantien, Lichtstabilisatoren, Härtungskatalysatoren, Korrosionsschutzmittel oder Photoinitiatoren.

9. Pulverlackzusammensetzung gemäss Anspruch 7, enthaltend als weitere Additive phenolische Antioxidantien, sterisch gehinderte Amine, organische Phosphite oder Phosphonite; Thiosynergisten und/oder Benzofuran-2-one.

10. Pulverlackzusammensetzung gemäss Anspruch 1, worin die Komponente (b) in einer Menge von 0,001 bis 10 % bezogen auf das Gewicht der Komponente (a) vorliegt.

11. Pulverlackzusammensetzung gemäss Anspruch 1, worin die Pulverlackzusammensetzung eine thermisch härtbare Pulverlackzusammensetzung darstellt.

12. Pulverlackzusammensetzung gemäss Anspruch 1, worin die Pulverlackzusammensetzung eine in Gasöfen härtbare Pulverlackzusammensetzung darstellt.

13. Bei der Härtung mit aus Verbrennungsgasen stammenden Stickoxiden in Kontakt stehende Pulverlackzusammensetzung enthaltend die Komponenten (a) und (b) gemäss Anspruch 1.

14. Verwendung der in Anspruch 1 definierten Komponente (b) als Stabilisator zur Verminderung der Verfärbung von thermisch härtbaren Pulverlackzusammensetzungen (Einbrennlacken).

15. Verwendung gemäss Anspruch 14, worin die thermische Härtung in einem Gasofen durchgeführt wird.

16. Verfahren zur Verminderung der Verfärbung von thermisch härtbaren Pulverlackzusammensetzungen, **dadurch gekennzeichnet, dass** man diesen mindestens eine Komponente (b) gemäss Anspruch 1 einverleibt oder auf diese aufbringt.

17. Verfahren zum Härten von Pulverlackzusammensetzungen enthaltend die Komponenten (a) und (b) gemäss Anspruch 1, **dadurch gekennzeichnet, dass** die Härtung in einem Gasofen durchgeführt wird.

## Claims

1. A powder coating composition, which comprises
a) an organic film-forming binder, and
b) as stabiliser at least one compound of formula I 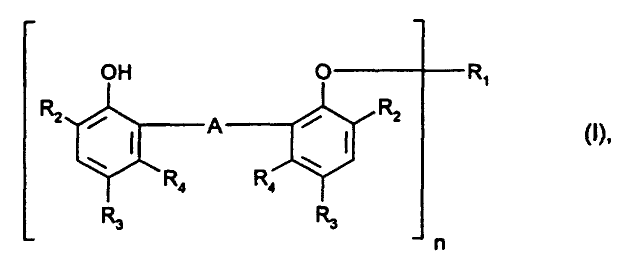
wherein, if n = 1,
R₁ is hydrogen, 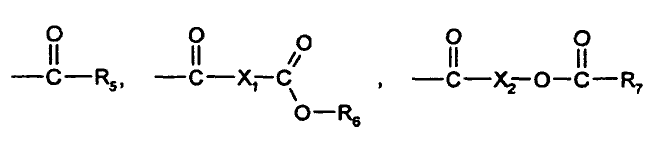 or 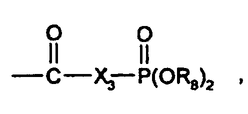 and
if n = 2,
R₁ is 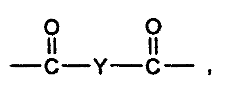
A is a direct bond, sulfur, 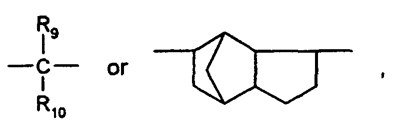
X₁ is a direct bond, C₁-C₂₄alkylene; C₂-C₂₄alkylene which is interrupted by oxygen, sulfur or 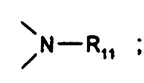 C₂-C₂₄alkenylene, C₂-C₂₀alkylidene, C₇-C₂₀phenylalkylidene, C₅-C₁₂cycloalkylene, C₅-C₁₂cycloalkenylene, C₇-C₈bicycloalkylene, unsubstituted or C₁-C₄alkyl-substituted phenylene, 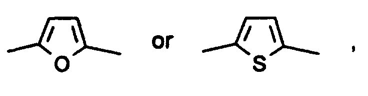
X₂ is C₁-C₂₄alkylene; C₂-C₂₄alkylene which is interrupted by oxygen, sulfur or 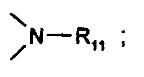
C₂-C₂₄alkenylene, C₂-C₂₀alkylidene, C₇-C₂₀phenylalkylidene, C₅-C₁₂cycloalkylene, C₅-C₁₂cycloalkenylene, C₇-C₈bicycloalkylene, unsubstituted or C₁-C₄alkyl-substituted phenylene, 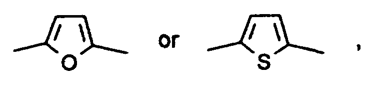
X₃ is C₁-C₂₄alkylene, C₂-C₂₀alkylidene, C₇-C₂₀phenylalkylidene or C₅-C₁₂cycloalkylene,
Y is a direct bond, C₁-C₂₄alkylene; C₂-C₂₄alkylene which is interrupted by oxygen, sulfur or 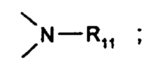 C₂-C₂₄alkenylene, C₂-C₂₀alkylidene, C₇-C₂₀phenylalkylidene, C₅-C₁₂cycloalkylene, C₅-C₁₂cycloalkenylene, C₇-C₈bicycloalkylene, unsubstituted or C₁-C₄alkyl-substituted phenylene, 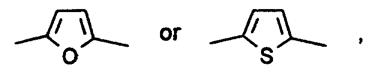
R₂ and R₃ are each independently of the other C₁-C₂₅-alkyl, unsubstituted or C₁-C₄alkyl-substituted C₅-C₁₂cycloalkyl; C₇-C₉phenylalkyl, unsubstituted or C₁-C₄alkyl-substituted phenyl;
R₄ is hydrogen or methyl,
R₅ is C₁-C₂₅alkyl; C₂-C₂₅alkyl which is interrupted by oxygen, sulfur or 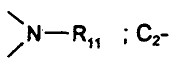
C₂₄alkenyl; C₈-C₃₀phenylalkenyl which is unsubstituted or substituted at the phenyl ring by halogen, C₁-C₄alkyl, C₁-C₄alkoxy or C₁-C₄alkylthio; unsubstituted or C₁-C₄alkyl-substituted C₅-C₁₂cycloalkyl; C₈-C₃₀phenylalkyl which is unsubstituted or substituted at the phenyl ring by halogen, C₁-C₄alkyl, C₁-C₄alkoxy or C₁-C₄alkylthio; phenyl which is unsubstituted or substituted by halogen, C₁-C₄alkyl, C₁-C₄alkoxy or C₁-C₄alkylthio; 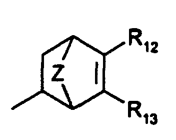 or 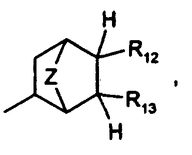
R₆ is C₁-C₂₅alkyl; C₂-C₂₅alkyl which is interrupted by oxygen, sulfur or 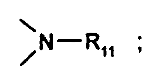 C₂-C₂₄alkenyl, unsubstituted or C₁-C₄alkyl-substituted C₅-C₁₂cycloalkyl; C₇-C₉phenylalkyl; phenyl which is unsubstituted or substituted by C₁-C₄alkyl, C₁-C₄alkoxy or C₁-C₄alkylthio;
R₇ is C₁-C₂₅alkyl; C₂-C₂₅alkyl which is interrupted by oxygen, sulfur or 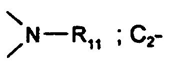
C₂₄alkenyl; C₈-C₃₀phenylalkenyl which is unsubstituted or substituted at the phenyl ring by halogen, C₁-C₄alkyl, C₁-C₄alkoxy or C₁-C₄alkylthio; unsubstituted or C₁-C₄alkyl-substituted C₅-C₁₂cycloalkyl; C₉-C₃₀phenylalkyl which is unsubstituted or substituted at the phenyl ring by halogen, C₁-C₄alkyl, C₁-C₄alkoxy or C₁-C₄alkylthio; phenyl which is unsubstituted or substituted by C₁-C₄alkyl, C₁-C₄alkoxy or C₁-C₄alkylthio;
R₈ is C₁-C₂₅alkyl,
R₉ and R₁₀ are each independently of the other hydrogen, CF₃, C₁-C₂₅alkyl or phenyl, or R₉ and R₁₀, together with the linking carbon atom, are a C₅-C₁₂cycloalkylidene ring which is unsubstituted or substituted by 1 to 3 C₁-C₄alkyl;
R₁₁ is hydrogen or C₁-C₁₈alkyl,
R₁₂ is hydrogen or C₁-C₄alkyl,
R₁₃ is hydrogen or C₁-C₄alkyl,
Z is oxygen, methylene, ethylidene or 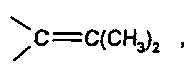 and
n is 1 or 2.

2. A powder coating composition according to claim 1, wherein component (b) is a compound of formula I, wherein
X₁ is a direct bond, C₁-C₁₈alkylene; C₂-C₁₈alkylene which is interrupted by oxygen, sulfur or 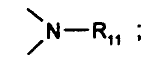 C₂-C₁₈alkenylene, C₂-C₁₂alkylidene, C₇-C₁₂phenylalkylidene, C₅-C₈cycloalkylene, C₅-C₈cycloalkenylene, phenylene, 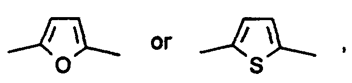
X₂ is C₁-C₁₈alkylene; C₂-C₁₈alkylene which is interrupted by oxygen, sulfur or 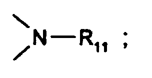
C₂-C₁₈alkenylene, C₂-C₁₂alkylidene, C₇-C₁₂phenylalkylidene, C₅-C₈cycloalkylene, C₅-C₈cycloalkenylene, phenylene, 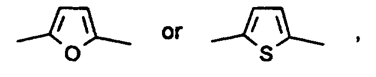
X₃ is C₁-C₁₈alkylene, C₂-C₁₂alkylidene, C₇-C₁₂phenylalkylidene or C₅-C₈cycloalkylene,
Y is a direct bond, C₁-C₁₈alkylene; C₂-C₁₈alkylene which is interrupted by oxygen, sulfur or 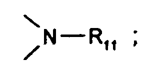 C₂-C₁₈alkenylene, C₂-C₁₂alkylidene, C₇-C₁₂phenylalkylidene, C₅-C₈cycloalkylene, C₅-C₈cycloalkenylene, phenylene, 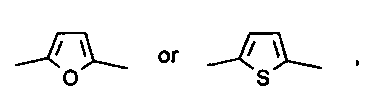
R₂ and R₃ are each independently of the other C₁-C₁₈alkyl, unsubstituted or C₁-C₄alkyl-substituted C₅-C₈Cycloalkyl; C₇-C₉phenylalkyl or phenyl,
R₄ is hydrogen or methyl,
R₅ is C₁-C₁₈alkyl; C₂-C₁₈alkyl which is interrupted by oxygen, sulfur or 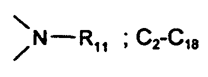 alkenyl; C₈-C₁₈phenylalkenyl which is unsubstituted or substituted at the phenyl ring by halogen, C₁-C₄alkyl, C₁-C₄alkoxy or C₁-C₄alkylthio; C₅-C₈cycloalkyl; C₈-C₁₈phenylalkyl which is unsubstituted or substituted at the phenyl ring by halogen, C₁-C₄alkyl, C₁-C₄alkoxy or C₁-C₄alkylthio; phenyl which is unsubstituted or substituted by halogen, C₁-C₄alkyl, C₁-C₄alkoxy or C₁-C₄alkylthio; 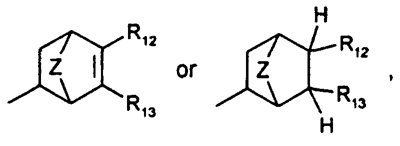
R₆ is C₁-C₁₈alkyl; C₂-C₁₈alkyl which is interrupted by oxygen, sulfur or 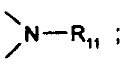 C₂-C₁₈alkenyl, C₅-C₈cycloalkyl, C₇-C₉phenylalkyl or phenyl,
R₇ is C₁-C₁₈alkyl; C₂-C₁₈alkyl which is interrupted by oxygen, sulfur or 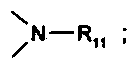 C₂-C₁₈alkenyl, C₈-C₁₈phenylalkenyl, C₅-C₈cycloalkyl, C₉-C₁₈phenylalkyl or phenyl,
R₈ is C₁-C₁₈alkyl,
R₉ and R₁₀ are each independently of the other hydrogen, C₁-C₁₈alkyl or phenyl, or R₉ and
R₁₀, together with the linking carbon atom, are a C₅-C₈cycloalkylidene ring;
R₁₁ is hydrogen or C₁-C₁₂alkyl,
R₁₂ is hydrogen or C₁-C₄alkyl,
R₁₃ is hydrogen or C₁-C₄alkyl,
Z is oxygen, methylene or ethylidene, and
n is 1 or 2.

3. A powder coating composition according to claim 1, wherein component (b) is a compound of formula I, wherein
X₁ is C₂-C₁₂alkylene; C₂-C₁₂alkylene which is interrupted by oxygen; C₂-C₁₂alkenylene or phenylene,
X₂ is C₁-C₁₂alkylene; C₂-C₁₂alkylene which is interrupted by oxygen; C₂-C₁₂alkenylene, C₂-C₈-alkylidene or phenylene,
X₃ is C₁-C₁₂alkylene,
Y is a direct bond, C₁-C₁₈alkylene; C₂-C₁₈alkylene which is interrupted by oxygen; C₂-C₁₂alkenylene, cyclohexylene or phenylene,
R₂ and R₃ are each independently of the other C₁-C₁₂alkyl, unsubstituted or methyl-substituted cyclohexyl; C₇-C₉phenylalkyl or phenyl,
R₄ is hydrogen or methyl,
R₅ is C₁-C₁₈alkyl; C₂-C₁₂alkyl is interrupted by oxygen; C₂-C₁₄alkenyl; C₈-C₁₄phenylalkenyl which is unsubstituted or substituted at the phenyl ring by chloro, methyl or methoxy; cyclohexyl; C₈-C₁₄phenylalkyl which is unsubstituted or substituted at the phenyl ring by chloro, methyl or methoxy; phenyl which is unsubstituted or substituted by chloro, methyl or methoxy; 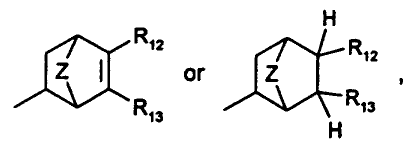
R₆ is C₁-C₁₂alkyl; C₂-C₁₂alkyl which is interrupted by oxygen; or C₅-C₈cycloalkyl,
R₇ is C₁-C₁₂alkyl; C₂-C₁₂alkyl which is interrupted by oxygen; or phenyl,
R₈ is C₁-C₁₂alkyl,
R₉ and R₁₀ are each independently of the other hydrogen, C₁-C₁₂alkyl or phenyl, or R₉ and
R₁₀, together with the linking carbon atom, are a cyclohexylidene ring;
R₁₂ is hydrogen or methyl,
R₁₃ is hydrogen or methyl,
Z is oxygen or methylene, and
n is 1 or 2.

4. A powder coating composition according to claim 1, wherein component (b) is a compound of formula I, wherein
X₁ is ethylene or C₂-C₃alkenylene,
X₂ is methylene or ethylidene,
X₃ is ethylene,
Y is a direct bond, C₁-C₁₂alkylene, C₂-C₄alkenylene, cyclohexylene or phenylene,
R₂ is C₁-C₅alkyl,
R₃ is C₁-C₅alkyl,
R₄ is hydrogen or methyl,
R₅ is C₁-C₁₂alkyl; C₄-C₈alkyl which is interrupted by oxygen; C₂-C₁₀alkenyl; C₈-C₁₀phenylalkenyl which is unsubstituted or substituted at the phenyl ring by methoxy; cyclohexyl, unsubstituted or chloro- or methoxy-substituted phenyl; 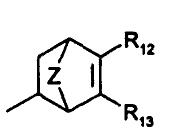 or 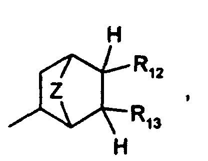
R₆ is C₁-C₈alkyl or cyclohexyl,
R₇ is C₁-C₄alkyl,
R₈ is C₁-C₄alkyl,
R₉ is hydrogen,
R₁₀ is hydrogen or methyl,
R₁₂ is hydrogen or methyl,
R₁₃ is hydrogen or methyl,
Z is oxygen or methylene, and
n is 1 or 2.

5. A powder coating composition according to claim 1, wherein component (b) is a compound of formula I, wherein
if n=1,
R₁ is 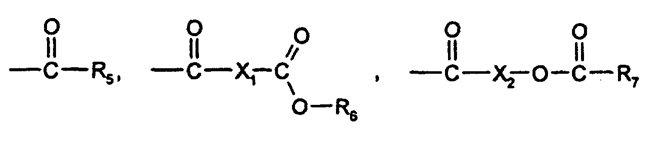 or 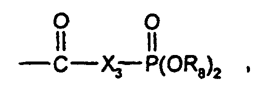 and
if n = 2,
R₁ is 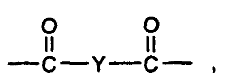
A is a direct bond or 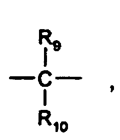
X₁ is ethylene or C₂-C₃alkenylene,
X₂ is methylene or ethylidene,
X₃ is ethylene,
Y is C₆-C₁₀alkylene or vinylene,
R₂ is tert-butyl,
R₃ is C₁-C₄alkyl,
R₄ is hydrogen,
R₅ is C₁-C₁₂alkyl; C₄-C₈alkyl which is interrupted by oxygen; C₂-C₄alkenyl, C₈-C₁₀phenylalkenyl or 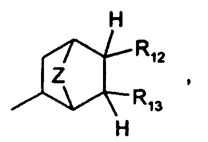
R₆ is C₁-C₄alkyl,
R₇ is C₁-C₄alkyl,
R₈ is C₁-C₄alkyl,
R₉ is hydrogen,
R₁₀ is hydrogen or methyl,
R₁₂ is hydrogen,
R₁₃ is hydrogen,
Z is methylene, and
n is 1 or 2.

6. A powder coating composition according to claim 1, wherein component (a) is an epoxy resin, a polyester-hydroxyalkylamide, a polyester-glycoluril, an epoxy-polyester resin, a polyester-triglycidylisocyanurate, a hydroxy-functional polyester-blocked polyisocyanate, a hydroxy-functional polyester-uretdione, an acrylate resin with hardener or a mixture of such resins.

7. A powder coating composition according to claim 1, which comprises additional additives besides the components (a) and (b).

8. A powder coating composition according to claim 7, wherein the additional additives are one or more than one component from the group consisting of pigments, dyes, fillers, flow control agents, degassing agents, charge control agents, optical brighteners, adhesion promoters, antioxidants, light stabilisers, curing calysts, anticorrosive agents or photoinitiators.

9. A powder coating composition according to claim 7, wherein the additional additives are phenolic antioxidants, sterically hindered amines, organic phosphites or phosphonites; thiosynergists and/or benzofuran-2-ones.

10. A powder coating composition according to claim 1, which comprises component (b) in an amount of 0.001 to 10 %, based on the weight of component (a).

11. A powder coating composition according to claim 1, wherein the powder coating composition is a heat-curable powder coating composition.

12. A powder coating composition according to claim 1, wherein the powder coating composition is a powder coating composition which is heat-curable in gas furnaces.

13. A powder coating composition which during curing is in contact with nitrogen oxides originating from the combustion gases and which comprises the components (a) and (b) as claimed in claim 1.

14. Use of the component (b) defined in claim 1 as stabiliser for reducing the discolouration of heat-curable powder coating compositions (stoving lacquers).

15. Use according to claim 14, which comprises carrying out the heat cure in a gas furnace.

16. A process for reducing the discolouration of heat-curable powder coating compositions, which comprises incorporating in or applying to these compositions at least one component (b) according to claim 1.

17. A process for curing powder coating compositions comprising the components (a) and (b) according to claim 1, which comprises carrying out the cure in a gas furnace.

## Revendications

1. Compositions de peinture en poudre renfermant
a) un liant filmogène organique, et
b) en tant que stabilisant, au moins un composé de formule (I) 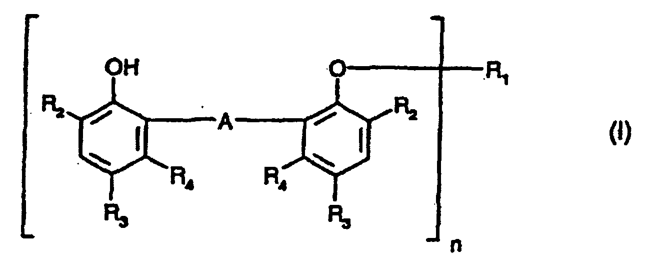
où, lorsque n vaut 1,
R₁ représente un atome d'hydrogène, 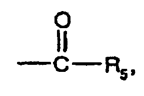 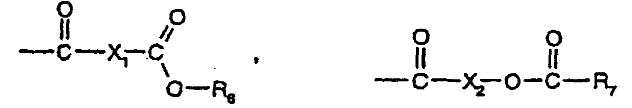
ou 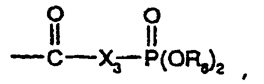 et lorsque n vaut 2,
R₁ représente 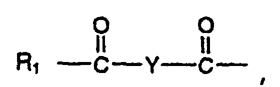
A représente une liaison directe, un atome de soufre, 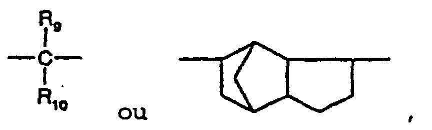
X₁ représente une liaison directe, des groupes alkylène en C₁-C₂₄, alkylène en C₂-C₂₄ interrompu par des atomes d'oxygène, de soufre ou un groupe 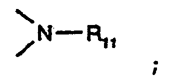 des groupes alcénylène en C₂-C₂₄, alkylidène en C₂-C₂₀, phénylalkylidène en C₇-C₂₀, cycloalkylène en C₅-C₁₂, cycloalcénylène en C₅-C₁₂, bicycloalkylène en C₇-C₈, phénylène non substitué ou substitué par un substituant alkyle en C₁-C₄, 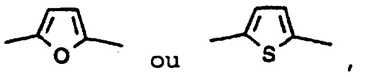
X₂ représente un groupe alkylène en C₁-C₂₄, un groupe alkylène en C₂-C₂₄ interrompu par des atomes d'oxygène, de soufre ou un groupe 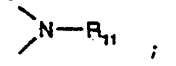 des groupes alcénylène en C₂-C₂₄, alkylidène en C₂-C₂₀, phénylalkylidène en C₇-C₂₀, cycloalkylène en C₅-C₁₂, cycloalcénylène en C₅-C₁₂, bicycloalkylène en C₇-C₈, phénylène non substitué ou substitué par un substituant alkyle en C₁-C₄, 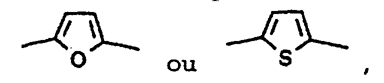
X₃ représente des groupes alkylène en C₁-C₂₄, alkylidène en C₂-C₂₀, phénylalkylidène en C₇-C₂₀ ou cycloalkylène en C₅-C₁₂,
Y représente une liaison directe, des groupes alkylène en C₁-C₂₄, alkylène en C₂-C₂₄ interrompu par des atomes d'oxygène, de soufre ou un groupe 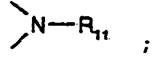 des groupes alcénylène en C₂-C₂₄, alkylidène en C₂-C₂₀, phénylalkylidène en C₇-C₂₀, cycloalkylène en C₅-C₁₂, cycloalcénylène en C₅-C₁₂, bicycloalkylène en C₇-C₈, phénylène non substitué ou substitué par un substituant alkyle en C₁-C₄, 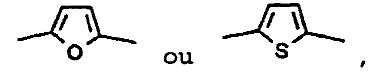
R₂ et R₃ représentent indépendamment l'un de l'autre des groupes alkyle en C₁-C₂₅, cycloalkyle en C₅-C₁₂ non substitué ou substitué par un substituant alkyle en C₁-C₄ ; phénylalkyle en C₇-C₉, phényle non substitué ou substitué par un substituant alkyle en C₁-C₄ ;
R₄ représente un atome d'hydrogène ou un groupe méthyle,
R₅ représente des groupes alkyle en C₁-C₂₅, alkyle en C₂-C₂₅ interrompu par des atomes d'oxygène, de soufre ou un groupe 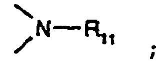 alcényle en C₂-C₂₄, phénylalcényle en C₈-C₃₀ non substitué ou substitué sur le cycle phényle par des substituants halogène, alkyle en C₁-C₄, alkoxy en C₁-C₄ ou (alkyl en C₁-C₄)thio ; cycloalkyle en C₅-C₁₂ non substitué ou substitué par un substituant alkyle en C₁-C₄ ; phénylalkyle en C₈-C₃₀ non substitué ou substitué sur le cycle phényle par des substituants halogène, alkyle en C₁-C₄, alkoxy en C₁-C₄ ou (alkyl en C₁-C₄)thio ; phényle non substitué ou substitué par des substituants halogène, alkyle en C₁-C₄, alkoxy en C₁-C₄ ou (alkyl en C₁-C₄)thio ; 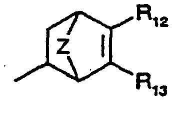 ou 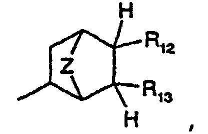
R₆ représente des groupes alkyle en C₁-C₂₅, alkyle en C₂-C₂₅ interrompu par des atomes d'oxygène, de soufre ou un groupe 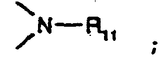 alcényle en C₂-C₂₄, cycloalkyle en C₅-C₁₂ non substitué ou substitué par un substituant alkyle en C₁-C₄ ; phénylalkyle en C₇-C₉, phényle non substitué ou substitué par des substituants alkyle en C₁-C₄, alkoxy en C₁-C₄ ou (alkyl en C₁-C₄)thio ;
R₇ représente des groupes alkyle en C₁-C₂₅, alkyle en C₂-C₂₅ interrompu par des atomes d'oxygène, de soufre ou un groupe 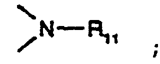 alcényle en C₂-C_{24,} phénylalcényle en C₈-C₃₀ non substitué ou substitué sur le cycle phényle par des substituants halogène, alkyle en C₁-C₄, alkoxy en C₁-C₄ ou (alkyl en C₁-C₄)thio ; cycloalkyle en C₅-C₁₂ non substitué ou substitué par un substituant alkyle en C₁-C₄ ; phénylalkyle en C₉-C₃₀ non substitué ou substitué sur le cycle phényle par des substituants halogène, alkyle en C₁-C₄, alkoxy en C₁-C₄ ou (alkyl en C₁-C₄)thio ; phényle non substitué ou substitué par dès substituants alkyle en C₁-C₄, alkoxy en C₁-C₄ ou (alkyl en C₁-C₄)-thio ;
R₈ représente un groupe alkyle en C₁-C₂₅ ;
R₉ et R₁₀ représentent, indépendamment l'un de l'autre, un atome d'hydrogène, des groupes CF₃, alkyle en C₁-C₂₅ ou phényle, ou R₉ et R₁₀ forment conjointement avec l'atome de carbone auquel ils sont liés un cycle cycloalkylidène en C₅-C₁₂ non substitué ou substitué par 1 à 3 substituants alkyle en C₁-C₄ ;
R₁₁ représente un atome d'hydrogène ou un groupe alkyle en C₁-C₁₈,
R₁₂ représente un atome d'hydrogène ou un groupe alkyle en C₁-C₄,
R₁₃ représente un atome d'hydrogène ou un groupe alkyle en C₁-C₄,
Z représente un atome d'oxygène, un groupe méthylène, éthylidène ou 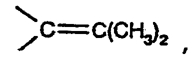 et
n vaut 1 ou 2.

2. Composition de peinture en poudre selon la revendication 1, où le composant (b) représente un composé de formule I, où
X₁ représente une liaison directe, des groupes alkylène en C₁-C₁₈, alkylène en C₂-C₁₈ interrompu par des atomes d'oxygène, de soufre ou un groupe 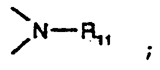 des groupes alcénylène en C₂-C₁₈, alkylidène en C₂-C₁₂, phénylalkylidène en C₇-C₁₂, cycloalkylène en C₅-C₈, cycloalcénylène en C₅-C₈, phénylène, 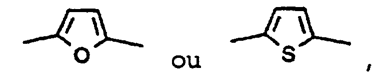
X₂ représente des groupes alkylène en C₁-C₁₈, alkylène en C₂-C₁₈ interrompu par des atomes d'oxygène, de soufre ou un groupe 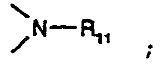 des groupes alcénylène en C₂-C₁₈, alkylidène en C₂-C₁₂, phénylalkylidène en C₇-C₁₂, cycloalkylène en C₅-C₈, cycloalcénylène en C₅-C₈, phénylène, 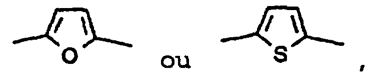
X₃ représente des groupes alkyiène en C₁-C₁₈, alkylidène en C₂-C₁₂, phénylalkylidène en C₇-C₁₂ ou cycloalkylène en C₅-C₈,
Y représente une liaison directe, des groupes alkylène en C₁-C₁₈, alkylène en C₂-C₁₈ interrompu par des atomes d'oxygène de soufre ou un groune 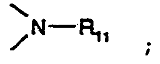 des groupes alcénylène en C₂-C₁₈, alkylidène en C₂-C₁₂, phénylalkylidène en C₇-C₁₂, cycloalkylène en C₅-C₈, cycloalcénylène en C₅-C₈, phénylène, 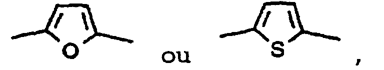
R₂ et R₃ représentent indépendamment l'un de l'autre des groupes alkyle en C₁-C₁₈, cycloalkyle en C₅-C₈ non substitué ou substitué par un substituant alkyle en C₁-C₄ ; phénylalkyle en C₇-C₉ ou phényle ;
R₄ représente un atome d'hydrogène ou un groupe méthyle,
R₅ représente des groupes alkyle en C₁-C₁₈, alkyle en C₂-C₁₈ interrompu par des atomes d'oxygène, de soufre ou un groupe 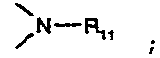 alcényle en C₂-C₁₈, phénylalcényle en C₈-C₁₈ non substitué ou substitué sur le cycle phényle par des substituants halogène, alkyle en C₁-C₄, alkoxy en C₁-C₄ ou (alkyl en C₁-C₄)thio ; cycloalkyle en C₅-C₈, phénylalkyle en C₈-C₁₈ non substitué ou substitué sur le cycle phényle par des substituants halogène, alkyle en C₁-C₄, alkoxy en C₁-C₄ ou (alkyl en C₁-C₄)thio ; phényle non substitué ou substitué par des substituants halogène, alkyle en C₁-C₄, alkoxy en C₁-C₄ ou (alkyl en C₁-C₄)thio ; 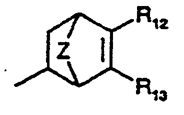 ou 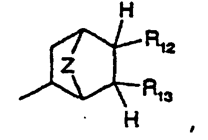
R₆ représente des groupes alkyle en C₁-C₁₈, alkyle en C₂-C₁₈ interrompu par des atomes d'oxygène, de soufre ou un groupe 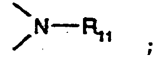 alcényle en C₂-C₁₈, cycloalkyle en C₅-C₈, phénylalkyle en C₇-C₉ ou phényle ;
R₇ représente des groupes alkyle en C₁-C₁₈, alkyle en C₂-C₁₈ interrompu par des atomes d'oxygène, de soufre ou un groupe 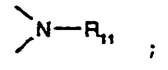 alcényle en C₂-C₁₈, phénylalcényle en C₈-C₁₈ ; cycloalkyle en C₅-C₈ ; phénylalkyle en C₉-C₁₈ ou phényle ;
R₈ représente un groupe alkyle en C₁-C₁₈ ;
R₉ et R₁₀ représentent, indépendamment l'un de l'autre, un atome d'hydrogène, des groupes, alkyle en C₁-C₁₈ ou phényle, ou R₉ et R₁₀ forment conjointement avec l'atome de carbone auquel ils sont liés un cycle cycloalkylidène en C₅-C₈ ;
R₁₁ représente un atome d'hydrogène ou un groupe alkyle en C₁-C₁₂,
R₁₂ représente un atome d'hydrogène ou un groupe alkyle en C₁-C₄,
R₁₃ représente un atome d'hydrogène ou un groupe alkyle en C₁-C₄,
Z représente un atome d'oxygène, un groupe méthylène ou éthylidène, et
n vaut 1 ou 2.

3. Composition de peinture en poudre selon la revendication 1, où le composant (b) représente un composé de formule I où
X₁ représente des groupes alkylène en C₂-C₁₂, alkylène en C₂-C₁₂ interrompu par un atome d'oxygène ; alcénylène en C₂-C₁₂ ou phénylène,
X₂ représente un groupe alkylène en C₁-C₁₂, un groupe alkylène en C₂-C₁₂ interrompu par un atome d'oxygène ; des groupes alcénylène en C₂-C₁₂, alkylidène en C₂-C₈ ou phénylène,
X₃ représente un groupe alkylène en C₁-C₁₂,
Y représente une liaison directe, des groupes alkylène en C₁-C₁₈, alkylène en C₂-C₁₈ interrompu par un atome d'oxygène, alcénylène en C₂-C₁₂, cyclohexylène ou phénylène,
R₂ et R₃ représentent indépendamment l'un de l'autre des groupes alkyle en C₁-C₁₂, cyclohexyle non substitué ou substitué par un substituant méthyle ; phénylalkyle en C₇-C₉ ou phényle ;
R₄ représente un atome d'hydrogène ou un groupe méthyle,
R₅ représente des groupes alkyle en C₁-C₁₈, alkyle en C₂-C₁₂ interrompu par un atome d'oxygène ; alcényle en C₂-C₁₄, phénylalcényle en C₈-C₁₄ non substitué ou substitué sur le cycle phényle par des substituants chlore, méthyle ou méthoxy ; cyclohexyle, phénylalkyle en C₈-C₁₄ non substitué ou substitué sur le cycle phényle par des substituants chlore, méthyle ou méthoxy ; phényle non substitué ou substitué par des substituants chlore, méthyle ou méthoxy ; 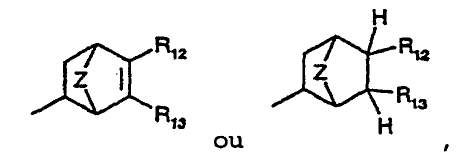
R₆ représente des groupes alkyle en C₁-C₁₂, alkyle en C₂-C₁₂ interrompu par un atome d'oxygène ; ou cycloalkyle en C₅-C₈ ;
R₇ représente des groupes alkyle en C₁-C₁₂, alkyle en C₂-C₁₂ interrompu par un atome d'oxygène ; ou phényle ;
R₈ représente un groupe alkyle en C₁-C₁₂ ;
R₉ et R₁₀ représentent, indépendamment l'un de l'autre, un atome d'hydrogène, des groupes alkyle en C₁-C₁₂ ou phényle, ou R₉ et R₁₀ forment conjointement avec l'atome de carbone auquel ils sont liés un cycle cyclohexylidène ;
R₁₂ représente un atome d'hydrogène ou un groupe méthyle,
R₁₃ représente un atome d'hydrogène ou un groupe méthyle,
Z représente un atome d'oxygène ou un groupe méthylène, et
n vaut 1 ou 2.

4. Composition de peinture en poudre selon la revendication 1, où le composant (b) représente un composé de formule I où
X₁ représente des groupes éthylène ou alcénylène en C₂-C₃,
X₂ représente un groupe méthylène ou éthylidène,
X₃ représente un groupe éthylène,
Y un une liaison directe, groupe alkylène en C₁-C₁₂, alcénylène en C₂-C₄, cyclohexylène ou phénylène,
R₂ représente un groupe alkyle en C₁-C₅,
R₃ représente un groupe alkyle en C₁-C₅,
R₄ représente un atome d'hydrogène ou un groupe méthyle,
R₅ représente des groupes alkyle en C₁-C₁₂, alkyle en C₄-C₈ interrompu par un atome d'oxygène ; alcényle en C₂-C₁₀, phénylalcényle en C₈-C₁₀ non substitué ou substitué sur le cycle phényle par un substituant méthoxy ; cyclohexyle, phényle non substitué ou substitué par des substituants chlore ou méthoxy ; 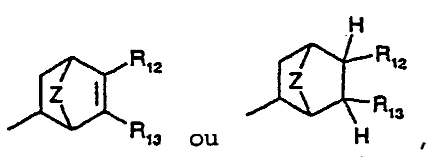
R₆ représente des groupes alkyle en C₁-C₈ ou cyclohexyle ;
R₇ représente des groupes alkyle en C₁-C₄ ;
R₈ représente des groupes alkyle en C₁-C₄ ;
R₉ représente un atome d'hydrogène,
R₁₀ représente un atome d'hydrogène ou un groupe méthyle,
R₁₂ représente un atome d'hydrogène ou un groupe méthyle,
R₁₃ représente un atome d'hydrogène ou un groupe méthyle,
Z représente un atome d'oxygène ou un groupe méthylène, et
n vaut 1 ou 2.

5. Composition de peinture en poudre selon la revendication 1, où le composant (b) représente un composé de formule I où lorsque n vaut 1
R₁ représente 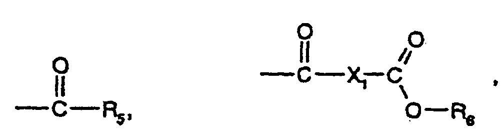 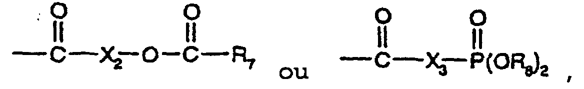 et lorsque n vaut 2,
R₁ représente 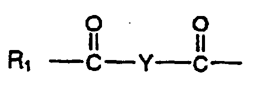
A représente une liaison directe ou 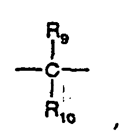
X₁ représente des groupes éthylène ou alcénylène en C₂-C₃,
X₂ représente un groupe méthylène ou éthylidène,
X₃ représente un groupe éthylène,
Y représente groupe alkylène en C₆-C₁₀ ou vinylène,
R₂ représente un groupe tert-butyle,
R₃ représente un groupe alkyle en C₁-C₄,
R₄ représente un atome d'hydrogène,
R₅ représente des groupes alkyle en C₁-C₁₂, alkyle en C₄-C₈ interrompu par un atome d'oxygène ; alcényle en C₂-C₄, phénylalcényle en C₈-C₁₀ ou 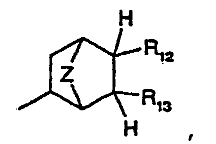
R₆ représente un groupe alkyle en C₁-C₄ ;
R₇ représente un groupe alkyle en C₁-C₄ ;
R₈ représente un groupe alkyle en C₁-C₄ ;
R₉ représente un atome d'hydrogène,
R₁₀ représente un atome d'hydrogène ou un groupe méthyle,
R₁₂ représente un atome d'hydrogène,
R₁₃ représente un atome d'hydrogène,
Z représente un groupe méthylène, et
n vaut 1 ou 2.

6. Composition de peinture en poudre selon la revendication 1, où le composant (a) est une résine époxyde, un polyester-hydroxyalkylamide, un polyester-glycolurile, une résine époxyde-polyester, un polyester-isocyanurate de triglycidyle, un polyester à fonctionnalité hydroxy-polyisocyanate bloqué, un polyester à fonctionnalité hydroxy-urétdione, une résine acrylique avec durcisseur ou un mélnage de telles résines.

7. Composition de peinture en poudre selon la revendication 1, renfermant en plus des composants (a) et (b) d'autres additifs.

8. Composition de peinture en poudre selon la revendication 7, renfermant en plus en tant que d'autres additifs un ou plusieurs composants pris dans le groupe comprenant des pigments, des colorants, des charges, des agents nivelants, des agents de dégazage, des agents de contrôle de charge, des azurants optiques, des agents améliorant l'adhérence, des antioxydants, des photostabilisants, des catalyseurs de durcissement, des agents de protection contre la corrosion ou des photoamorceurs.

9. Composition de peinture en poudre selon la revendication 7, renfermant en tant que d'autres additifs des antioxydants phénoliques, des amines à encombrement stérique, des phosphites ou phosphonites organiques ; des agents de thiosynergie et/ou benzofuran-2-ones.

10. Composition de peinture en poudre selon la revendication 1, où le composant (b) est présent dans une quantité de 0,001 à 10 % en poids par rapport au poids du composant (a).

11. Composition de peinture en poudre selon la revendication 1, où la composition de peinture en poudre représente une composition de peinture en poudre thermodurcissable.

12. Composition de peinture en poudre selon la revendication 1, où la composition de peinture en poudre est une composition de peinture en poudre durcissable dans des fours à gaz.

13. Composition de peinture en poudre, en contact avec des oxydes d'azote provenant des gaz de combustion au cours du durcissement, renfermant les composants (a) et (b) selon la revendication 1.

14. Utilisation du composant (b) défini selon la revendication 1 en tant que stabilisant pour la diminution de la décoloration de compositions de peinture en poudre thermodurcissables (vernis à cuire au four).

15. Utilisation selon la revendication 14, où le durcissement thermique est mis en oeuvre dans un four à gaz.

16. Procédé pour la diminution de la décoloration de compositions de peinture en poudre thermodurcissables, **caractérisé en ce qu'**on leur incorpore ou on applique sur celles-ci au moins un composant (b) selon la revendication 1.

17. Procédé pour le durcissement de compositions de peinture en poudre renfermant les composants (a) et (b) selon la revendication 1, **caractérisé en ce qu'**on met en oeuvre le durcissement dans un four à gaz.
